(19) 

Europäisches Patentamt

European Patent Office

Office européen des brevets

(11) **EP 4 593 491 A1**

(12) **EUROPEAN PATENT APPLICATION**
published in accordance with Art. 153(4) EPC

(43) Date of publication:
**30.07.2025 Bulletin 2025/31**

(21) Application number: **23870517.2**

(22) Date of filing: **20.09.2023**

(51) International Patent Classification (IPC):
***H04W 72/0446*** (2023.01)  ***H04W 72/1268*** (2023.01)

(52) Cooperative Patent Classification (CPC):
**H04W 72/0446; H04W 72/1268; H04W 72/23**

(86) International application number:
**PCT/CN2023/119990**

(87) International publication number:
**WO 2024/067285 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211215501
07.04.2023 CN 202310385322**

(71) Applicant: **Huawei Technologies Co., Ltd.
Shenzhen, Guangdong 518129 (CN)**

(72) Inventors:
• **LU, Shaozhong**
**Shenzhen, Guangdong 518129 (CN)**
• **GUO, Zhiheng**
**Shenzhen, Guangdong 518129 (CN)**
• **SONG, Xinghua**
**Shenzhen, Guangdong 518129 (CN)**
• **HOU, Hailong**
**Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **UPLINK TRANSMISSION METHOD AND COMMUNICATION APPARATUS**

(57) An uplink transmission method and a communication apparatus are provided. In this method, based on an existing available-slot counting method, a terminal device and a network device determine, by using a newly added available-slot counting determining condition, whether a currently traversed time unit is available to transmit a multi-slot (Multi-slot) PUSCH/PUCCH. If the currently traversed time unit is the same as a first time unit type, the currently traversed time unit is available to transmit the multi-slot PUSCH/PUCCH. Otherwise, the currently traversed time unit is not available to transmit the multi-slot PUSCH/PUCCH. The first time unit type is an uplink time unit or an SBFD time unit. In this method, a specific implementation of a currently proposed solution for transmitting a multi-slot PUSCH/PUCCH on SBFD is specified.

FIG. 6

## Description

This application claims priorities to Chinese Patent Application No. 202211215501.2, filed with the China National Intellectual Property Administration on September 30, 2022 and entitled "UPLINK TRANSMISSION METHOD AND COMMUNICATION APPARATUS", and to Chinese Patent Application No. 202310385322.1, filed with the China National Intellectual Property Administration on April 7, 2023 and entitled "UPLINK TRANSMISSION METHOD AND COMMUNICATION APPARATUS", both of which are incorporated herein by reference in their entireties.

## TECHNICAL FIELD

Embodiments of this application relate to the communication field, and more specifically, to an uplink transmission method and a communication apparatus.

## BACKGROUND

With rapid development of a 5th generation mobile communication technology, namely, new radio (new radio, NR), various communication requirements emerge. To meet requirements of emerging services, a subband non-overlapping full duplex (subband non-overlapping full duplex, SBFD) solution is proposed to improve uplink coverage of a time division duplex (time division duplex, TDD) system. Subband non-overlapping full duplex means that in the TDD system, a network device can perform both receiving and sending in one slot or one orthogonal frequency division multiplexing (orthogonal frequency division multiplexing, OFDM) symbol by using different subbands for uplink transmission and downlink transmission.

Currently, a solution for transmitting a multi-slot (Multi-slot) uplink shared channel (physical uplink shared channel, PUSCH) or a multi-slot uplink control channel (physical uplink control channel, PUCCH) on SBFD is proposed. The multi-slot PUSCH/PUCCH can be transmitted only in an SBFD slot or an uplink slot, and cannot be simultaneously transmitted in the SBFD slot and the uplink slot. However, a time domain resource that is determined based on an existing method and that is for transmitting the multi-slot PUSCH/PUCCH conflicts with the transmission solution, in other words, may result in a failure to send the multi-slot PUSCH/PUCCH in the SBFD slot. Therefore, currently, how to implement the proposed solution for transmitting a multi-slot PUSCH/-PUCCH on SBFD becomes a problem to be urgently resolved.

## SUMMARY

Embodiments of this application provide an uplink transmission method and a communication apparatus, to specify a specific implementation of a proposed solution for transmitting a multi-slot PUSCH/PUCCH on SBFD.

According to a first aspect, an uplink transmission method is provided. The method may be performed by a terminal device, or may be performed by a component (for example, a chip or a circuit) of a terminal device. This is not limited herein. For ease of description, the following uses an example in which the method is performed by a terminal device for description.

The method may include: The terminal device receives first signaling from a network device, where the first signaling indicates the terminal device to send a first signal on a first time unit set, the first signaling carries indication information of N1 and K1, N1 is a quantity of time units in the first time unit set, N1 is an integer greater than 1, K1 indicates a first reference time unit, and the first signal is carried on a first physical uplink shared channel PUSCH or a first physical uplink control channel PUCCH. The terminal device determines the first time unit set, where the first time unit set is a set of N1 time units, starting from the first reference time unit, that are closest to the first reference time unit and that do not meet a first condition, and the first condition includes: A time unit type of a first time unit is different from a first time unit type, the first time unit type is an uplink time unit or a subband non-overlapping full duplex SBFD time unit, and the first time unit is a time unit traversed from the first reference time unit. The terminal device sends the first signal to the network device on the first time unit set.

In the foregoing technical solution, the first condition is added, so that a solution for transmitting a multi-slot PUSCH/PUCCH on SBFD can be implemented. To be specific, the multi-slot PUSCH/PUCCH can be transmitted only in an SBFD slot or an uplink slot, and cannot be simultaneously transmitted in the SBFD slot and the uplink slot. When the network device indicates a non-transparent subband to the terminal device, that is, when the terminal device is visible to the subband, if the first time unit is an uplink time unit, the terminal device may further transmit the multi-slot PUSCH/PUCCH on an uplink subband of a downlink symbol (namely, an SBFD time unit), to improve resource utilization.

According to a second aspect, an uplink transmission method is provided. The method may be performed by a terminal device, or may be performed by a component (for example, a chip or a circuit) of a terminal device. This is not limited herein. For ease of description, the following uses an example in which the method is performed by a terminal device for description.

The method may include: The terminal device receives first signaling from a network device, where the first signaling indicates the terminal device to send a first signal on a first time unit set, the first signaling carries indication information of N1 and K1, N1 is a quantity of reference time units, N1 is an integer greater than 1, K1 indicates a first reference time unit, and the first signal is carried on a first physical uplink shared channel PUSCH or a first physical uplink control channel PUCCH. The terminal device determines the first time unit set, where the first time unit set is a set of time units in a third time unit set other than a time unit that meets a second condition, the third time unit set includes N1 consecutive time units including the first reference time unit and a subsequent time unit, and the second condition includes: A time unit type of a third time unit is different from a first time unit type, the first time unit type is an uplink time unit or a subband non-overlapping full duplex SBFD time unit, and the third time unit is a time unit in the third time unit set. The terminal device sends the first signal to the network device on the first time unit set.

In the foregoing technical solution, the second condition is added, so that a solution for transmitting a multi-slot PUSCH/PUCCH on SBFD can be implemented. To be specific, the multi-slot PUSCH/PUCCH can be transmitted only in an SBFD slot or an uplink slot, and cannot be simultaneously transmitted in the SBFD slot and the uplink slot. When the network device indicates a non-transparent subband to the terminal device, that is, when the terminal device is visible to the subband, if the first time unit is an uplink time unit, the terminal device may further transmit the multi-slot PUSCH/PUCCH on an uplink subband of a downlink symbol (namely, an SBFD time unit), to improve resource utilization.

In some implementations of the first aspect or the second aspect, when a time unit type of the first reference time unit is the uplink time unit or the subband non-overlapping full duplex SBFD time unit, the first time unit type is the time unit type of the first reference time unit.

In some implementations of the first aspect or the second aspect, when a time unit type of the first reference time unit is a downlink time unit, the first time unit type is a time unit type of a second time unit, and the second time unit is a 1st time unit that is after the first reference time unit and whose time unit type is not the downlink time unit.

In some implementations of the first aspect or the second aspect, the first time unit type is indicated by the first signaling.

In some implementations of the first aspect or the second aspect, the first signaling further includes a first frequency range, and the first frequency range is a frequency range for sending the first signal. If the first frequency range is not completely included in a frequency range of an uplink subband in the SBFD time unit, the first time unit type is the uplink time unit; otherwise, the first time unit type is the SBFD time unit.

For example, the SBFD time unit herein is a 1st time unit after the first reference time unit or any SBFD time unit.

In some implementations of the first aspect or the second aspect, the method further includes: The terminal device receives second signaling from the network device, where the second signaling indicates the terminal device to send a second signal on a second time unit set, the second signal is carried on a second PUSCH or a second PUCCH, a time unit type of a time unit in the second time unit set is different from a time unit type of a time unit in the first time unit set, and a start time unit of the second time unit set is after a start time unit of the first time unit set and before an end time unit of the first time unit set; the terminal device determines the second time unit set. The terminal device sends the second signal to the network device on the second time unit set.

In the foregoing technical solution, the start time unit of the second time unit is located in the first time unit, the first signal may be transmitted in the first time unit, and the second signal may be simultaneously transmitted in the second time unit. The second signal does not need to be transmitted after the first signal is transmitted. Therefore, out-of-order scheduling is implemented, and a waiting time for signal transmission is reduced.

According to a third aspect, an uplink transmission method is provided. The method may be performed by a network device, or may be performed by a component (for example, a chip or a circuit) of a network device. This is not limited herein. For ease of description, the following uses an example in which the method is performed by a network device for description.

The method may include: The network device sends first signaling to a terminal device, where the first signaling indicates the terminal device to send a first signal on a first time unit set, the first signaling carries indication information of N1 and K1, N1 is a quantity of time units in the first time unit set, N1 is an integer greater than 1, K1 indicates a first reference time unit, and the first signal is carried on a first physical uplink shared channel PUSCH or a first physical uplink control channel PUCCH. The network device determines the first time unit set, where the first time unit set is a set of N1 time units, starting from the first reference time unit, that are closest to the first reference time unit and that do not meet a first condition, and the first condition includes: A time unit type of a first time unit is different from a first time unit type, the first time unit type is an uplink time unit or a subband non-overlapping full duplex SBFD time unit, and the first time unit is a time unit traversed from the first reference time unit. The network device receives the first signal from the terminal device on the first time unit set.

According to a fourth aspect, an uplink transmission method is provided. The method may be performed by a network device, or may be performed by a component (for example, a chip or a circuit) of a network device. This is not limited herein. For ease of description, the following uses an example in which the method is performed by a network device for description.

The method may include: The network device sends first signaling to a terminal device, where the first signaling indicates the terminal device to send a first signal on a first time unit set, the first signaling carries indication information of N1 and K1, N1 is a quantity of reference time units, N1 is an integer greater than 1, K1 indicates a first reference time unit, and the first signal is carried on a first physical uplink shared channel PUSCH or a first physical uplink control channel PUCCH. The network device determines the first time unit set, where the first time unit set is a set of time units in a third time unit set other than a time unit that meets a second condition, the third time unit set includes N1 consecutive time units including the first reference time unit and a subsequent time unit, and the second condition includes: A time unit type of a third time unit is different from a first time unit type, the first time unit type is an uplink time unit or a subband non-overlapping full duplex SBFD time unit, and the third time unit is a time unit in the third time unit set. The network device receives the first signal from the terminal device on the first time unit set.

In some implementations of the third aspect or the fourth aspect, when a time unit type of the first reference time unit is the uplink time unit or the subband non-overlapping full duplex SBFD time unit, the first time unit type is the time unit type of the first reference time unit.

In some implementations of the third aspect or the fourth aspect, when a time unit type of the first reference time unit is a downlink time unit, the first time unit type is a time unit type of a second time unit, and the second time unit is a 1$^{st}$ time unit that is after the first reference time unit and whose time unit type is not the downlink time unit.

In some implementations of the third aspect or the fourth aspect, the first time unit type is indicated by the first signaling.

In some implementations of the third aspect or the fourth aspect, the first signaling further includes a first frequency range, and the first frequency range is a frequency range for sending the first signal. If the first frequency range is not completely included in a frequency range of an uplink subband in the SBFD time unit, the first time unit type is the uplink time unit; otherwise, the first time unit type is the SBFD time unit.

In some implementations of the third aspect or the fourth aspect, the method further includes: The network device sends second signaling to the terminal device, where the second signaling indicates the terminal device to send a second signal on a second time unit set, the second signal is carried on a second PUSCH or a second PUCCH, a time unit type of a time unit in the second time unit set is different from a time unit type of a time unit in the first time unit set, and a start time unit of the second time unit set is after a start time unit of the first time unit set and before an end time unit of the first time unit set. The network device determines a second time unit set. The network device receives the second signal from the terminal device on the second time unit set.

For beneficial effect of the third aspect, refer to the descriptions of the first aspect. For beneficial effect of the fourth aspect, refer to the descriptions of the second aspect. Details are not described herein again.

According to a fifth aspect, an uplink transmission method is provided. The method may be performed by a terminal device, or may be performed by a component (for example, a chip or a circuit) of a terminal device. This is not limited herein. For ease of description, the following uses an example in which the method is performed by a terminal device for description.

The method may include: The terminal device receives first signaling from a network device, where the first signaling indicates the terminal device to send a first signal on a first time unit set, the first signaling carries indication information of N1, K1, and a first frequency range, N1 is a quantity of time units in the first time unit set, N1 is an integer greater than 1, K1 indicates a first reference time unit, the first frequency range is a frequency range for sending the first signal, and the first signal is carried on a first physical uplink shared channel PUSCH or a first physical uplink control channel PUCCH. The terminal device determines the first time unit set, where the first time unit set is a set of N1 time units, starting from the first reference time unit, that are closest to the first reference time unit and that include an uplink time unit and a subband non-overlapping full duplex SBFD time unit that does not meet a third condition, and the third condition includes: The first frequency range includes a frequency out of a second frequency range, the second frequency range is a frequency range of an uplink subband in a first SBFD time unit, and the first SBFD time unit is an SBFD time unit traversed from the first reference time unit. The terminal device sends the first signal to the network device on the first time unit set.

In the foregoing technical solution, when the network device indicates a non-transparent subband to the terminal device, that is, when the terminal device is visible to the subband, all symbols in the SBFD time unit are downlink symbols. In this method, the first signal may be transmitted by using the SBFD time unit that meets the third condition, to improve resource utilization of the downlink symbol.

According to a sixth aspect, an uplink transmission method is provided. The method may be performed by a network device, or may be performed by a component (for example, a chip or a circuit) of a network device. This is not limited herein. For ease of description, the following uses an example in which the method is performed by a network device for description.

The method may include: The network device sends first signaling to a terminal device, where the first signaling indicates the terminal device to send a first signal on a first time unit set, the first signaling carries indication information of N1, K1, and a first frequency range, N1 is a quantity of time units in the first time unit set, N1 is an integer greater than 1, K1 indicates a first reference time unit, the first frequency range is a frequency range for sending the first signal, and the first signal is carried on a first physical uplink shared channel PUSCH or a first physical uplink control channel PUCCH. The network device determines the first time unit set, where the first time unit set is a set of N1 time units, starting from the first reference time unit, that are closest to the first reference time unit and that include an uplink time unit and a subband non-overlapping full duplex SBFD time unit that does not meet a third condition, and the third condition includes: The first frequency range includes a frequency out of a second frequency range, the second frequency range is a frequency range of an uplink subband in a first SBFD time unit, and the first SBFD time unit is an SBFD time unit traversed from the first reference time unit. The network device receives the first signal from the terminal device on the first time unit set.

For beneficial effect of the sixth aspect, refer to the descriptions of the fifth aspect. Details are not described herein again.

According to a seventh aspect, an uplink transmission method is provided. The method may be performed by a terminal device, or may be performed by a component (for example, a chip or a circuit) of a terminal device. This is not limited herein. For ease of description, the following uses an example in which the method is performed by a terminal device for description.

The method may include: The terminal device receives first signaling from a network device, where the first signaling indicates the terminal device to send a first signal on a first time unit set, the first signaling carries indication information of N1, K1, and a first frequency range, N1 is a quantity of reference time units, N1 is an integer greater than 1, K1 indicates a first reference time unit, the first frequency range is a frequency range for sending the first signal, and the first signal is carried on a first physical uplink shared channel PUSCH or a first physical uplink control channel PUCCH. The terminal device determines the first time unit set, where the first time unit set is a set of time units in a third time unit set other than a time unit that meets a third condition, the third time unit set includes N1 consecutive time units including the first reference time unit and a subsequent time unit, and the third condition includes: The first frequency range includes a frequency out of a second frequency range, the second frequency range is a frequency range of an uplink subband in a first subband non-overlapping full duplex SBFD time unit, and the first SBFD time unit is an SBFD time unit in the third time unit set. The terminal device sends the first signal to the network device in the first time unit.

In the foregoing technical solution, when the network device indicates a non-transparent subband to the terminal device, that is, when the terminal device is visible to the subband, all symbols in the SBFD time unit are downlink symbols. In this method, the first signal may be transmitted by using the SBFD time unit that meets the third condition, to improve resource utilization of the downlink symbol.

According to an eighth aspect, an uplink transmission method is provided. The method may be performed by a network device, or may be performed by a component (for example, a chip or a circuit) of a network device. This is not limited herein. For ease of description, the following uses an example in which the method is performed by a network device for description.

The method may include: The network device sends first signaling to a terminal device, where the first signaling indicates the terminal device to send a first signal on a first time unit set, the first signaling carries indication information of N1, K1, and a first frequency range, N1 is a quantity of reference time units, N1 is an integer greater than 1, K1 indicates a first reference time unit, the first frequency range is a frequency range for sending the first signal, and the first signal is carried on a first physical uplink shared channel PUSCH or a first physical uplink control channel PUCCH. The network device determines the first time unit set, where the first time unit set is a set of time units in a third time unit set other than a time unit that meets a third condition, the third time unit set includes N1 consecutive time units including the first reference time unit and a subsequent time unit, and the third condition includes: The first frequency range includes a frequency out of a second frequency range, the second frequency range is a frequency range of an uplink subband in a first subband non-overlapping full duplex SBFD time unit, and the first SBFD time unit is an SBFD time unit in the third time unit set. The network device receives the first signal from the terminal device in the first time unit.

For beneficial effect of the eighth aspect, refer to the descriptions of the seventh aspect. Details are not described herein again.

According to a ninth aspect, an uplink transmission method is provided. The method may be performed by a terminal device, or may be performed by a component (for example, a chip or a circuit) of a terminal device. This is not limited herein. For ease of description, the following uses an example in which the method is performed by a terminal device for description.

The method may include: The terminal device receives first signaling from a network device, where the first signaling indicates the terminal device to send a first signal on a first time unit set, the first signal is carried on a first physical uplink shared channel PUSCH, the first time unit set includes $N_U$ uplink time units and $N_F$ subband non-overlapping full duplex SBFD time units, and $N_F$ and $N_U$ are positive integers. The terminal device obtains K, where K is used to determine an information bit quantity $N_{info}$ of the first signal, and K is greater than 0. The terminal device determines $N_{into}$ based on K, where $N_{into}$ meets the following formula:

$$N_{info}=K*N_{RE}*R*Q_m*v$$

Herein, $N_{RE}$ is a quantity of resource elements REs allocated to the first signal in an SBFD time unit or an uplink time unit in the first time unit set, R is a code rate, $Q_m$ indicates a modulation order, and v indicates a quantity of multiple-input multiple-output MIMO layers. The terminal device sends the first signal to the network device on the first time unit set based on $N_{info}$.

For example, the first signal is carried on a PUSCH repetition type A or a PUSCH repetition type B.

In the foregoing technical solution, when frequency resources allocated to the first signal in the SBFD time unit and the uplink time unit are different, a method for determining an actual value of $N_{info}$ in this scenario is provided. In this method, an actual code rate of the first signal is closer to a target code rate, so that the first signal has a better transmission rate and reliability. In this scenario, the frequency resources allocated to the first signal in the SBFD time unit and the uplink time unit are different, to improve resource utilization of the uplink time unit.

In some implementations of the ninth aspect, when $N_{RE}$ is a quantity of REs used by the first signal in the SBFD time unit, $K=(N_{RE\_F}*N_F+N_{RE\_U}*N_U)/(N_F+N_U)/N_{RE\_F}$, or when $N_{RE}$ is a quantity of REs used by the first signal in the uplink time unit, $K=(N_{RE\_F}*N_F+N_{RE\_U}*N_U)/(N_F+N_U)/N_{RE\_U}$, where $N_{RE\_F}$ is a quantity of REs used by the first signal in an SBFD time unit in the first time unit set, and $N_{RE\_U}$ is a quantity of REs used by the first signal in an uplink time unit in the first time unit set.

In some implementations of the ninth aspect, when $N_{RE}$ is a quantity of REs used by the first signal in the SBFD time unit, $K=(N_{RE\_F}*N_F+N_{RE\_U}*N_U)/(N_F+N_U)/N_{RE\_F}$, or when $N_{RE}$ is a quantity of REs used by the first signal in the uplink time unit, $K=(N_{RE\_F}*N_F+N_{RE\_U}*N_U)/(N_F+N_U)/N_{RE\_U}$, where $N_{RE\_F}$ is a quantity of REs used by the first signal in an SBFD time unit in the first time unit set, and $N_{RE\_U}$ is a quantity of REs used by the first signal in an uplink time unit in the first time unit set.

In some implementations of the ninth aspect, that the terminal device obtains K includes: The terminal device obtains K from the first signaling, or the terminal device determines K.

According to a tenth aspect, an uplink transmission method is provided. The method may be performed by a terminal device, or may be performed by a component (for example, a chip or a circuit) of a terminal device. This is not limited herein. For ease of description, the following uses an example in which the method is performed by a terminal device for description.

The method may include: The terminal device receives first signaling from a network device, where the first signaling indicates the terminal device to send a first signal on a first time unit set, the first signal is carried on a first physical uplink shared channel PUSCH, the first time unit set includes $N_U$ uplink time units and $N_F$ subband non-overlapping full duplex SBFD time units, and $N_F$ and $N_U$ are positive integers.

The terminal device determines a first information bit quantity $N_{info}$, where $N_{info}$ meets the following formula:

$$N_{info}=(N_{RE\_F}*N_F+N_{RE\_U}*N_U)*R*Q_m*v$$

Herein, $N_{RE\_F}$ is a quantity of REs used by the first signal in an SBFD time unit in the first time unit set, $N_{RE\_U}$ is a quantity of REs used by the first signal in an uplink time unit in the first time unit set, R is a code rate, $Q_m$ indicates a modulation order, and v indicates a quantity of multiple-input multiple-output MIMO layers. The terminal device sends the first signal to the network device on the first time unit set based on $N_{info}$.

For example, the first signal is a TBoMS PUSCH.

In the foregoing technical solution, when frequency resources allocated to the first signal in the SBFD time unit and the uplink time unit are different, a method for determining an actual value of $N_{info}$ in this scenario is provided. In this method, an actual code rate of the first signal is closer to a target code rate, so that the first signal has a better transmission rate and reliability. In this scenario, the frequency resources allocated to the first signal in the SBFD time unit and the uplink time unit are different, to improve resource utilization of the uplink time unit.

In some implementations of the ninth aspect or the tenth aspect, the first signaling includes a first frequency range and a second frequency range, the first frequency range is a frequency range for sending the first signal in the SBFD time unit, and the second frequency range is a frequency range for sending the first signal in the uplink time unit.

In some implementations of the ninth aspect or the tenth aspect, the first signaling includes a second frequency range, the second frequency range is a frequency range for sending the first signal in the uplink time unit, and the method further includes: When the second frequency range includes a frequency out of a third frequency range, the terminal device determines that $N_{RE\_F}$ is a quantity of REs corresponding to a frequency range that is of the second frequency range and that is within the third frequency range, where the third frequency range is a frequency range of an uplink subband in a first SBFD time unit, and the first SBFD time unit is an SBFD time unit in the first time unit set.

In some implementations of the ninth aspect or the tenth aspect, a redundancy version RV 0 corresponding to the first signal is transmitted in the uplink time unit in the first time unit set.

According to an eleventh aspect, an uplink transmission method is provided. The method may be performed by a network device, or may be performed by a component (for example, a chip or a circuit) of a network device. This is not limited herein. For ease of description, the following uses an example in which the method is performed by a network device for description.

The method may include: The network device sends first signaling to a terminal device, where the first signaling indicates the terminal device to send a first signal on a first time unit set, the first signal is carried on a first physical uplink shared channel PUSCH, the first time unit set includes $N_U$ uplink time units and $N_F$ subband non-overlapping full duplex SBFD time units, and $N_F$ and $N_U$ are positive integers. The network device sends K to the terminal device, where K is used to determine a quantity $N_{info}$ of information bits for transmitting the first signal, K is greater than 0, and $N_{info}$ meets the following formula:

$$N_{info}=K*N_{RE}*R*Q_m*v$$

Herein, $N_{RE}$ is a quantity of resource elements REs allocated to the first signal in an SBFD time unit or an uplink time in the first time unit set, R is a code rate, $Q_m$ indicates a modulation order, and v indicates a quantity of multiple-input multiple-output MIMO layers. The network device receives the first signal from the terminal device in the first time unit.

In some implementations of the eleventh aspect, when $N_{RE}$ is a quantity of REs used by the first signal in the SBFD time unit, $K=(N_{RE\_F}*N_F+N_{RE\_U}*N_U)/(N_F+N_U)/N_{RE\_F}$, or when $N_{RE}$ is a quantity of REs used by the first signal in the uplink time unit, $K=(N_{RE\_F}*N_F+N_{RE\_U}*N_U)/(N_F+N_U)/N_{RE\_U}$, where $N_{RE\_F}$ is a quantity of REs used by the first signal in an SBFD time unit in the first time unit set, and $N_{RE\_U}$ is a quantity of REs used by the first signal in an uplink time unit in the first time unit set.

In some implementations of the eleventh aspect, when $N_{RE}$ is a quantity of REs used by the first signal in the SBFD time unit, $K=(N_{RE\_F}*N_F+N_{RE\_U}*N_U)/(N_F+N_U)/N_{RE\_F}$, or when $N_{RE}$ is a quantity of REs used by the first signal in the uplink time unit, $K=(N_{RE\_F}*N_F+N_{RE\_U}*N_U)/(N_F+N_U)/N_{RE\_U}$, where $N_{RE\_F}$ is a quantity of REs used by the first signal in an SBFD time unit in the first time unit set, and $N_{RE\_U}$ is a quantity of REs used by the first signal in an uplink time unit in the first time unit set.

According to a twelfth aspect, an uplink transmission method is provided. The method may be performed by a network device, or may be performed by a component (for example, a chip or a circuit) of a network device. This is not limited herein. For ease of description, the following uses an example in which the method is performed by a network device for description.

The method may include: The network device sends first signaling to a terminal device, where the first signaling indicates the terminal device to send a first signal on a first time unit set, the first signal is carried on a first physical uplink shared channel PUSCH, the first time unit set includes $N_U$ uplink time units and $N_F$ subband non-overlapping full duplex SBFD time units, and $N_F$ and $N_U$ are positive integers. A quantity of bits for transmitting the first information is $N_{info}$, where $N_{info}$ meets the following formula:

$$N_{info}=(N_{RE\_F}*N_F+N_{RE\_U}*N_U)*R*Q_m*v$$

Herein, $N_{RE\_F}$ is a quantity of REs used by the first signal in an SBFD time unit in the first time unit set, $N_{RE\_U}$ is a quantity of REs used by the first signal in an uplink time unit in the first time unit set, R is a code rate, $Q_m$ indicates a modulation order, and v indicates a quantity of multiple-input multiple-output MIMO layers. The network device receives the first signal from the terminal device on the first time unit set.

In some implementations of the eleventh aspect or the twelfth aspect, the first signaling includes a first frequency range and a second frequency range, the first frequency range is a frequency range for sending the first signal in the SBFD time unit, and the second frequency range is a frequency range for sending the first signal in the uplink time unit.

In some implementations of the eleventh aspect or the twelfth aspect, the first signaling includes a first frequency range and a second frequency range, the first frequency range is a frequency range for sending the first signal in the SBFD time unit, and the second frequency range is a frequency range for sending the first signal in the uplink time unit.

In some implementations of the eleventh aspect or the twelfth aspect, the first signaling includes a second frequency range, and the second frequency range is a frequency range for sending the first signal in the uplink time unit.

In some implementations of the eleventh aspect or the twelfth aspect, an RV 0 corresponding to the first signal is transmitted in the uplink time unit in the first time unit set.

For beneficial effect of the eleventh aspect, refer to the descriptions of the ninth aspect. For beneficial effect of the twelfth aspect, refer to the descriptions of the tenth aspect. Details are not described herein again.

According to a thirteenth aspect, a downlink transmission method is provided. The method may be performed by a terminal device, or may be performed by a component (for example, a chip or a circuit) of a terminal device. This is not limited herein. For ease of description, the following uses an example in which the method is performed by a terminal device for description.

The method may include: The terminal device receives first signaling from a network device, where the first signaling indicates the terminal device to receive a first signal on a first time unit set, the first signaling carries indication information of N1 and K2, N1 is a quantity of time units in the first time unit set, N1 is an integer greater than 1, K2 indicates a first reference time unit, and the first signal is carried on a first physical downlink shared channel PDSCH. The terminal device determines the first time unit set, where the first time unit set is a set of N1 time units, starting from the first reference time unit, that are closest to the first reference time unit and that do not meet a first condition, and the first condition includes: A time unit type of a first time unit is different from a first time unit type, the first time unit type is a downlink time unit or a subband non-overlapping full duplex SBFD time unit, and the first time unit is a time unit traversed from the first reference time unit. The terminal device receives the first signal from the network device on the first time unit set.

According to a fourteenth aspect, a downlink transmission method is provided. The method may be performed by a terminal device, or may be performed by a component (for example, a chip or a circuit) of a terminal device. This is not limited herein. For ease of description, the following uses an example in which the method is performed by a terminal device for description.

The method may include: The terminal device receives first signaling from a network device, where the first signaling indicates the terminal device to receive a first signal on a first time unit set, the first signaling carries indication information of N1 and K2, N1 is a quantity of reference time units, N1 is an integer greater than 1, K2 indicates a first reference time unit, and the first signal is carried on a first physical downlink shared channel PDSCH. The terminal device determines the first time unit set, where the first time unit set is a set of time units in a third time unit set other than a time unit that meets a second condition, the third time unit set includes N1 consecutive time units including the first reference time unit and a subsequent time unit, and the second condition includes: A time unit type of a third time unit is different from a first time unit type, the first time unit type is a downlink time unit or a subband non-overlapping full duplex SBFD time unit, and the third time unit is a time unit in the third time unit set. The terminal device receives the first signal from the network device on the first time unit set.

In some implementations of the thirteenth aspect or the fourteenth aspect, when a time unit type of the first reference time unit is the downlink time unit or the subband non-overlapping full duplex SBFD time unit, the first time unit type is the time unit type of the first reference time unit.

In some implementations of the thirteenth aspect or the fourteenth aspect, when a time unit type of the first reference time unit is an uplink time unit, the first time unit type is a time unit type of a second time unit, and the second time unit is a $1^{st}$ time unit that is after the first reference time unit and whose time unit type is not the uplink time unit.

In some implementations of the thirteenth aspect or the fourteenth aspect, the first time unit type is indicated by the first signaling.

In some implementations of the thirteenth aspect or the fourteenth aspect, the first signaling further includes a first frequency range, and the first frequency range is a frequency range for receiving the first signal. If the first frequency range is not completely included in a frequency range of a downlink subband in the SBFD time unit, the first time unit type is the downlink time unit; otherwise, the first time unit type is the SBFD time unit.

For example, the SBFD time unit herein is a $1^{st}$ time unit after the first reference time unit or any SBFD time unit.

In some implementations of the thirteenth aspect or the fourteenth aspect, the method further includes: The terminal device receives second signaling from the network device, where the second signaling indicates the terminal device to receive a second signal on a second time unit set, the second signal is carried on a second PDSCH, a time unit type of a time unit in the second time unit set is different from a time unit type of a time unit in the first time unit set, and a start time unit of the second time unit set is after a start time unit of the first time unit set and before an end time unit of the first time unit set. The terminal device determines the second time unit set. The terminal device receives the second signal from the network device on the second time unit set.

According to a fifteenth aspect, a downlink transmission method is provided. The method may be performed by a network device, or may be performed by a component (for example, a chip or a circuit) of a network device. This is not limited herein. For ease of description, the following uses an example in which the method is performed by a network device for description.

The method may include: The network device sends first signaling to a terminal device, where the first signaling indicates the terminal device to receive a first signal on a first time unit set, the first signaling carries indication information of N1 and K2, N1 is a quantity of time units in the first time unit set, N1 is an integer greater than 1, K2 indicates a first reference time unit, and the first signal is carried on a first physical downlink shared channel PDSCH. The network device sends the first signal to the terminal device on the first time unit set, where the first time unit set is a set of N1 time units, starting from the first reference time unit, that are closest to the first reference time unit and that do not meet a first condition, and the first condition includes: A time unit type of a first time unit is different from a first time unit type, the first time unit type is a downlink time unit or a subband non-overlapping full duplex SBFD time unit, and the first time unit is a time unit traversed from the first reference time unit.

According to a sixteenth aspect, a downlink transmission method is provided. The method may be performed by a network device, or may be performed by a component (for example, a chip or a circuit) of a network device. This is not limited herein. For ease of description, the following uses an example in which the method is performed by a network device for description.

The method may include: The network device sends first signaling to a terminal device, where the first signaling indicates the terminal device to receive a first signal on a first time unit set, the first signaling carries indication information of N1 and K2, N1 is a quantity of reference time units, N1 is an integer greater than 1, K2 indicates a first reference time unit, and the first signal is carried on a first physical downlink shared channel PDSCH. The network device sends the first signal to the terminal device on the first time unit set, where the first time unit set is a set of time units in a third time unit set other than a time unit that meets a second condition, the third time unit set includes N1 consecutive time units including the first reference time unit and a subsequent time unit, and the second condition includes: A time unit type of a third time unit is different from a first time unit type, the first time unit type is a downlink time unit or a subband non-overlapping full duplex SBFD time unit, and the third time unit is a time unit in the third time unit set.

In some implementations of the fifteenth aspect or the sixteenth aspect, when a time unit type of the first reference time unit is the downlink time unit or the subband non-overlapping full duplex SBFD time unit, the first time unit type is the time unit type of the first reference time unit.

In some implementations of the fifteenth aspect or the sixteenth aspect, when a time unit type of the first reference time unit is an uplink time unit, the first time unit type is a time unit type of a second time unit, and the second time unit is a 1st time unit that is after the first reference time unit and whose time unit type is not the uplink time unit.

In some implementations of the fifteenth aspect or the sixteenth aspect, the first time unit type is indicated by the first signaling.

In some implementations of the fifteenth aspect or the sixteenth aspect, the first signaling further includes a first frequency range, and the first frequency range is a frequency range for receiving the first signal. If the first frequency range is not completely included in a frequency range of a downlink subband in the SBFD time unit, the first time unit type is the downlink time unit; otherwise, the first time unit type is the SBFD time unit.

In some implementations of the fifteenth aspect or the sixteenth aspect, the method further includes: The network device sends second signaling to the terminal device, where the second signaling indicates the terminal device to receive a second signal on a second time unit set, the second signal is carried on a second PDSCH, a time unit type of a time unit in the second time unit set is different from a time unit type of a time unit in the first time unit set, and a start time unit of the second time unit set is after a start time unit of the first time unit set and before an end time unit of the first time unit set. The network device sends the second signal to the terminal device on the second time unit set.

According to a seventeenth aspect, a downlink transmission method is provided. The method may be performed by a terminal device, or may be performed by a component (for example, a chip or a circuit) of a terminal device. This is not limited herein. For ease of description, the following uses an example in which the method is performed by a terminal device for description.

The method may include: The terminal device receives first signaling from a network device, where the first signaling indicates the terminal device to receive a first signal on a first time unit set, the first signaling carries indication information of N1, K2, and a first frequency range, N1 is a quantity of time units in the first time unit set, N1 is an integer greater than 1, K2 indicates a first reference time unit, the first frequency range is a frequency range for sending the first signal, and the first signal is carried on a first physical downlink shared channel PDSCH. The terminal device determines the first time unit set, where the first time unit set is a set of N1 time units, starting from the first reference time unit, that are closest to the first reference time unit and that include a downlink time unit and a subband non-overlapping full duplex SBFD time unit that does not meet a third condition, and the third condition includes: The first frequency range includes a frequency out of a second frequency range, the second frequency range is a frequency range of a downlink subband in a first SBFD time unit, and the first SBFD time unit is an SBFD time unit traversed from the first reference time unit. The terminal device receives the first signal from the network device on the first time unit set.

According to an eighteenth aspect, a downlink transmission method is provided. The method may be performed by a network device, or may be performed by a component (for example, a chip or a circuit) of a network device. This is not limited herein. For ease of description, the following uses an example in which the method is performed by a network device for description.

The method may include: The network device sends first signaling to a terminal device, where the first signaling indicates the terminal device to receive a first signal on a first time unit set, the first signaling carries indication information of N1, K2, and a first frequency range, N1 is a quantity of time units in the first time unit set, N1 is an integer greater than 1, K2 indicates a first reference time unit, the first frequency range is a frequency range for sending the first signal, and the first signal is carried on a first physical downlink shared channel PDSCH. The network device sends the first signal to the terminal device on the first time unit set, where the first time unit set is a set of N1 time units, starting from the first reference time unit, that are closest to the first reference time unit and that include a downlink time unit and a subband non-overlapping full duplex SBFD time unit that does not meet a third condition, and the third condition includes: The first frequency range includes a frequency out of a second frequency range, the second frequency range is a frequency range of a downlink subband in a first SBFD time unit, and the first SBFD time unit is an SBFD time unit traversed from the first reference time unit.

According to a nineteenth aspect, a downlink transmission method is provided. The method may be performed by a terminal device, or may be performed by a component (for example, a chip or a circuit) of a terminal device. This is not limited herein. For ease of description, the following uses an example in which the method is performed by a terminal device for description.

The method may include: The terminal device receives first signaling from a network device, where the first signaling indicates the terminal device to receive a first signal on a first time unit set, the first signaling carries indication information of N1, K2, and a first frequency range, N1 is a quantity of reference time units, N1 is an integer greater than 1, K2 indicates a first reference time unit, the first frequency range is a frequency range for sending the first signal, and the first signal is carried on a first physical downlink shared channel PDSCH. The terminal device determines the first time unit set, where the first time unit set is a set of time units in a third time unit set other than a time unit that meets a third condition, the third time unit set includes N1 consecutive time units including the first reference time unit and a subsequent time unit, and the third condition includes: The first frequency range includes a frequency out of a second frequency range, the second frequency range is a frequency range of a downlink subband in a first subband non-overlapping full duplex SBFD time unit, and the first SBFD time unit is an SBFD time unit in the third time unit set. The terminal device receives the first signal from the network device in the first time unit.

According to a twentieth aspect, a downlink transmission method is provided. The method may be performed by a network device, or may be performed by a component (for example, a chip or a circuit) of a network device. This is not limited herein. For ease of description, the following uses an example in which the method is performed by a network device for description.

The method may include: The network device sends first signaling to a terminal device, where the first signaling indicates the terminal device to receive a first signal on a first time unit set, the first signaling carries indication information of N1, K2, and a first frequency range, N1 is a quantity of reference time units, N1 is an integer greater than 1, K2 indicates a first reference time unit, the first frequency range is a frequency range for transmitting the first signal, and the first signal is carried on a first physical downlink shared channel PDSCH. The network device sends the first signal to the terminal device in the first time unit, where the first time unit set is a set of time units in a third time unit set other than a time unit that meets a third condition, the third time unit set includes N1 consecutive time units including the first reference time unit and a subsequent time unit, and the third condition includes: The first frequency range includes a frequency out of a second frequency range, the second frequency range is a frequency range of a downlink subband in a first subband non-overlapping full duplex SBFD time unit, and the first SBFD time unit is an SBFD time unit in the third time unit set.

According to a twenty-first aspect, an uplink transmission method is provided. The method may be performed by a terminal device, or may be performed by a component (for example, a chip or a circuit) of a terminal device. This is not limited herein. For ease of description, the following uses an example in which the method is performed by a terminal device for description.

The method may include: The terminal device receives first signaling from a network device, where the first signaling indicates the terminal device to send a first signal on K consecutive first time unit sets, the first time unit set is a time unit set for a nominal physical uplink shared channel PUSCH repetition, the first signal is carried on a PUSCH repetition type B, the first signaling carries first indication information and second indication information, the first indication information indicates a first reference time unit, the first reference time unit is a start time unit of the K first time unit sets, and the second indication information indicates a quantity of time units included in the K first time unit sets. The terminal device determines a second time unit set, where the second time unit set is a set of time units other than a third time unit in the K first time unit sets, the third time unit includes a time unit of a first time unit type, the first time unit type is an uplink time unit or a subband non-overlapping full duplex SBFD time unit, and the first time unit type is determined based on the first reference time unit. The terminal device repeatedly sends the first signal to the network device on the second time unit set or a subset of the second time unit set.

In some implementations of the twenty-first aspect, the method further includes: The terminal device receives second signaling from the network device, where the second signaling indicates the terminal device to send a second signal on the K consecutive first time unit sets, and the second signal is carried on a PUSCH repetition type B. The terminal device determines a fourth time unit set, where the fourth time unit set is a set of time units other than a fifth time unit in the K first time unit sets, the fifth time unit includes a time unit of a second time unit type, the second time unit type is the uplink time unit or the SBFD time unit, and the first time unit type is different from the second time unit type. The terminal device repeatedly sends the second signal to the network device on the fourth time unit set or a subset of the fourth time unit set.

According to a twenty-second aspect, an uplink transmission method is provided. The method may be performed by a network device, or may be performed by a component (for example, a chip or a circuit) of a network device. This is not limited herein. For ease of description, the following uses an example in which the method is performed by a network device for description.

The method may include: The network device sends first signaling to a terminal device, where the first signaling indicates the terminal device to send a first signal on K consecutive first time unit sets, the first time unit set is a time unit set for a nominal physical uplink shared channel PUSCH repetition, the first signal is carried on a PUSCH repetition type B, the first signaling carries first indication information and second indication information, the first indication information indicates a first reference time unit, the first reference time unit is a start time unit of the K first time unit sets, and the second indication information indicates a quantity of time units included in the K first time unit sets. The network device determines a second time unit set, where the second time unit set is a set of time units other than a third time unit in the K first time unit sets, the third time unit includes a time unit of a first time unit type, the first time unit type is an uplink time unit or a subband non-overlapping full duplex SBFD time unit, and the first time unit type is determined based on the first reference time unit. The network device repeatedly receives the first signal from the terminal device on the second time unit set or a subset of the second time unit set.

In some implementations of the twenty-first aspect or some implementations of the twenty-second aspect, when a time unit type of the first reference time unit is the uplink time unit, the first time unit type is the SBFD time unit; or when a time unit type of the first reference time unit is the SBFD time unit, the first time unit type is the uplink time unit.

In some implementations of the twenty-first aspect or some implementations of the twenty-second aspect, when a time unit type of the first reference time unit is a downlink time unit, the first time unit type is determined based on a time unit type of a second time unit, and the second time unit is a $1^{st}$ time unit that is after the first reference time unit and whose time unit type is not the downlink time unit.

In some implementations of the twenty-first aspect or some implementations of the twenty-second aspect, if the time unit type of the second time unit is the uplink time unit, the first time unit type is the SBFD time unit; or if the time unit type of the second time unit is the SBFD time unit, the first time unit type is the uplink time unit.

In some implementations of the twenty-first aspect or some implementations of the twenty-second aspect, the first signaling further includes indication information of the first frequency range, and the first frequency range is a frequency range for sending the first signal. If a time unit type of the first reference time unit is the SBFD time unit, and the first frequency range is not completely included in a frequency range of an uplink subband in the SBFD time unit, the first time unit type is the SBFD time unit; otherwise, the first time unit type is the uplink time unit.

In some implementations of the twenty-second aspect, the method further includes: The network device sends second signaling to the terminal device, where the second signaling indicates the terminal device to send a second signal on the K consecutive first time unit sets, and the second signal is carried on a PUSCH repetition type B. The network device determines a fourth time unit set, where the fourth time unit set is a set of time units other than a fifth time unit in the K first time unit sets, the fifth time unit includes a time unit of a second time unit type, the second time unit type is the uplink time unit or the SBFD time unit, and the first time unit type is different from the second time unit type. The network device repeatedly receives the second signal from the terminal device on the fourth time unit set or a subset of the fourth time unit set.

Optionally, in the twenty-first aspect or the twenty-second aspect, the network device may directly indicate the first time unit type to the terminal device by using the first signaling.

According to a twenty-third aspect, an uplink transmission method is provided. The method may be performed by a terminal device, or may be performed by a component (for example, a chip or a circuit) of a terminal device. This is not limited herein. For ease of description, the following uses an example in which the method is performed by a terminal device for description.

The method may include: The terminal device receives first signaling from a network device, where the first signaling indicates the terminal device to send a first signal on K consecutive first time unit sets, the first time unit set is a time unit set for a nominal physical uplink shared channel PUSCH repetition, the first signal is carried on a PUSCH repetition type B, the first signaling carries first indication information, second indication information, and indication information of a first frequency range, the first indication information indicates a first reference time unit, the first reference time unit is a start time unit of the K first time unit sets, the second indication information indicates a quantity of time units included in the K first time unit sets, and the first frequency range is a frequency range for sending the first signal. The terminal device determines a second time unit set, where the second time unit set is a set of time units other than a third time unit in the first time unit set, the third time unit includes a subband non-overlapping full duplex SBFD time unit that meets a third condition, and the third condition includes: The first frequency range includes a frequency out of a second frequency range, and the second frequency range is a frequency range of an uplink subband in the SBFD time unit. The terminal device repeatedly sends the first signal to the network device on the second time unit set or a subset of the second time unit set.

According to a twenty-fourth aspect, an uplink transmission method is provided. The method may be performed by a network device, or may be performed by a component (for example, a chip or a circuit) of a network device. This is not limited herein. For ease of description, the following uses an example in which the method is performed by a network device for description.

The method may include: The network device sends first signaling to a terminal device, where the first signaling indicates the terminal device to send a first signal on K consecutive first time unit sets, the first time unit set is a time unit set for a nominal physical uplink shared channel PUSCH repetition, the first signal is carried on a PUSCH repetition type B, the first signaling carries first indication information, second indication information, and indication information of a first frequency range, the first indication information indicates a first reference time unit, the first reference time unit is a start time unit of the K first time unit sets, the second indication information indicates a quantity of time units included in the K first time unit sets, and the first frequency range is a frequency range for sending the first signal. The network device determines a second time unit set, where the second time unit set is a set of time units other than a third time unit in the first time unit set, the third time unit includes a subband non-overlapping full duplex SBFD time unit that meets a third condition, and the third condition includes: The first frequency range includes a frequency out of a second frequency range, and the second frequency range is a frequency range of an uplink subband in the SBFD time unit. The network device repeatedly receives the first signal from the terminal device on the second time unit set or a subset of the second time unit set.

According to a twenty-fifth aspect, an uplink transmission method is provided. The method may be performed by a terminal device, or may be performed by a component (for example, a chip or a circuit) of a terminal device. This is not limited herein. For ease of description, the following uses an example in which the method is performed by a terminal device for description.

The method may include: The terminal device receives first signaling from a network device, where the first signaling indicates the terminal device to repeatedly send a first signal on K consecutive first time unit sets, the first time unit set is a time unit set for a nominal physical uplink shared channel PUSCH repetition, the first signal is carried on a PUSCH repetition type B. The terminal device determines a second time unit set, where the second time unit set is a set of time units other than an invalid time unit in the K first time unit sets, and K is a positive integer. The terminal device determines a third time unit set included in the second time unit set, where the third time unit set is a time unit set for an actual PUSCH repetition, the third time unit set is a first-type third time unit set or a second-type third time unit set, all time units in the first-type third time unit are uplink time units, all time units in the second-type third time unit set are subband non-overlapping full duplex SBFD time units, and the second time unit set includes the first-type third time unit set and the second-type third time unit set. The terminal device repeatedly sends the first signal to the network device on all or a part of third time unit sets in the K first time unit sets.

According to a twenty-sixth aspect, an uplink transmission method is provided. The method may be performed by a network device, or may be performed by a component (for example, a chip or a circuit) of a network device. This is not limited herein. For ease of description, the following uses an example in which the method is performed by a network device for description.

The method may include: The network device sends first signaling to a terminal device, where the first signaling indicates the terminal device to repeatedly send a first signal on K consecutive first time unit sets, the first time unit set is a time unit set for a nominal physical uplink shared channel PUSCH repetition, the first signal is carried on a PUSCH repetition type B. The network device determines a second time unit set, where the second time unit set is a set of time units other than an invalid time unit in the K first time unit sets, and K is a positive integer. The network device determines a third time unit set included in the second time unit set, where the third time unit set is a time unit set for an actual PUSCH repetition, the third time unit set is a first-type third time unit set or a second-type third time unit set, all time units in the first-type third time unit are uplink time units, all time units in the second-type third time unit set are subband non-overlapping full duplex SBFD time units, and the second time unit set includes the first-type third time unit set and the second-type third time unit set. The network device repeatedly receives the first signal from the terminal device on all or a part of third time unit sets in the K first time unit sets.

According to a twenty-seventh aspect, an uplink transmission method is provided. The method may be performed by a terminal device, or may be performed by a component (for example, a chip or a circuit) of a terminal device. This is not limited herein. For ease of description, the following uses an example in which the method is performed by a terminal device for description.

The method includes: The terminal device receives first signaling from a network device, where the first signaling indicates the terminal device to send a first signal on K consecutive first time unit sets, the first time unit set is a time unit set for a nominal physical uplink shared channel PUSCH repetition, the first signal is carried on a PUSCH repetition type B, the first signaling carries first indication information, second indication information, and third indication information, the first indication information indicates a first reference time unit, the first reference time unit is a start time unit of the K first time unit sets, the second indication information indicates a quantity of time units included in the K first time unit sets, the third indication information indicates a first time unit type, and the first time unit type is an uplink time unit or a subband non-overlapping full duplex SBFD time unit. The terminal device determines a second time unit set, where the second time unit set is a set of time units other than a third time unit in the K first time unit sets, and the third time unit includes a time unit of the first time unit type. The terminal device repeatedly sends the first signal to the network device on the second time unit set or a subset of the second time unit set.

According to a twenty-eighth aspect, an uplink transmission method is provided. The method may be performed by a network device, or may be performed by a component (for example, a chip or a circuit) of a network device. This is not limited herein. For ease of description, the following uses an example in which the method is performed by a network device for description.

The method may include: The network device sends first signaling to a terminal device, where the first signaling indicates the terminal device to send a first signal on K consecutive first time unit sets, the first time unit set is a time unit set for a nominal physical uplink shared channel PUSCH repetition, the first signal is carried on a PUSCH repetition type B, the first signaling carries first indication information, second indication information, and third indication information, the first indication information indicates a first reference time unit, the first reference time unit is a start time unit of the K first time unit sets, the second indication information indicates a quantity of time units included in the K first time unit sets, the third indication information indicates a first time unit type, and the first time unit type is an uplink time unit or a subband non-overlapping full duplex SBFD time unit. The network device determines a second time unit set, where the second time unit set is a set of time units other than a third time unit in the K first time unit sets, and the third time unit includes a time unit of the first time unit type. The network device repeatedly receives the first signal from the terminal device on the second time unit set or a subset of the second time unit set.

According to a twenty-ninth aspect, a communication apparatus is provided. The apparatus is configured to perform the method provided in the first aspect, the second aspect, the fifth aspect, the seventh aspect, the ninth aspect, the tenth aspect, the thirteenth aspect, the fourteenth aspect, the seventeenth aspect, the nineteenth aspect, the twenty-first aspect, the twenty-third aspect, the twenty-fifth aspect, or the twenty-seventh aspect. Specifically, the apparatus may include a unit and/or a module, for example, a processing unit and/or a communication unit, configured to perform the method in the first aspect, the second aspect, the fifth aspect, the seventh aspect, the ninth aspect, the tenth aspect, the thirteenth aspect, the fourteenth aspect, the seventeenth aspect, the nineteenth aspect, the twenty-first aspect, the twenty-third aspect, the twenty-fifth aspect, the twenty-seventh aspect, or any possible implementation of the first aspect, the second aspect, the fifth aspect, the seventh aspect, the ninth aspect, the tenth aspect, the thirteenth aspect, the fourteenth aspect, the seventeenth aspect, the nineteenth aspect, the twenty-first aspect, the twenty-third aspect, the twenty-fifth aspect, or the twenty-seventh aspect.

In an implementation, the apparatus is a terminal device. When the apparatus is the terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the terminal device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit. The processing unit may be at least one processor, processing circuit, logic circuit, or the like.

According to a thirtieth aspect, a communication apparatus is provided. The apparatus is configured to perform the method provided in the third aspect, the fourth aspect, the sixth aspect, the eighth aspect, the eleventh aspect, the twelfth aspect, the fifteenth aspect, the sixteenth aspect, the eighteenth aspect, the twentieth aspect, the twenty-second aspect, the twenty-fourth aspect, the twenty-sixth aspect, or the twenty-eighth aspect. Specifically, the apparatus may include a unit and/or a module, for example, a processing unit and/or a communication unit, configured to perform the method in the third aspect, the fourth aspect, the sixth aspect, the eighth aspect, the eleventh aspect, the twelfth aspect, the fifteenth aspect, the sixteenth aspect, the eighteenth aspect, the twentieth aspect, the twenty-second aspect, the twenty-fourth aspect, the twenty-sixth aspect, the twenty-eighth aspect, or any possible implementation of the third aspect, the fourth aspect, the sixth aspect, the eighth aspect, the eleventh aspect, the twelfth aspect, the fifteenth aspect, the sixteenth aspect, the eighteenth aspect, the twentieth aspect, the twenty-second aspect, the twenty-fourth aspect, the twenty-sixth aspect, or the twenty-eighth aspect.

In an implementation, the apparatus is a network device. When the apparatus is the network device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in the network device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit. The processing unit may be at least one processor, processing circuit, logic circuit, or the like.

According to a thirty-first aspect, a communication apparatus is provided. The apparatus includes at least one processor, the at least one processor is coupled to at least one memory, and the at least one memory is configured to store a computer program or instructions. The at least one processor is configured to invoke and run the computer program or instructions from the at least one memory, so that the communication apparatus performs the method in the first aspect, the second aspect, the fifth aspect, the seventh aspect, the ninth aspect, the tenth aspect, the thirteenth aspect, the fourteenth aspect, the seventeenth aspect, the nineteenth aspect, the twenty-first aspect, the twenty-third aspect, the twenty-fifth aspect, the twenty-seventh aspect, or any possible implementation of the first aspect, the second aspect, the fifth aspect, the seventh aspect, the ninth aspect, the tenth aspect, the thirteenth aspect, the fourteenth aspect, the seventeenth aspect, the nineteenth aspect, the twenty-first aspect, the twenty-third aspect, the twenty-fifth aspect, or the twenty-seventh aspect.

In an implementation, the apparatus is a terminal device.

In another implementation, the apparatus is a chip, a chip system, or a circuit used in the terminal device.

According to a thirty-second aspect, a communication apparatus is provided. The apparatus includes at least one processor, the at least one processor is coupled to at least one memory, and the at least one memory is configured to store a computer program or instructions. The at least one processor is configured to invoke and run the computer program or instructions from the at least one memory, so that the communication apparatus performs the method in the third aspect, the fourth aspect, the sixth aspect, the eighth aspect, the eleventh aspect, the twelfth aspect, the fifteenth aspect, the sixteenth aspect, the eighteenth aspect, the twentieth aspect, the twenty-second aspect, the twenty-fourth aspect, the twenty-sixth aspect, the twenty-eighth aspect, or any possible implementation of the third aspect, the fourth aspect, the sixth aspect, the eighth aspect, the eleventh aspect, the twelfth aspect, the fifteenth aspect, the sixteenth aspect, the eighteenth aspect, the twentieth aspect, the twenty-second aspect, the twenty-fourth aspect, the twenty-sixth aspect, or the twenty-eighth aspect.

In an implementation, the apparatus is a network device.

In another implementation, the apparatus is a chip, a chip system, or a circuit used in the network device.

According to a thirtieth aspect, a processor is provided, configured to perform the methods provided in the foregoing aspects.

Unless otherwise specified, or if operations such as sending and obtaining/receiving related to the processor do not conflict with actual functions or internal logic of the processor in related descriptions, the operations may be understood as operations such as outputting, receiving, and inputting performed by the processor, or may be understood as sending and receiving operations performed by a radio frequency circuit and an antenna. This is not limited in this application.

According to a thirty-fourth aspect, a computer-readable storage medium is provided. The computer-readable storage medium stores program code to be executed by a device, and the program code includes code for performing the method in the first aspect to the twelfth aspect and any possible implementation of the first aspect to the twelfth aspect.

According to a thirty-fifth aspect, a computer program product including instructions is provided. When the computer program product runs on a computer, the computer is enabled to perform the method in the first aspect to the twelfth aspect and any possible implementation of the first aspect to the twelfth aspect.

According to a thirty-sixth aspect, a chip is provided. The chip includes a processor and a communication interface. The processor reads, through the communication interface, instructions stored in a memory, to perform the method in the first aspect to the twelfth aspect and any possible implementation of the first aspect to the twelfth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method in the first aspect to the twelfth aspect and any possible implementation of the first aspect to the twelfth aspect.

According to a thirty-seventh aspect, a communication system is provided. The communication system includes the communication apparatuses according to the thirty-first aspect and the thirty-second aspect.

## BRIEF DESCRIPTION OF DRAWINGS

FIG. 1 is a diagram of a communication system according to an embodiment of this application;

FIG. 2 is a time-frequency diagram of subband non-overlapping full duplex;

FIG. 3 is a diagram of determining, by using a physical-slot counting method, a time domain resource for transmitting a multi-slot PUSCH/PUCCH;

FIG. 4 is a diagram of determining, by using an available-slot counting method, a time domain resource for transmitting a multi-slot PUSCH/PUCCH;

FIG. 5 is a diagram of a solution for transmitting a multi-slot PUSCH/PUCCH on SBFD;

FIG. 6 is a schematic flowchart of an uplink transmission method according to this application;

FIG. 7 is a diagram of determining a first time unit set according to the method provided in FIG. 6;

FIG. 8 is a diagram of existing PUSCH scheduling;

FIG. 9 is a schematic flowchart of another uplink transmission method according to this application;

FIG. 10 is a diagram of determining a first time unit set according to the method provided in FIG. 9;

FIG. 11 is a schematic flowchart of a resource configuration method according to this application;

FIG. 12 is a diagram of determining a first time unit set according to the method provided in FIG. 11;

FIG. 13 is a schematic flowchart of another resource configuration method according to this application;

FIG. 14 is a diagram of determining a first time unit set according to the method provided in FIG. 13;

FIG. 15 is a schematic flowchart of another resource configuration method according to this application;

FIG. 16 is a schematic flowchart of another resource configuration method according to this application;

FIG. 17 is a diagram of PUSCH repetition type B-based transmission;

FIG. 18 is a schematic flowchart of another uplink transmission method according to this application;

FIG. 19 is a diagram of determining a second time unit set according to the method provided in FIG. 18;

FIG. 20 is a schematic flowchart of another uplink transmission method according to this application;

FIG. 21 is a diagram of determining a second time unit set according to the method provided in FIG. 20;

FIG. 22 is a schematic flowchart of another uplink transmission method according to this application;

FIG. 23 is a diagram of determining a third time unit set according to the method provided in FIG. 22;

FIG. 24 is a block diagram of a communication apparatus 200 according to this application; and

FIG. 25 is a diagram of a structure of a communication apparatus 300 according to this application.

## DESCRIPTION OF EMBODIMENTS

The following describes technical solutions of embodiments in this application with reference to accompanying drawings.

The technical solutions in embodiments of this application may be applied to various communication systems, for example, wireless communication related to 5th generation (5th generation, 5G), new radio (new radio, NR), long term evolution (long term evolution, LTE), internet of things (internet of things, IoT), wireless fidelity (wireless fidelity, Wi-Fi), the 3rd generation partnership project (3rd generation partnership project, 3GPP), or other wireless communication that may occur in the future.

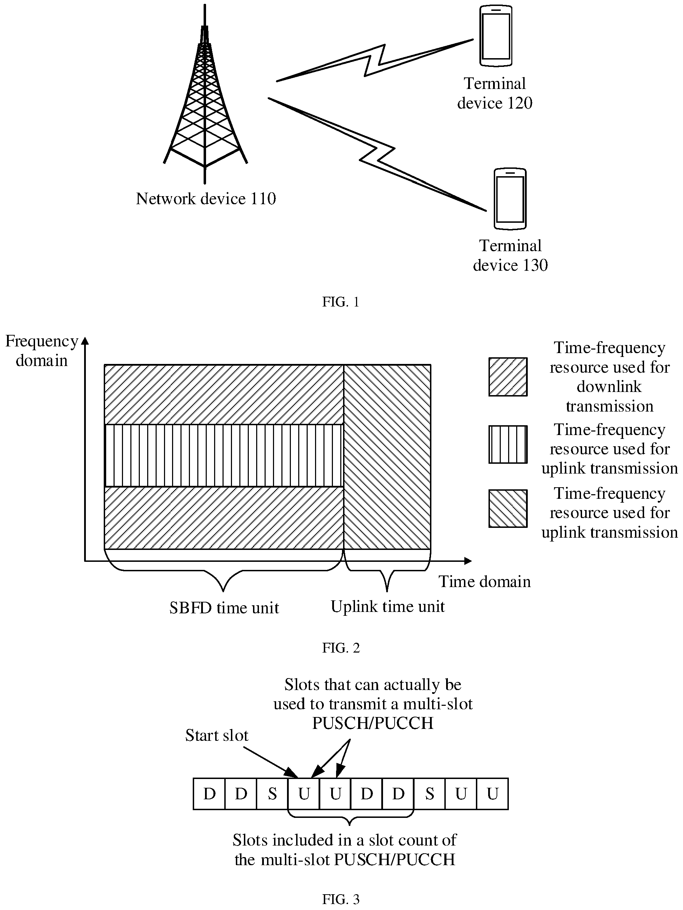

FIG. 1 is a diagram of a communication system according to an embodiment of this application. The communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 through a radio link, to exchange information. It may be understood that, the network device and the terminal device may also be referred to as communication devices.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, a wireless backhaul node, or the like. In communication systems using different radio access technologies (radio access technologies, RATs), names of devices having base station functions may be different. For example, a base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include one or more central units (central units, CUs), one or more distributed units (distributed units, DUs), or one or more CUs and one or more DUs. For example, functions of the CU may be implemented by one entity or different entities. For example, the functions of the CU are further divided. To be specific, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (media access control, MAC) layer, and a physical (physical, PHY) layer. In this way, some functions of a radio access network device may be implemented by a plurality of network function entities. These network function entities may be network elements in a hardware device, or may be software functions run on dedicated hardware, or may be virtualized functions instantiated on a platform (for example, a cloud platform). The network device may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. For another example, in a vehicle to everything (vehicle to everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device through a relay station. In embodiments of this application, an apparatus configured to implement a function of the network device may be the network device, or may be an apparatus that can support the network device in implementing the function, for example, a chip system or a combined device or component that can implement the function of the access network device. The apparatus may be installed in the network device. In embodiments of this application, the chip system may include a chip, or may include a chip and another discrete device.

The terminal device is a user side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine-type communication (machine-to-machine/machine-type communication, M2M/MTC) communication, internet of things, virtual reality (virtual reality, VR), augmented reality (augmented reality, AR), industrial control (industrial control), self driving (self driving), remote medical (remote medical), a smart grid (smart grid), smart furniture, smart office, smart wearables, smart transportation, a smart city (smart city), an uncrewed aerial vehicle, and a robot. For example, the terminal device may be a handheld terminal in the cellular communication, a communication device in the D2D, an internet of things device in the MTC, a surveillance camera in the smart transportation and the smart city, or a communication device in the uncrewed aerial vehicle. The terminal device may be sometimes referred to as user equipment (user equipment, UE), a user terminal, a user apparatus, a subscriber unit, a subscriber station, a terminal, an access terminal, an access station, a UE station, a remote station, a mobile device, a wireless communication device, or the like. In embodiments of this application, an apparatus configured to implement a function of the terminal device may be the terminal device, or may be an apparatus that can support the terminal device in implementing the function, for example, a chip system or a combined device or component that can implement the function of the terminal device. The apparatus may be installed in the terminal device.

To facilitate understanding of embodiments of this application, concepts and related procedures in this application are described first.

1. Symbol (symbol): The symbol is an abbreviation of a time domain symbol, and may also be referred to as an OFDM symbol. It should be noted that the time domain symbol may be alternatively named in combination with another multiple access manner. This is not limited in embodiments of this application. For different subcarrier spacings, lengths of time domain symbols may be different.

It should be understood that symbols in a slot (slot) may include three types: a downlink symbol, an uplink symbol, and a flexible symbol. The uplink symbol can be used only for uplink transmission, and the downlink symbol can be used only for downlink transmission. The flexible symbol has no specific transmission direction, and may be used for uplink transmission or downlink transmission based on an indication of control signaling. Symbols in a slot may be all downlink symbols, or all uplink symbols, or all flexible symbols, or may be a combination of several types of symbols.

2. Time unit: The time unit may be a slot, a symbol, a subframe, a half-frame, a frame, a mini-subframe, a mini-slot, or a transmission occasion (transmission occasion, TO). This is not limited in this application.

3. Subband: The subband is a part of a frequency band in a carrier, namely, one or more consecutive physical resource blocks (physical resource blocks, PRBs) in frequency domain. In this application, the subband may also be understood as a frequency resource.

4. SBFD: In an SBFD solution, one carrier or one bandwidth part (bandwidth part, BWP) is divided into a plurality of non-overlapping subbands, and transmission directions of different subbands may be different. **In** other words, one carrier includes a first subband and a second subband that do not overlap, and transmission directions of the first subband and the second subband are different. It should be noted that the first subband and the second subband are two types of subbands with different transmission directions, and this does not mean that one carrier includes only two subbands. For example, a carrier includes a subband #1 and a subband #2, and transmission directions of the subband #1 and the subband #2 are different. Alternatively, a carrier includes a subband #1, a subband #2, and a subband #3. Transmission directions of the subband #1 and the subband #3 are the same, and transmission directions of the subband #1 and the subband #2 are different.

5. SBFD time unit: A frequency resource in the SBFD time unit includes an uplink frequency resource and a downlink frequency resource, where the uplink frequency resource is used for uplink transmission, and the downlink frequency resource is used for downlink transmission. For example, time-frequency division of a typical SBFD solution is shown in FIG. 2. A horizontal axis indicates time domain, and a vertical axis indicates frequency domain. **In** FIG. 2, two rectangular blocks filled with left slashes each indicate a group of time-frequency resources used for downlink transmission, a rectangular block filled with vertical bars indicates a group of time-frequency resources used for uplink transmission, and time domain resources in a time domain range occupied by the three blocks of time-frequency resources are referred to as SBFD time units.

6. Non-SBFD time unit: A frequency resource corresponding to each of all symbols included in the non-SBFD time unit is used only for downlink transmission or used only for uplink transmission. For example, all the symbols in the non-SBFD time unit are downlink symbols; or all the symbols in the non-full-duplex time unit are uplink symbols; or some symbols in the non-full-duplex time unit are downlink symbols, and some are uplink symbols; or some symbols in the non-full-duplex time unit are downlink symbols, some are uplink symbols, and some are flexible symbols; or some symbols in the non-full-duplex time unit are downlink symbols, and some are flexible symbols; or some symbols in the non-full-duplex time unit are uplink symbols, and some are flexible symbols. For example, a rectangular block filled with right slashes in FIG. 2 indicates a group of time-frequency resources used for uplink transmission, and slots in a time domain range occupied by the group of time-frequency resources are referred to as uplink time units. Transmission directions of all frequency resources in these time units are uplink, and these time units may be referred to as non-SBFD slots.

7. Time unit type: The time unit type includes an uplink time unit, a downlink time unit, and an SBFD time unit. A frequency resource corresponding to the uplink time unit is used only for uplink transmission, a frequency resource corresponding to the downlink time unit is used only for downlink transmission, and a frequency resource corresponding to the SBFD time unit includes an uplink frequency resource and a downlink frequency resource. The uplink frequency resource is used for uplink transmission, and the downlink frequency resource is used for downlink transmission.

8. Two indication manners of an SBFD time-frequency resource

Manner 1: Transparent subband indication: **In** the transparent subband indication, locations of uplink and downlink subbands of SBFD are invisible (or transparent) to UE.

First, a base station that supports the SBFD configures all symbols in a UE SBFD slot as flexible symbols. For example, in this manner, an SBFD uplink-downlink slot configuration may be XXXXX, XXXXU, and DXXXU. D indicates a downlink slot, all symbols in the downlink slot are downlink symbols, and no uplink subband can be configured on the downlink symbol. U indicates an uplink slot, all symbols in the uplink slot are uplink symbols, and no downlink subband can be configured on the uplink symbol. X indicates an SBFD slot, and each symbol in the SBFD slot may be configured with at least one uplink subband and at least one downlink subband. **In** this method, the UE does not need to learn location information of uplink and downlink subbands configured on a flexible symbol, that is, the UE does not know frequency resource locations of the uplink and downlink subbands. If the UE determines to perform downlink transmission on the flexible symbol, a gNB needs to ensure that the UE is indicated to perform downlink reception only on a downlink subband configured on the flexible symbol. If the UE determines to perform uplink transmission on the flexible symbol, the gNB needs to ensure that the UE is indicated to perform uplink transmission only on an uplink subband configured on the flexible symbol. The UE can implement the SBFD as long as the UE performs a corresponding operation based on scheduling of the base station.

It should be understood that quantities of X in XXXXX, XXXXU, and DXXXU are merely examples for description, and the quantity of X may be configured by a network device based on an actual situation. In addition, XXXXX, XXXXU, and DXXXU may be configured by using cell-level uplink-downlink slot configuration signaling and UE-level uplink-downlink slot configuration signaling.

Manner 2: Non-transparent subband indication: In the non-transparent subband indication, locations of uplink and downlink subbands of SBFD are visible (or opaque) to UE.

First, a base station that supports the SBFD configures all UEs based on TDD uplink-downlink slot configuration information. For example, an uplink-downlink slot configuration is DDDSU, where S is a special slot, S includes a flexible symbol, and the flexible symbol is used only for a GP in the special slot. Then, the base station that supports the SBFD notifies UE having an SBFD capability of a time-frequency location of each subband, and allows uplink subbands to be configured on downlink symbols of a downlink slot and a special slot. Therefore, the downlink slot and the special slot configured with the uplink subbands are SBFD slots. In this solution, the UE having the SBFD capability can clearly learn the time-frequency location of each subband. Compared with Manner 1, Manner 2 has better flexibility in terms of frequency resource scheduling, frequency guard interval configuration, channel state information (Channel State Information, CSI) measurement reporting, and the like. However, additional signaling is required to notify the UE having the SBFD capability of time-frequency locations of the uplink and downlink subbands, increasing signaling overheads. In this method, the UE is visible to uplink and downlink subbands configured on the downlink symbol, that is, the UE knows frequency resource locations of the uplink and downlink subbands, and the UE performs downlink transmission on the downlink subband of the downlink symbol, and performs uplink transmission on the uplink subband of the downlink symbol.

It should be noted that the indication manner in Manner 1 is applicable to all the UEs. Manner 2 is applicable to the UE having the SBFD capability, but not to UE that does not have the SBFD capability.

9. Multi-slot (Multi-slot) PUSCH: The multi-slot PUSCH includes a PUSCH repetition type A (PUSCH repetition type A), a PUSCH repetition type B (PUSCH repetition type B), and a transport block processing over multiple slots (transport block processing over multiple slots, TBoMS) PUSCH. The multi-slot PUCCH includes a PUCCH repetition (PUCCH repetition).

The following provides an implementation process of transmitting a multi-slot PUSCH/PUCCH on a TDD spectrum.

Step 1: Determine a time domain resource.

There are two methods for determining a multi-slot PUSCH/PUCCH time domain resource: a physical-slot counting method and an available-slot counting method. The following describes the two technical methods in detail.

The 1st slot counting method is the physical-slot counting method.

A physical slot may be understood as a slot defined in an NR frame structure. Each physical slot is included in a slot count of the multi-slot PUSCH/PUCCH. For example, as shown in FIG. 3, a TDD uplink-downlink slot configuration is DDSUU, the network device indicates that a total quantity of slots of the multi-slot PUSCH/PUCCH is 4, and a start slot is a 4th slot (namely, a 1st U slot) in DDSUU. In this case, each slot starting from the slot is included in the slot count of the multi-slot PUSCH/PUCCH until a quantity of included slots reaches the total quantity 4 of slots indicated by the network device. In other words, according to the method, the 4th slot to an 8th slot in FIG. 3 are included in the slot count of the multi-slot PUSCH/PUCCH. Then, it needs to be further determined, according to collision rules (collision rules), whether the multi-slot PUSCH/PUCCH can be transmitted in the slots that are included in the slot count of the multi-slot PUSCH/PUCCH. For example, the collision rules include: If a symbol included in the slot count of the multi-slot PUSCH/PUCCH overlaps a downlink symbol in a semi-static configuration (tdd-UL-DL-ConfigurationCommon and tdd-UL-DL-Configuration-Dedicated), even if the symbols partially overlap, transmission of the multi-slot PUSCH/PUCCH in a slot in which the overlapped symbols are located is canceled. As shown in FIG. 3, a 5th slot and a 6th slot are downlink slots, and overlap with the symbol included in the slot count of the multi-slot PUSCH/PUCCH. Therefore, in this method, the multi-slot PUSCH/PUCCH can be transmitted only in the 4th slot and the 5th slot.

The 2nd slot counting method is the available-slot counting method.

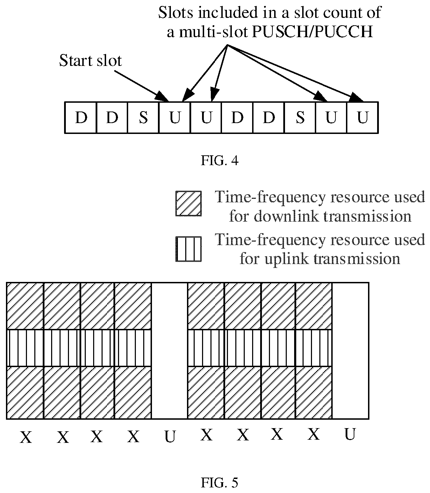

An available slot is determined based on a cell-level uplink-downlink configuration (tdd-UL-DL-ConfigurationCommon), a UE-level uplink-downlink configuration (tdd-UL-DL-ConfigurationDedicated), an SSB burst position (ssb-PositionsInBurst), and time domain resource allocation (time domain resource allocation, TDRA) information indicated by DCI. Specifically, in a slot, if at least one symbol in a symbol set allocated in a row in a TDRA table indicated by the DCI overlaps a downlink symbol indicated by tdd-UL-DL-Configuration-Common or tdd-UL-DL-ConfigurationDedicated (if configured), or overlaps an SSB symbol indicated by ssb-PositionsInBurst, the slot is not an available slot, and is not included in a slot count of the multi-slot PUSCH/-PUCCH; otherwise, the slot is an available slot, and is included in the slot count of the multi-slot PUSCH/-PUCCH. For example, as shown in FIG. 4, a TDD uplink-downlink configuration is DDSUU, the network device indicates that a total quantity of slots of the multi-slot PUSCH/PUCCH is 4, and a start slot is a 4th slot (namely, a 1st U slot) in DDSUU. There is no SSB symbol in a time domain resource shown in FIG. 4, there is no uplink symbol in the S slot, and a symbol D in the S slot overlaps a symbol in the TDRA table. In this case, starting from the 4th slot, only an uplink slot is included in the slot count of the multi-slot PUSCH/PUCCH until a quantity of included slots reaches the total quantity 4 of slots indicated by the network device. Therefore, in this method, the multi-slot PUSCH/PUCCH may be transmitted in the 4th slot, a 5th slot, a 9th slot, and a 10th slot (namely, all uplink slots in FIG. 4) shown in FIG. 4.

For example, a multi-slot PUSCH/PUCCH that supports physical-slot-based counting includes a PUSCH repetition type A and a PUCCH repetition. A multi-slot PUSCH/PUCCH that supports available-slot-based counting includes a PUSCH repetition type A and a transport block processing over multiple slots PUSCH repetition (TBoMS PUSCH repetition).

Step 2: Determine a frequency domain resource.

It should be understood that, a quantity of frequency resources allocated to the multi-slot PUSCH/-PUCCH in each slot of the time domain resource determined in step 1 is consistent, that is, a quantity of resource elements (resource element, RE) allocated to each slot is the same.

Step 3: Determine an information bit quantity $N_{info}$. It should be understood that $N_{info}$ calculation is an intermediate step of transport block size (transport block size, TBS) calculation. This step relates to only the PUSCH, and does not relate to the PUCCH.

A process of calculating $N_{info}$ of bits transmitted on the PUSCH repetition type A/B (Rel-15/16) is specifically subject to content in section 5.1.3.2 and section 6.1.4.2 of 38.214, and is briefly described herein as follows:

(1) The UE determines a quantity $N_{RE}'$ of REs allocated to the PUSCH for transmission in a PRB corresponding to a slot, where $N_{RE}'$ meets the following formula:

$$N_{RE}' = N_{sc}^{RB} * N_{symb}^{sh} - N_{DMRS}^{PRB} - N_{oh}^{PRB}$$

Herein, $N_{sc}^{RB} = 12$ indicates a quantity of subcarriers in the PRB, $N_{symb}^{sh}$ indicates a quantity of symbols allocated to the PUSCH for transmission in the slot, $N_{DMRS}^{PRB}$ indicates a quantity of REs occupied by a DMRS that is in the PRB in a time range for scheduling PUSCH transmission and that includes overheads of a demodulation reference signal (demodulation reference signal, DMRS)-reference signal (reference signal, RS) CDM group but does not include data, and $N_{oh}^{PRB}$ indicates a quantity of REs configured by using a higher layer parameter.

(2) The UE determines a total quantity $N_{RE}$ of REs allocated to the PUSCH for transmission in a slot, where $N_{RE}$ meets the following formula:

$$N_{RE} = \min\left(156, N_{RE}'\right) * n_{PRB}$$

Herein, $n_{PRB}$ indicates a quantity of allocated PRBs.

(3) A quantity $N_{info}$ of non-quantized temporary information bits meets the following formula:

$$N_{info} = N_{RE} * R * Q_m * v$$

Herein, R indicates a code rate, $Q_m$ indicates a modulation order, and v indicates a quantity of multiple-input multiple-output (multiple-input multiple-output, MIMO) layers.

In addition, $N_{info}$ of bits transmitted on a TBoMS PUSCH meets the following formula:

$$N_{info} = K * N_{RE} * R * Q_m * v$$

Herein, $K$ indicates a quantity of slots of the TBoMS PUSCH, $N_{RE}$ is a total quantity of REs allocated to the PUSCH for transmission in a slot, R indicates a code rate, $Q_m$ indicates a modulation order, and v indicates a quantity of multiple-input multiple-output (multiple-input multiple-output, MIMO) layers. It should be noted that K indicates a quantity of slots for one TBoMS PUSCH transmission, instead of a total quantity of slots for a plurality of TBoMS PUSCH transmissions.

Step 4: Transmit the multi-slot PUSCH/PUCCH on a determined time-frequency resource based on $N_{info}$.

In addition, currently, a solution for transmitting a multi-slot PUSCH/PUCCH on SBFD is proposed: A multi-slot PUSCH/PUCCH can be transmitted only in an SBFD slot or an uplink slot, and cannot be simultaneously transmitted in the SBFD slot and the uplink slot. As shown in FIG. 5, X is an SBFD slot, U is an uplink slot, and a multi-slot PUSCH/PUCCH can be transmitted only on a time-frequency resource that is in the X slot and that is used for uplink transmission, or can be transmitted only in a U slot. First, for the transparent subband indication manner, it is assumed that an uplink-downlink slot configuration is DXXXU. According to the available-slot counting method or the physical-slot counting method, X and U may be used to simultaneously transmit one multi-slot PUSCH/-PUCCH. In other words, the solution for transmitting a multi-slot PUSCH/PUCCH on SBFD cannot be implemented by using the existing available-slot counting method and physical-slot counting method. In addition, it can be learned from the foregoing that, according to the existing collision rules, the multi-slot PUSCH/PUCCH cannot be sent in a slot that includes a downlink symbol and that is included in the slot count of the multi-slot PUSCH/PUCCH. Therefore, for the non-transparent subband indication manner, all symbols in an SBFD slot are downlink symbols. Consequently, the multi-slot PUSCH/PUCCH cannot be transmitted on an uplink subband of the downlink symbol, resulting in a transmission resource waste. Similarly, based on the existing available-slot counting method, a slot that is in a symbol set allocated in a row in the TDRA table and that includes a downlink symbol is not an available slot. Consequently, for the non-transparent subband indication, the multi-slot PUSCH/PUCCH cannot be transmitted on an uplink subband of the downlink symbol. Therefore, how to implement the currently proposed solution for transmitting a multi-slot PUSCH/PUCCH on SBFD becomes a problem to be urgently resolved currently.

In view of this, this application provides an uplink transmission method, to effectively resolve the foregoing technical problem. The following describes in detail the method provided in this application.

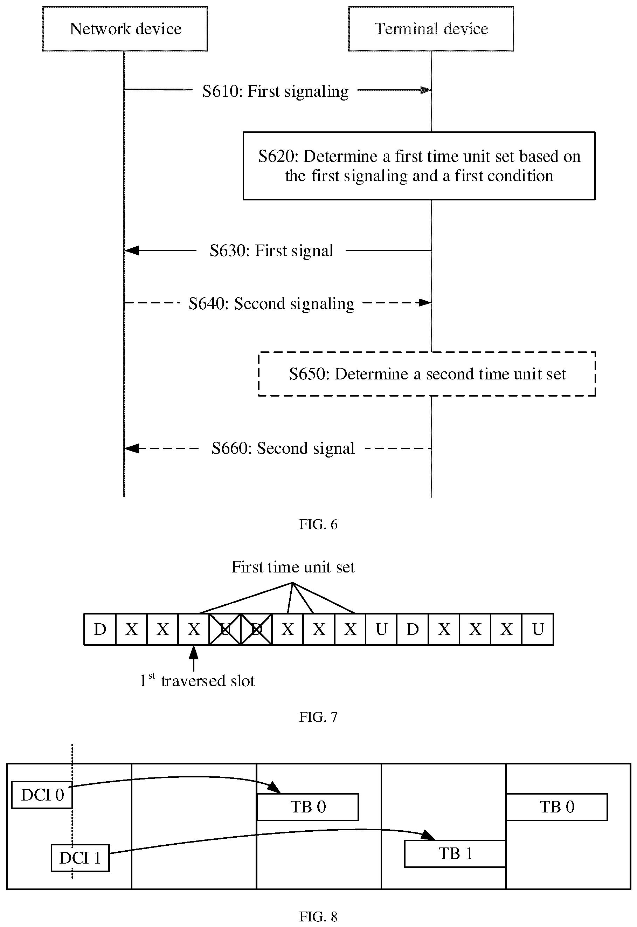

As shown in FIG. 6, FIG. 6 is a schematic flowchart of an uplink transmission method according to this application. It should be understood that the method may be considered as a specific implementation of transmitting a multi-slot PUSCH/PUCCH on SBFD based on an existing available-slot counting method. The method includes the following steps.

S610: A network device sends first signaling to a terminal device. Correspondingly, the terminal device receives the first signaling from the network device.

The first signaling indicates the terminal device to send a first signal on a first time unit set, the first signaling carries indication information of N1 and K1, N1 is a quantity of time units in the first time unit set, K1 indicates a first reference time unit, the first signal is carried on a first PUSCH or a first PUCCH, and N1 is an integer greater than 1.

That the first signaling carries indication information of N1 and K1 may be understood as that the first signaling carries indication information of N1 and indication information of K1.

For example, the first signaling is DCI.

For example, the first signal is carried on a PUSCH repetition type A or a TBoMS PUSCH repetition.

S620: The terminal device determines the first time unit set based on the first signaling and a first condition.

The terminal device determines the first time unit set by using the available-slot counting method. In this case, the first time unit set is a set of N1 time units, starting from the first reference time unit, that are closest to the first reference time unit and that do not meet the first condition, and the first condition includes: A time unit type of a first time unit is different from a first time unit type, the first time unit type is an uplink time unit or an SBFD time unit, and the first time unit is a time unit traversed from the first reference time unit.

It should be noted that, that the first time unit set is a set of N1 time units, starting from the first reference time unit, that are closest to the first reference time unit and that do not meet a first condition may also be understood as that the first time unit set is a set of N1 time units that are closest to the first reference time unit and that do not meet the first condition and that are determined by traversing the first reference time unit and each time unit after the first reference time unit.

It should be further noted that the first time unit is a time unit traversed from the first reference time unit, and the first time unit herein may be the first reference time unit.

It should be understood that the method for determining the first time unit set is applicable to both a terminal device that supports a transparent subband indication and a terminal device that supports a non-transparent subband indication. This is not limited in this application.

Optionally, when a time unit type of the first reference time unit is an uplink time unit or a subband non-overlapping full duplex SBFD time unit, the first time unit type is the time unit type of the first reference time unit.

Optionally, when a time unit type of the first reference time unit is a downlink time unit, the first time unit type is a time unit type of a second time unit, and the second time unit is a $1^{st}$ time unit that is after the first reference time unit and whose time unit type is not the downlink time unit. For example, if the $1^{st}$ time unit that is after the first reference time and that is not a downlink time unit is an uplink time unit, the first time unit type is the uplink time unit.

Optionally, the first time unit type is indicated by the first signaling. For example, one column may be added to a TDRA table, and the column may be 1 bit (0 or 1), to indicate whether the first time unit type is the uplink time unit or the SBFD time unit.

Optionally, the first signaling further includes a first frequency range, and the first frequency range is a frequency range for sending the first signal. If the first frequency range is not completely included in a frequency range of an uplink subband in the SBFD time unit, the first time unit type is the uplink time unit; otherwise, the first time unit type is the SBFD time unit. For example, the SBFD time unit herein is a $1^{st}$ time unit after the first reference time unit or any SBFD time unit. For example, if the first reference time unit is an SBFD time unit, the SBFD time unit herein may also be the first reference time unit.

It should be noted that in this method, because the terminal device needs to know location information of the uplink subband in the SBFD time unit, the method is applicable to the terminal device that supports the non-transparent subband indication.

With reference to FIG. 7, the following uses an example to describe how to determine the first time unit set.

As shown in FIG. 7, an uplink-downlink slot configuration of the terminal device is DXXXU, X is an SBFD slot, N1=4, the first reference time unit is a $4^{th}$ slot in the figure, and the first time unit type is an SBFD slot. In this case, based on the first condition, each slot starting from the $4^{th}$ slot is traversed to determine whether a currently traversed slot can be included in the first time unit set. Specifically, the $4^{th}$ slot is an X slot (namely, an SBFD slot), and therefore, the $4^{th}$ slot is included in the first time unit set; a $5^{th}$ slot is a U slot, and therefore, the $5^{th}$ slot is not included in the first time unit set; a $6^{th}$ slot is a D slot, and therefore, the $6^{th}$ slot is not included in the first time unit set; and by analogy, $7^{th}$, $8^{th}$, and $9^{th}$ slots are X slots, and therefore, the $7^{th}$, $8^{th}$, and $9^{th}$ slots are included in the first time unit set. In this case, a quantity of slots in the first time unit set meets N1=4, and the terminal device no longer performs traversal, and finally determines that the first time unit includes the $4^{th}$ slot, the $7^{th}$ slot, the $8^{th}$ slot, and the $9^{th}$ slot in the figure.

S630: The terminal device sends the first signal to the network device on the first time unit set. Correspondingly, the network device receives the first signal from the terminal device on the first time unit set.

It should be understood that the same method is used by the network device and the terminal device to determine the first time unit type, and then determine the first time unit set. For a specific determining process, refer to the foregoing descriptions. Details are not described herein again.

It can be learned that, in this method, the first condition is added, so that the solution for transmitting a multi-slot PUSCH/PUCCH on SBFD can be implemented. To be specific, the multi-slot PUSCH/PUCCH can be transmitted only in an SBFD slot or an uplink slot, and cannot be simultaneously transmitted in the SBFD slot and the uplink slot. When the network device indicates a non-transparent subband to the terminal device, that is, when the terminal device is visible to the subband, if the first time unit is an uplink time unit, the terminal device may further transmit the multi-slot PUSCH/PUCCH on an uplink subband of a downlink symbol (namely, an SBFD time unit), to improve resource utilization.

Optionally, the method further includes the following steps.

S640: The network device sends second signaling to the terminal device. The second signaling indicates the terminal device to send a second signal on a second time unit set, the second signaling carries indication information of N2 and K2, N2 is a quantity of time units in the second time unit set, K2 indicates a second reference time unit, the second signal is carried on a second PUSCH or a second PUCCH, a time unit type of a time unit in the second time unit set is different from a time unit type of a time unit in the first time unit set, and a start time unit of the second time unit set is after a start time unit of the first time unit set and before an end time unit of the first time unit set. Correspondingly, the terminal device receives the second signaling from the network device.

That the second signaling carries indication information of N2 and K2 may be understood as that the second signaling carries indication information of N2 and indication information of K2.

It should be understood that, that a time unit type of a time unit in the second time unit set is different from a time unit type of a time unit in the first time unit set indicates that the second time unit set and the first time unit set do not overlap in time domain.

For example, the second signaling is DCI.

For example, the second signal is a PUSCH repetition type A, a PUSCH repetition type B, a PUCCH repetition, a TBoMS PUSCH, or a TBoMS PUSCH repetition.

S650: The terminal device determines the second time unit set.

It should be understood that the second time unit set may be determined based on a second time unit type and the second signaling. A second time unit is the uplink time unit or the SBFD time unit, and the second time unit type is different from the first time unit type. A specific determining manner is the same as that of the first time unit set, and details are not described herein again.

S660: The terminal device sends the second signal to the network device on the second time unit set. Correspondingly, the network device receives the second signal from the terminal device on the second time unit set.

As shown in FIG. 8, second DCI is sent after first DCI, the first DCI is used to schedule the first PUSCH, the second DCI is used to schedule the second PUSCH, the first PUSCH carries a TB 0, and the second PUSCH carries a TB 1. It can be learned that a start time for sending the first PUSCH is earlier than a start time for sending the second PUSCH. Because an existing protocol does not allow out-of-order scheduling, the second PUSCH is not allowed to be sent before sending of the first PUSCH ends. However, in this application, the start time unit of the second time unit set is located in the first time unit set, so that the first signal and the second signal can be scheduled out of order. For example, the first time unit set includes the SBFD time unit shown in FIG. 5, and the second time unit set includes the uplink time unit shown in FIG. 5. In this case, the first signal may be transmitted in the first time unit set, and the second signal may be transmitted in the second time unit set. The second signal does not need to be transmitted after the first signal is transmitted. Therefore, out-of-order scheduling is implemented, and a waiting time for signal transmission is reduced.

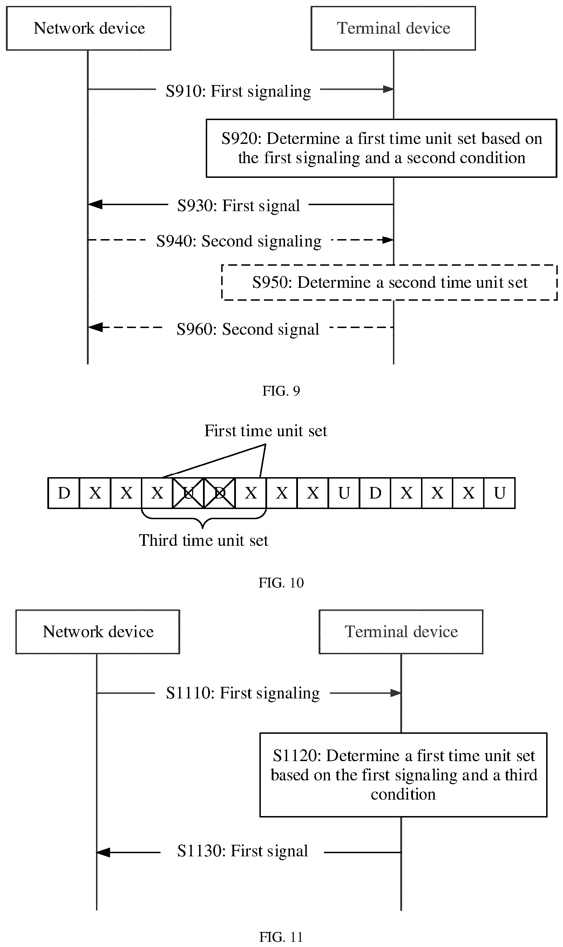

As shown in FIG. 9, FIG. 9 is a schematic flowchart of another uplink transmission method according to this application. It should be understood that the method may be considered as a specific implementation of transmitting a multi-slot PUSCH/PUCCH on SBFD based on an existing physical-slot counting method. The method includes the following steps.

S910: A network device sends first signaling to a terminal device. Correspondingly, the terminal device receives the first signaling from the network device.

The first signaling indicates the terminal device to send a first signal on a first time unit set, the first signaling carries indication information of N1 and K1, N1 is a quantity of reference time units, K1 indicates a first reference time unit, the first signal is carried on a first PUSCH or a first PUCCH, and N1 is an integer greater than 1.

That the first signaling carries indication information of N1 and K1 may be understood as that the first signaling carries indication information of N1 and indication information of K1.

For example, the first signaling is DCI.

For example, the first signal is carried on a PUSCH repetition type A or a PUCCH repetition.

S920: The terminal device determines the first time unit set based on the first signaling and a second condition.

The terminal device determines the first time unit set by using the available-slot counting method. In this case, the first time unit set is a set of time units in a third time unit set other than a time unit that meets the second condition, the third time unit set includes N1 consecutive time units including the first reference time unit and a time unit after the first reference time unit, and the second condition includes: A time unit type of a third time unit is different from a first time unit type, the first time unit type is an uplink time unit or a subband non-overlapping full duplex SBFD time unit, and the third time unit is a time unit in the third time unit set. For a manner of determining the first time unit type, refer to the descriptions of S620. Details are not described herein again.

It should be understood that the method for determining the first time unit set is applicable to both a terminal device that supports a transparent subband indication and a terminal device that supports a non-transparent subband indication. This is not limited in this application.

With reference to FIG. 10, the following uses an example to describe how to determine the first time unit set. As shown in FIG. 10, an uplink-downlink slot configuration of the terminal device is DXXXU, X is an SBFD slot, N1=4, the first reference time unit is a $4^{th}$ slot in the figure, and the first time unit type is an SBFD slot. In this case, the third time unit set is N1=4 consecutive slots including the $4^{th}$ slot. In other words, the third time unit set includes the $4^{th}$ slot, a $5^{th}$ slot, a $6^{th}$ slot, and a $7^{th}$ slot. Then, the first time unit set is determined based on the third time unit set and the second condition. Specifically, the $4^{th}$ slot is an X slot (namely, an SBFD slot), and therefore, the $4^{th}$ slot belongs to the first time unit set; the $5^{th}$ slot is a U slot, and therefore, the $5^{th}$ slot does not belong to the first time unit set; the $6^{th}$ slot is a D slot, and therefore, the $6^{th}$ slot does not belong to the first time unit set; and the $7^{th}$ slot is an X slot, and therefore, the $7^{th}$ slot belongs to the first time unit set. The finally determined first time unit includes the $4^{th}$ slot and the $7^{th}$ slot in the figure.

For descriptions of S930 to S950, refer to the descriptions of S630 to S650. Details are not described herein again.

It can be learned that, the second condition is added, so that the solution for transmitting a multi-slot PUSCH/PUCCH on SBFD can be implemented. To be specific, the multi-slot PUSCH/PUCCH can be transmitted only in an SBFD slot or an uplink slot, and cannot be simultaneously transmitted in the SBFD slot and the uplink slot. When the network device indicates a non-transparent subband to the terminal device, that is, when the terminal device is visible to the subband, if the first time unit is an uplink time unit, the terminal device may further transmit the multi-slot PUSCH/PUCCH on an uplink subband of a downlink symbol (namely, an SBFD time unit), to improve resource utilization.

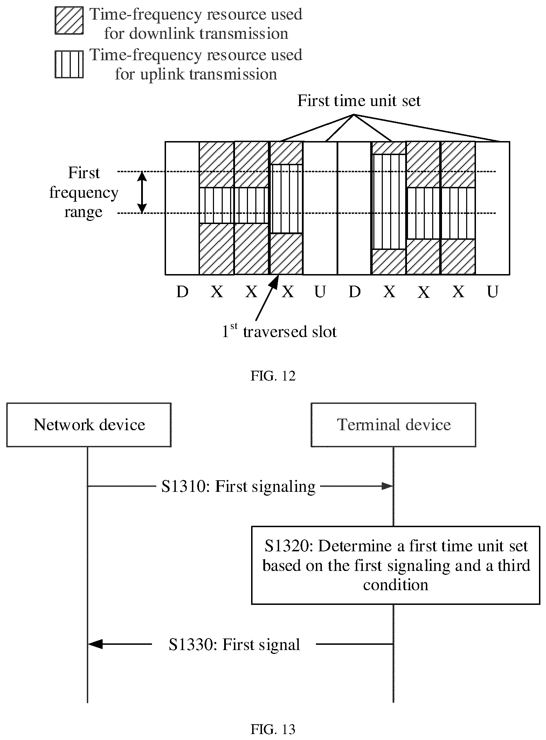

In addition, this application further provides another solution for transmitting a multi-slot PUSCH/-PUCCH on SBFD. To be specific, a multi-slot PUSCH/-PUCCH may be simultaneously transmitted in an uplink time unit and an SBFD time unit. However, when the first signal is transmitted in an SBFD time unit, a frequency range of an uplink subband in the SBFD time unit needs to completely cover a frequency range for sending the first signal. Otherwise, the multi-slot PUSCH/PUCCHSBFD cannot be transmitted on the SBFD. The following describes an implementation process of the solution in detail with reference to FIG. 11 and FIG. 13.

It should be understood that, in an implementation process of this solution, the terminal device needs to know location information of the uplink subband in the SBFD time unit. Therefore, this implementation is applicable to the terminal device that supports the non-transparent subband indication.

As shown in FIG. 11, FIG. 11 is a schematic flowchart of another uplink transmission method according to this application. It should be understood that the method may be considered as a specific implementation of transmitting a multi-slot PUSCH/PUCCH on SBFD based on an existing available-slot counting method. The method includes the following steps. The method includes the following steps.

S1110: A network device sends first signaling to a terminal device. The first signaling indicates the terminal device to send a first signal on a first time unit set. The first signaling carries indication information of N1, K1, and a first frequency range, N1 is a quantity of time units in the first time unit set, K1 indicates a first reference time unit, the first frequency range is a frequency range for sending the first signal, and the first signal is carried on a first PUSCH or a first PUCCH. Correspondingly, the terminal device receives the first signaling from the network device, where N1 is an integer greater than 1.

That the first signaling carries indication information of N1, K1, and a first frequency range may be understood as that the first signaling carries indication information of N1, indication information of K1, and indication information of the first frequency range.

S1120: The terminal device determines the first time unit set based on the first signaling and a third condition.

The first time unit set is a set of N1 time units, starting from the first reference time unit, that are closest to the first reference time unit and that include an uplink time unit and a subband non-overlapping full duplex SBFD time unit that does not meet the third condition, and the third condition includes: The first frequency range includes a frequency out of a second frequency range, the second frequency range is a frequency range of an uplink subband in a first SBFD time unit, and the first SBFD time unit is an SBFD time unit traversed from the first reference time unit.

It should be understood that the first SBFD time unit is an SBFD time unit traversed from the first reference time unit. When the first reference time unit is an SBFD time unit, the first SBFD time unit may be the first reference time unit.

It should be further understood that locations of uplink subbands in SBFD time units traversed from the first reference time unit are not limited in this application.

The locations of the uplink subbands in these SBFD time units may be the same or may be different. For example, when the locations of the uplink subbands in these SBFD time units are the same, if the first frequency range overlaps a frequency range of a downlink subband in the SBFD time unit, the first time unit does not include the SBFD time unit.

With reference to FIG. 12, the following uses an example to describe how to determine the first time unit set. For example, an uplink-downlink slot configuration of the terminal device is DXXXU, X is an SBFD slot, N1=4, the first reference time unit is a 4th slot in the figure, and the first frequency range and a range of an uplink subband in each SBFD slot are shown in FIG. 12. In this case, each slot starting from the 4th slot is traversed to determine whether a currently traversed slot can be included in the first time unit set. Specifically, the 4th slot is an X slot. Because an uplink subband in the SBFD slot completely covers the first frequency range, the SBFD slot is included in the first time unit set. A 5th slot is a U slot, and therefore, the 5th slot is included in the first time unit set. A 6th slot is a D slot, and therefore, the 6th slot is not included in the first time unit set. A 7th slot is an SBFD slot. Because an uplink subband in the SBFD slot completely covers the first frequency range, the SBFD slot is included in the first time unit set. An 8th slot and a 9th slot are SBFD slots. Because uplink subbands in the SBFD slots do not completely cover the first frequency range, or the first frequency range overlaps frequency ranges of downlink subbands in the SBFD time units, the two SBFD slots are not included in the first time unit set. A 10th slot is a U slot, and therefore, the 10th slot is included in the first time unit set. In this case, a quantity of slots in the first time unit set meets N1=4, and the terminal device no longer performs traversal, and finally determines that the first time unit includes the 4th slot, the 5th slot, the 7th slot, and the 10th slot in the figure.

S1130: The terminal device sends the first signal to the network device on the first time unit set. Correspondingly, the network device receives the first signal from the terminal device on the first time unit set.

It should be understood that the same method is used by the network device and the terminal device to determine the first time unit set. A specific determining process is not described herein again.

It can be learned from the foregoing that, when the network device indicates a non-transparent subband to the terminal device, all symbols in the SBFD time unit are downlink symbols. In this method, the first signal may be transmitted by using the SBFD time unit that meets the third condition, to improve resource utilization of the downlink symbol.

As shown in FIG. 13, FIG. 13 is a schematic flowchart of another uplink transmission method according to this application. It should be understood that the method may be considered as a specific implementation of transmitting a multi-slot PUSCH/PUCCH on SBFD based on an existing physical-slot counting method.

The method includes the following steps.

S1310: A network device sends first signaling to a terminal device. The first signaling indicates the terminal device to send a first signal on a first time unit set. The first signaling carries indication information of N1, K1, and a first frequency range, N1 is a quantity of reference time units, K1 indicates a first reference time unit, the first frequency range is a frequency range for sending the first signal, and the first signal is carried on a first PUSCH or a first PUCCH. Correspondingly, the terminal device receives the first signaling from the network device, where N1 is an integer greater than 1.

That the first signaling carries indication information of N1, K1, and a first frequency range may be understood as that the first signaling carries indication information of N1, indication information of K1, and indication information of the first frequency range.

S1320: The terminal device determines the first time unit set based on the first signaling and a third condition.

The first time unit set is a set of time units in a third time unit set other than a time unit that meets the third condition, the third time unit set includes N1 consecutive time units including the first reference time unit and a subsequent time unit, and the third condition includes: The first frequency range includes a frequency out of a second frequency range, the second frequency range is a frequency range of an uplink subband in a first SBFD time unit, and the first SBFD time unit is an SBFD time unit in the third time unit set.

Optionally, frequency ranges of uplink subbands in SBFD times included in the third time unit may be the same, or may be partially the same, or may be completely different. This is not limited in this application.

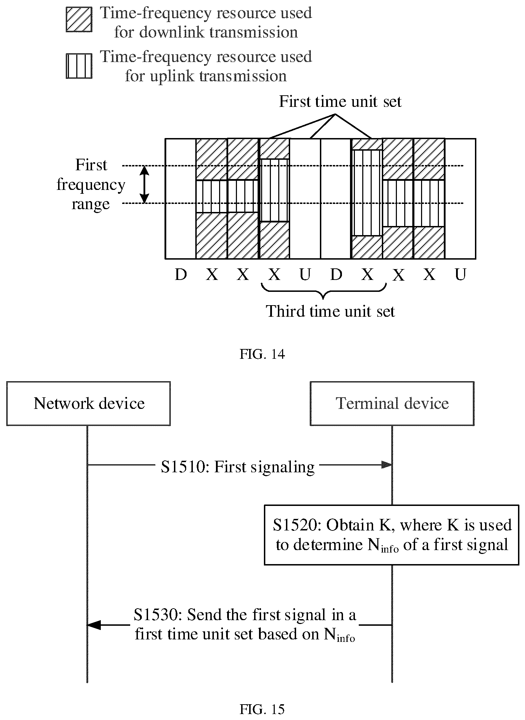

With reference to FIG. 14, the following uses an example to describe how to determine the first time unit set. For example, an uplink-downlink slot configuration of the terminal device is DXXXU, X is an SBFD slot, N1=4, the first reference time unit is a 4th slot in the figure, and the first frequency range and a range of an uplink subband in each SBFD slot are shown in FIG. 14. In this case, the third time unit set is N1=4 consecutive slots including the 4th slot. In other words, the third time unit set includes the 4th slot, a 5th slot, a 6th slot, and a 7th slot. Then, the first time unit set is determined based on the third time unit set and the second condition. Specifically, the 4th slot is an X slot. Because an uplink subband in the SBFD slot completely covers the first frequency range, the SBFD slot is included in the first time unit set. The 5th slot is a U slot, and therefore, the 5th slot is included in the first time unit set. The 6th slot is a D slot, and therefore, the 6th slot is not included in the first time unit set. The 7th slot is an SBFD slot. Because an uplink subband in the SBFD slot completely covers the first frequency range, the SBFD slot is included in the first time unit set. The finally determined first time unit includes the 4th slot, the 5th slot, and the 7th slot in the figure.

S1330: The terminal device sends the first signal to the network device on the first time unit set. Correspondingly, the network device receives the first signal from the terminal device on the first time unit set.

It should be understood that the same method is used by the network device and the terminal device to determine the first time unit set. A specific determining process is not described herein again.

It can be learned from the foregoing that, when the network device indicates a non-transparent subband to the terminal device, all symbols in the SBFD time unit are downlink symbols. In this method, the first signal may be transmitted by using the SBFD time unit that meets the third condition, to improve resource utilization of the downlink symbol.

It should be understood that when a consistent quantity of frequency resources are allocated to each time unit in the first time unit set in FIG. 11 and FIG. 13, that is, a same quantity of REs are used to transmit the first signal in each time unit, the terminal device and the network device may determine N_info based on a quantity of REs used to transmit the first signal in one time unit, and then transmit the first signal in the first time unit set based on N_info. For a specific calculation process, refer to the descriptions of step 3 in the implementation process of transmitting a multi-slot PUSCH/PUCCH on a TDD spectrum.

However, because the same quantity of frequency resources are scheduled for the first signal in each time unit, another resource that is in the uplink time unit and that is not used to send the first signal is wasted. Therefore, to improve resource utilization of the uplink time unit, different frequency resources may be allocated to the first signal in the uplink time unit and the SBFD time unit. However, in the first time unit sets in FIG. 11 and FIG. 13, when a quantity of REs used to transmit the first signal in an uplink time unit is greater than a quantity of REs used to transmit the first signal in an SBFD time unit, for example, the first signal is carried on a PUSCH repetition type A, if $N_{info}$ of the first signal is determined by using the quantity of REs used to transmit the first signal in the SBFD time unit, it can be learned from the foregoing descriptions that, $N_{info}$ meets $N_{info}=K*_{NRE\_F}*R*Q_m*v$, an actual code rate is small, and a communication rate is affected; or if $N_{info}$ of the first signal is determined by using the quantity of REs used to transmit the first signal in the uplink time unit, $N_{info}$ meets $N_{info}=K*N_{RE\_U}*R*Q_m*v$, an actual code rate is large, and communication reliability is affected.

In view of this, this application provides an uplink transmission method, to effectively resolve the foregoing technical problem. The following provides detailed descriptions with reference to FIG. 15.

As shown in FIG. 15, FIG. 15 is a schematic flowchart of another uplink transmission method according to this application. The method includes the following steps.

S1501: A network device sends first signaling to a terminal device. The first signaling indicates the terminal device to send a first signal on a first time unit set, the first signal is carried on a first PUSCH, the first time unit set includes $N_U$ uplink time units and $N_F$ SBFD time units, and $N_F$ and $N_U$ are positive integers. Correspondingly, the terminal device receives the first signaling from the network device.

Optionally, the first signaling is DCI. A format (format) of the DCI is a new DCI format.

For example, the first signal is carried on a PUSCH repetition type A or a PUSCH repetition type B.

S1502: The terminal device obtains K.

K is used to determine $N_{info}$ of the first signal, K is greater than 0, and $N_{info}$ meets the following formula:

$$N_{info}=K*N_{RE}*R*Q_m*v$$

Herein, $N_{RE}$ is a quantity of resource elements REs allocated to the first signal in an SBFD time unit or an uplink time in the first time unit set, R is a code rate, $Q_m$ indicates a modulation order, and v indicates a quantity of MIMO layers.

For example, when $N_{RE}$ is a quantity of REs used by the first signal in the SBFD time unit, $K=(N_{RE\_F}*N_F+N_{RE\_U}*N_U)/(N_F+N_U)/N_{RE\_F}$. Herein, $N_{RE\_F}$ is a quantity of REs used by the first signal in an SBFD time unit in the first time unit set, and $N_{RE\_U}$ is a quantity of REs used by the first signal in an uplink time unit in the first time unit set.

For example, when $N_{RE}$ is a quantity of REs used by the first signal in the uplink time unit, $K=(N_{RE\_F}*N_F+N_{RE\_U}*N_U)/(N_F+N_U)/N_{RE\_U}$.

It should be understood that, a value of K is not specifically limited in this application, provided that the value of K can make, to an extent, a calculation result of $N_{info}$ have better effect than a calculation result of $N_{info}$ on which the value of K is not used for correction.

For example, when $N_{RE}$ is a quantity of REs used by the first signal in the SBFD time unit, $1<K\leq(N_{RE\_F}*N_F+N_{RE\_U}*N_U)/(N_F+N_U)/N_{RE\_F}$.

For example, when $N_{RE}$ is a quantity of REs used by the first signal in the uplink time unit, $(N_{RE\_F}*N_F+N_{RE\_U}*N_U)/(N_F+N_U)/N_{RE\_U}\leq K<1$.

Optionally, the terminal device obtains the value of K from the first signaling.

Optionally, the terminal device determines the value of K based on an obtained parameter. When the terminal device needs to determine the value of K by itself, the network device may notify the terminal device of $N_{RE\_F}$ and $N_{RE\_U}$ by using the first signaling. The following provides examples for description.

For example, the first signaling includes a first frequency range and a second frequency range, the first frequency range is a frequency range for sending the first signal in the SBFD time unit, and the second frequency range is a frequency range for sending the first signal in the uplink time unit. It should be understood that the quantity $N_{RE\_F}$ of REs used by the first signal in the SBFD time unit may be determined based on the frequency range for sending the first signal in the SBFD time unit. Similarly, the quantity $N_{RE\_U}$ of REs used by the first signal in the uplink time unit may be determined based on the frequency range for sending the first signal in the uplink time unit.

It should be noted that, in this example, it is necessary for the network device to configure the first frequency range and the second frequency range for a terminal device that supports a non-transparent subband indication, because the terminal device is invisible to a subband location, and the value of K can be determined only based on a configuration of the network device. However, it is optional for the network device to configure the first frequency range and the second frequency range for a terminal device that supports a transparent subband indication.

For example, the first signaling includes a second frequency range, the second frequency range is a frequency range for sending the first signal in the uplink time unit, and the method further includes: When the second frequency range includes a frequency out of a third frequency range, the terminal device determines that $N_{RE\_F}$ is a quantity of REs corresponding to a frequency range that is of the second frequency range and that is within the third frequency range, where the third frequency range is a frequency range of an uplink subband in a first SBFD time unit, and the first SBFD time unit is an SBFD time unit in the first time unit set. In other words, the network device may configure, for the terminal device, only one frequency range for sending the first signal. The terminal device may determine, based on the configured frequency range, the quantity $N_{RE\_U}$ of REs used by the first signal in the uplink time unit. The terminal device may further determine, based on the configured frequency range, a range that is on the uplink subband in the SBFD time unit and that includes the range, and then determine, based on the range on the uplink subband in the SBFD time unit, the quantity $N_{RE\_F}$ of REs used by the first signal in the SBFD time unit. It should be understood that, in this example, the terminal device needs to know a location of the uplink subband in the SBFD time unit. Therefore, this example is applicable to the terminal device that supports the non-transparent subband indication.

S1503: The terminal device sends the first signal to the network device on the first time unit set based on $N_{info}$. Correspondingly, the network device receives the first signal from the terminal device on the first time unit set.

It should be understood that the network device and the terminal device determine the same $N_{info}$. A specific determining process is not described herein again.

Optionally, system bits corresponding to the first signal are included in a redundancy version (redundancy version, RV) 0. To ensure that the system bits can be completely sent, because the second frequency range is larger, the RV 0 is transmitted in the uplink time unit of the first time unit.

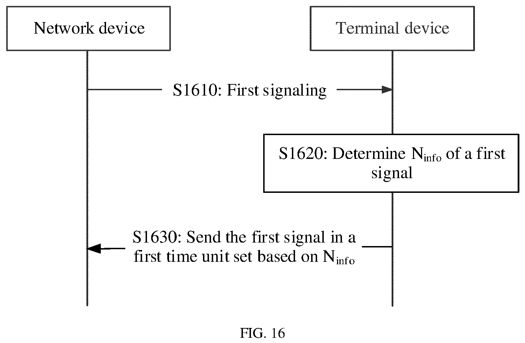

As shown in FIG. 16, FIG. 16 is a schematic flowchart of another uplink transmission method according to this application. The method includes the following steps.

S1601: A network device sends first signaling to a terminal device. The first signaling indicates the terminal device to send a first signal on a first time unit set, the first signal is carried on a first PUSCH, the first time unit set includes $N_U$ uplink time units and $N_F$ SBFD time units, and $N_F$ and $N_U$ are positive integers. Correspondingly, the terminal device receives the first signaling from the network device.

Optionally, the first signaling is DCI. A format (format) of the DCI is a new DCI format.

For example, the first signal is a TBoMS PUSCH.

S1602: The terminal device determines $N_{info}$ of the first signal, where $N_{into}$ meets the following formula:

$$N_{info}=(N_{RE\_F}*N_F+N_{RE\_U}*N_U)*R*Q_m*v$$

Herein, $N_{RE\_F}$ is a quantity of REs used by the first signal in an SBFD time unit in the first time unit set, $N_{RE\_U}$ is a quantity of REs used by the first signal in an uplink time unit in the first time unit set, R is a code rate, $Q_m$ indicates a modulation order, and v indicates a quantity of multiple-input multiple-output MIMO layers.

Optionally, the network device may notify the terminal device of $N_{RE\_F}$ and $N_{RE\_U}$ by using the first signaling, so that the terminal device calculates $N_{info}$. For obtaining of $N_{RE\_F}$ and $N_{RE\_U}$, refer to the descriptions of S1502. Details are not described herein again.

For S1603, refer to the descriptions of S1503. Details are not described herein again.

It can be learned from the foregoing that, in the methods shown in FIG. 15 and FIG. 16, when frequency resources allocated to the first signal in the SBFD time unit and the uplink time unit are different, a method for determining an actual value of $N_{info}$ in this scenario is provided. In this method, an actual code rate of the first signal is closer to a target code rate, so that the first signal has a better transmission rate and reliability. In this scenario, the frequency resources allocated to the first signal in the SBFD time unit and the uplink time unit are different, to improve resource utilization of the uplink time unit.

The following specifically describes how to use a PUSCH repetition type B to implement the currently proposed solution for transmitting a multi-slot PUSCH/PUCCH on SBFD. For ease of understanding, the following first describes a concept and a procedure related to the PUSCH repetition type B.

First, the network device may indicate, to the terminal device, time domain resources of a plurality of nominal PUSCHs in the PUSCH repetition type B, and the time domain resources of the plurality of nominal PUSCH repetitions are consecutive in time domain and have an equal length. Specifically, the network device may indicate, to the terminal device, a quantity K of nominal PUSCH repetitions, a start symbol S of a time domain resource of a 1st nominal PUSCH repetition, and a quantity L of symbols included in one nominal PUSCH repetition. A quantity L of symbols included in each nominal PUSCH repetition is the same, where $0 \le S \le 13$, and $1 \le L \le 14$, so that S+L can be greater than 14. Starting from a 2nd nominal PUSCH repetition, a start symbol of a time domain resource of a nominal PUSCH repetition is a symbol following an end symbol of a time domain resource of a previous nominal PUSCH repetition.

Then, the terminal device determines an invalid symbol (invalid symbol) in a time domain resource of each nominal PUSCH repetition, where remaining symbols may be considered as potentially valid symbols. Currently, the terminal device may determine, in the following manners, whether a symbol in a time domain resource of a nominal PUSCH repetition is an invalid symbol.

(1) A downlink symbol semi-statically configured by using a higher layer parameter tdd-UL-DL-ConfigurationCommon or tdd-UL-DL-ConfigurationDedicated is an invalid symbol.
(2) A high layer parameter InvalidSymbolPattern is used to configure a symbol-level bitmap (bitmap). If a bit value is 1, a corresponding symbol is an invalid symbol.
(3) When a DCI format 0_1 or 0_2 is used to schedule a PUSCH repetition, or a second-type grant-free PUSCH repetition is activated, and a 1-bit invalid symbol pattern indication information field is configured in DCI, if a value of the invalid symbol pattern indication information field is 1, the terminal device applies an invalid symbol pattern; otherwise, the terminal ignores the invalid symbol pattern. If the DCI does not include the invalid symbol pattern indication information field, the terminal device directly applies the invalid symbol pattern based on a configuration of the higher layer parameter InvalidSymbolPattern. The invalid symbol pattern indication information field is independently configured for different DCI formats.

Then, if a quantity of potentially valid symbols that are consecutive (consecutiveness herein means that a quantity of potentially valid symbols that are consecutive is the largest) in a slot for a nominal PUSCH repetition is greater than 0, one actual PUSCH repetition may be mapped. A time domain resource of one nominal PUSCH repetition may include time domain resources of one or more actual PUSCH repetitions. The terminal device does not send a PUSCH repetition on an actual PUSCH repetition of a single symbol, unless duration L of a nominal PUSCH repetition indicated by the base station is a single symbol.

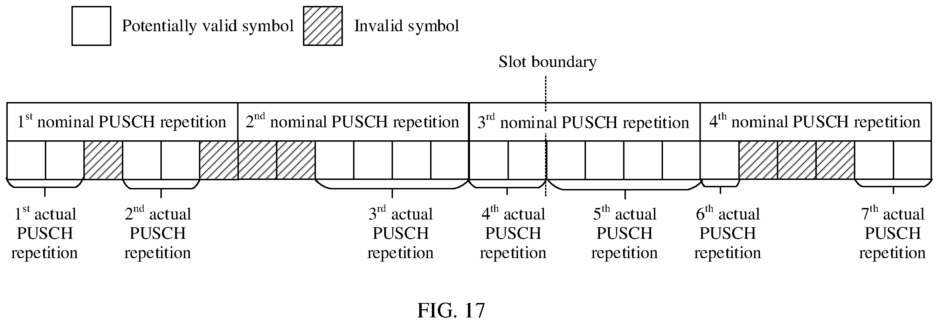

FIG. 17 is a diagram of PUSCH repetition type B-based transmission. As shown in FIG. 17, K=4, and L=6 symbols. To be specific, the network device indicates four nominal PUSCH repetitions to the terminal device, and each nominal PUSCH repetition includes six symbols. An invalid symbol, in a time domain resource of each nominal PUSCH repetition, that is determined based on the foregoing manner of determining an invalid symbol is shown in FIG. 17. Symbols other than the invalid symbols are potentially valid symbols, and all the potentially valid symbols herein are uplink symbols. It may be considered that potentially valid symbols that are consecutive and whose quantity is the largest in one slot in the time domain resource of each nominal PUSCH repetition are a time domain resource of one actual PUSCH repetition. Specifically, for an actual PUSCH repetition mapped in each nominal PUSCH repetition, refer to division in FIG. 17. Details are not described herein again. However, it should be noted that, because there is a slot boundary (the slot boundary is a boundary point of two slots) in a time domain resource of a 3rd nominal PUSCH repetition, the 3rd nominal PUSCH repetition is divided and mapped to two actual PUSCH repetitions based on the slot boundary, which are respectively a 4th actual PUSCH repetition and a 5th actual PUSCH repetition. In addition, two actual PUSCH repetitions, namely, a 6th actual PUSCH repetition and a 7th actual PUSCH repetition, are mapped in a 4th nominal PUSCH repetition. Because a time domain resource of the 6th actual PUSCH repetition is a single symbol, and L is not equal to 1, the terminal device does not send a PUSCH repetition on the time domain resource of the 6th actual PUSCH repetition.

After the SBFD solution is introduced, the potentially valid symbols may include both an uplink symbol and an SBFD symbol. Therefore, how to use the PUSCH repetition type B to implement the currently proposed solution for transmitting a multi-slot PUSCH on SBFD becomes a problem to be urgently resolved currently.

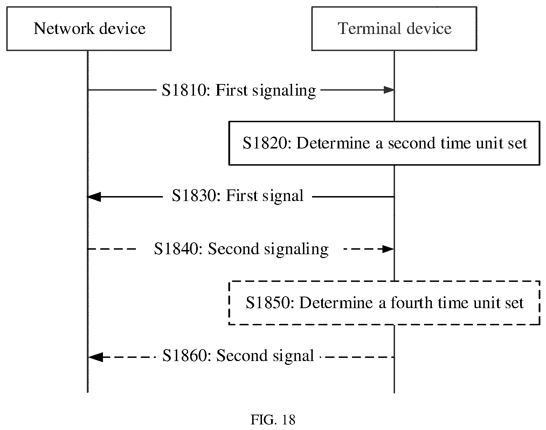

With reference to FIG. 18, the following describes how to use the PUSCH repetition type B to implement the currently proposed solution for transmitting a multi-slot PUSCH on SBFD.

As shown in FIG. 18, FIG. 18 is a schematic flowchart of another uplink transmission method according to this application. The method includes the following steps.

S1810: A network device sends first signaling to a terminal device. Correspondingly, the terminal device receives the first signaling from the network device.

The first signaling indicates the terminal device to send a first signal on K consecutive first time unit sets, the first time unit set is a time unit set for a nominal PUSCH repetition, and the first signal is carried on a PUSCH repetition type B. The first signaling carries first indication information and second indication information, the first indication information indicates a first reference time unit, the first reference time unit is a start time unit of the K first time unit sets, and the second indication information indicates a quantity of time units included in the K first time unit sets.

It may be understood that the first time unit set is a time unit set corresponding to a time domain resource of one nominal PUSCH repetition, and K is a quantity of nominal PUSCH repetitions. In this case, the first indication information may include a start time unit S of a time domain resource of a 1st nominal PUSCH repetition, the second indication information indicates a quantity of time units included in time domain resources of the K nominal PUSCH repetitions, and the second indication information may include the quantity K of nominal PUSCH repetitions and a quantity L of symbols included in one nominal PUSCH repetition.

For example, the first signaling is DCI or RRC.

For example, the time unit in this application is a symbol.

S 1820: The terminal device determines a second time unit set.

The second time unit set is a set of time units other than a third time unit in the K first time unit sets, the third time unit includes a time unit of a first time unit type, the first time unit type is an uplink time unit or an SBFD time unit, and the first time unit type is determined based on the first reference time unit.

It may be understood that the third time unit herein is an invalid time unit in the time domain resources of the K nominal PUSCH repetitions. Compared with existing descriptions of an invalid time unit, in this embodiment of this application, a new manner of determining an invalid time unit is added. In this manner, the terminal device determines that all time units of the first time unit type in a time domain resource of each nominal PUSCH repetition are invalid time units.

It may be understood that the second time unit set may be considered as a set of potentially valid time units other than the invalid times in the time domain resources of the K nominal PUSCH repetitions. Potentially valid symbols in a nominal PUSCH repetition are all symbols in the nominal PUSCH repetition except an invalid symbol in the nominal PUSCH repetition.

It should be understood that the method for determining the second time unit set is applicable to both a terminal device that supports a transparent subband indication and a terminal device that supports a non-transparent subband indication. This is not limited in this application.

Optionally, when a time unit type of the first reference time unit is the uplink time unit, the first time unit type is the SBFD time unit.

Optionally, when a time unit type of the first reference time unit is the SBFD time unit, the first time unit type is the uplink time unit.

Optionally, when a time unit type of the first reference time unit is a downlink time unit, the first time unit type is determined based on a time unit type of a second time unit, and the second time unit is a 1st time unit that is after the first reference time unit and whose time unit type is not the downlink time unit.

Optionally, when the time unit type of the second time unit is the uplink time unit, the first time unit type is the SBFD time unit.

Optionally, when the time unit type of the second time unit is the SBFD time unit, the first time unit type is the uplink time unit.

Optionally, the first time unit type is the time unit type of the second time unit.

Optionally, the first signaling further includes indication information of a first frequency range, and the first frequency range is a frequency range for sending the first signal. If a time unit type of the first reference time unit is the SBFD time unit, and the first frequency range is not completely included in a frequency range of an uplink subband in the SBFD time unit, the first time unit type is the SBFD time unit; otherwise, the first time unit type is the uplink time unit.

It should be noted that in the implementation method, because the terminal device needs to know location information of the uplink subband in the SBFD time unit, the method is applicable to the terminal device that supports the non-transparent subband indication.

Optionally, the first signaling may further include third indication information, and the third indication information includes the first time unit type. In this way, the terminal device does not need to determine the first time unit type, and directly determines the second time unit set based on the first time unit type indicated by the network device.

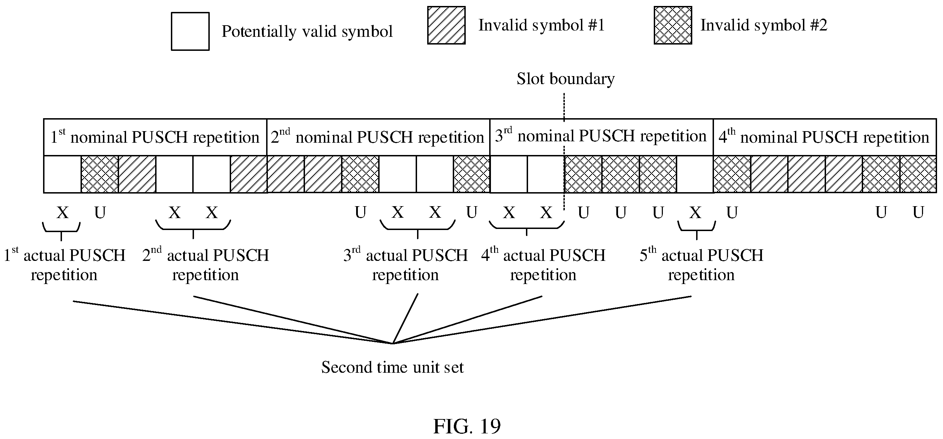

With reference to FIG. 19, the following uses an example to describe how to determine the second time unit set (that is, determine the set of potentially valid time units other than the invalid time units in the time domain resources of the K nominal PUSCH repetitions). For ease of description, in this embodiment of this application, any invalid time unit determined based on the existing manner of determining an invalid time unit is referred to as an invalid time unit #1, and any invalid time unit determined based on the newly added manner of determining an invalid time unit is referred to as an invalid time unit #2.

FIG. 19 is a diagram of determining the second time unit set. As shown in FIG. 19, K=4, and L=6 symbols. To be specific, the network device indicates four nominal PUSCH repetitions to the terminal device, and each nominal PUSCH repetition includes six symbols. FIG. 19 may be considered as that the invalid symbol in the time domain resource of each nominal PUSCH repetition continues to be determined based on FIG. 17 and the newly added manner of determining an invalid symbol in S1820. Specifically, as shown in FIG. 19, an invalid symbol #1 in the time domain resource of each of the K nominal PUSCH repetitions is the same as the invalid symbol in FIG. 17, and remaining symbols other than the invalid symbols #1 in the time domain resources of the K nominal PUSCH repetitions are successively XUXXUXXUXXUUUXUUU, where U is an uplink symbol, and X is an SBFD symbol. For example, a start symbol in a time domain resource of a 1st nominal PUSCH repetition in the four nominal PUSCH repetitions is an SBFD symbol. Therefore, the newly added manner of determining an invalid symbol in S 1820 is as follows: If an uplink symbol in the time domain resource of each nominal PUSCH repetition is an invalid symbol, the terminal device determines that all remaining uplink symbols in symbols other than the invalid symbols #1 in the time domain resources of the K nominal PUSCH repetitions are invalid symbols #2. In this case, the second time set is symbols other than the invalid symbols #1 and the invalid symbols #2 in the time domain resources of the K nominal PUSCH repetitions.

S1830: The terminal device repeatedly sends the first signal to the network device on the second time unit set or a subset of the second time unit set. Correspondingly, the network device receives the first signal from the terminal device on the second time unit set or the subset of the second time unit set.

Specifically, the terminal device determines, based on the second time unit set, a time domain resource that is of an actual PUSCH repetition and that is included in the time domain resource of each of the K nominal PUSCH repetitions. A time domain resource of an actual PUSCH repetition is a set of consecutive (consecutiveness herein refers to longest consecutiveness) time units in potentially valid symbols in a time domain resource of a nominal PUSCH repetition in a slot. If L is equal to 1, the terminal device repeatedly sends the first signal on time domain resources of all actual PUSCH repetitions in the K nominal PUSCH repetitions. If L is greater than 1, the terminal device repeatedly sends the first signal on time domain resources of all actual PUSCH repetitions except an actual PUSCH repetition of a first type in the K nominal PUSCH repetitions. A time domain resource of the actual PUSCH repetition of the first type includes one time unit. The following uses an example to describe how the terminal device determines, based on the second time unit set, the time domain resource that is of the actual PUSCH repetition and that is included in the time domain resource of each of the K nominal PUSCH repetitions.

For example, as shown in FIG. 19, a time domain resource of a 1st actual PUSCH repetition is one time unit in a potentially valid symbol in a time domain resource of a 1st nominal PUSCH repetition in one slot in the second time unit set, a time domain resource of 2nd actual PUSCH repetition is a set of two consecutive time units in a potentially valid symbol in the time domain resource of the 1st nominal PUSCH repetition in one slot in the second time unit set, a time domain resource of a 3rd actual PUSCH repetition is a set of two consecutive time units in a potentially valid symbol in a time domain resource of 2nd nominal PUSCH repetition in one slot in the second time unit set, a time domain resource of a 4th actual PUSCH repetition is a set of two consecutive time units in a potentially valid symbol in a time domain re-

source of a 3rd nominal PUSCH repetition in one slot in the second time unit set, and a time domain resource of a 5th actual PUSCH repetition is one time unit in a potentially valid symbol in the time domain resource of the 3rd nominal PUSCH repetition in one slot in the second time unit set. It should be noted that, because the time domain resources of the 1st actual PUSCH repetition and the 5th actual PUSCH repetition are single symbols, and L (L=6) is not equal to 1, the terminal device repeatedly sends the first signal on the time domain resources of the 2nd actual PUSCH repetition, the 3rd actual PUSCH repetition, and the 4th actual PUSCH repetition, but does not send the first signal on the time domain resources of the 1st actual PUSCH repetition and the 5th actual PUSCH repetition.

It should be further understood that the same method is used by the network device and the terminal device to determine the first time unit type, and then determine the second time unit set. For a specific determining process, refer to the foregoing descriptions. Details are not described herein again.

It can be learned that, in this method, in the existing manner of determining an invalid time unit, the new manner of determining an invalid time unit is added. In this manner, the terminal device determines that all uplink time units in the time domain resource of each nominal PUSCH repetition are invalid times, or the terminal device determines that all SBFD time units in the time domain resource of each nominal PUSCH repetition are invalid times. In this method, the solution for transmitting a PUSCH repetition of a repetition type B on an SBFD can be implemented. To be specific, the PUSCH repetition type B can be transmitted only in an SBFD slot or an uplink slot, and cannot be simultaneously transmitted in the SBFD slot and the uplink slot.

Optionally, the method further includes the following steps.

S1840: The network device sends second signaling to the terminal device. Correspondingly, the terminal device receives the second signaling from the network device.

The second signaling indicates the terminal device to send a second signal on the K consecutive first time unit sets, and the second signal is carried on a PUSCH repetition of a repetition type B.

It should be understood that time unit types of time units for sending the first information and the second signal are different.

For example, the second signaling is DCI or RRC.

S1850: The terminal device determines a fourth time unit set.

The fourth time unit set is a set of time units other than a fifth time unit in the K first time unit sets, the fifth time unit includes a time unit of a second time unit type, the second time unit type is the uplink time unit or the SBFD time unit, and the second time unit type is different from the first time unit type.

It may be understood that the fifth time unit herein is an invalid time unit in the time domain resources of the K nominal PUSCH repetitions. Compared with existing descriptions of an invalid time unit, in this embodiment of this application, a new manner of determining an invalid time unit is added. In this manner, the terminal device determines that all time units of the second time unit type in a time domain resource of each nominal PUSCH repetition are invalid time units.

Optionally, the second signaling may carry third indication information, and the third indication information indicates the second time unit type.

Optionally, the second signaling does not carry the third indication information, and the terminal device may determine the second time unit type based on the first time unit type. For example, if the first time unit type is the SBFD time unit, the second time unit type is the uplink time unit; and vice versa.

S1860: The terminal device sends the second signal to the network device on the fourth time unit set or a subset of the fourth time unit set. Correspondingly, the network device receives the second signal from the terminal device on the fourth time unit set or the subset of the fourth time unit set.

Specifically, the terminal device determines, based on the fourth time unit set, a time domain resource that is of an actual PUSCH repetition and that is included in the time domain resource of each nominal PUSCH repetition. If L is equal to 1, the terminal device repeatedly sends the second signal on time domain resources of all actual PUSCH repetitions in the K nominal PUSCH repetitions. If L is greater than 1, the terminal device repeatedly sends the second signal on time domain resources of all actual PUSCH repetitions except an actual PUSCH repetition of a first type in the K nominal PUSCH repetitions. A time domain resource of the actual PUSCH repetition of the first type includes one time unit.

An existing protocol does not allow out-of-order scheduling, that is, does not allow to send the second signal before sending of the first signal ends. In this method, the first signal may be transmitted in the second time unit set, and the second signal may be transmitted in the fourth time unit set. In this case, when a start time unit of a time domain resource that is of a 1st actual PUSCH repetition and that is determined based on the fourth time unit set is after a start time unit of a time domain resource that is of a 1st actual PUSCH repetition and that is determined based on the second time unit set, and before an end time unit of a time domain resource that is of a last actual PUSCH repetition and that is determined based on the second time unit set, the second signal does not need to be transmitted after transmission of the first signal ends, so that out-of-order scheduling is implemented, and a waiting time for signal transmission is reduced.

Optionally, the second signaling in S1840 may alternatively be changed to that the second signaling indicates the terminal device to send the second signal in K consecutive sixth time unit sets, the second signal is carried on the PUSCH repetition of the repetition type B, the sixth time unit set is a time domain resource of a nominal PUSCH repetition, and the sixth time unit set is different from the first time unit set. In subsequent steps, only the first time unit set needs to be replaced with the sixth time unit set. Details are not described herein again.

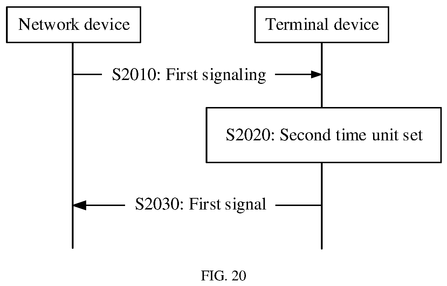

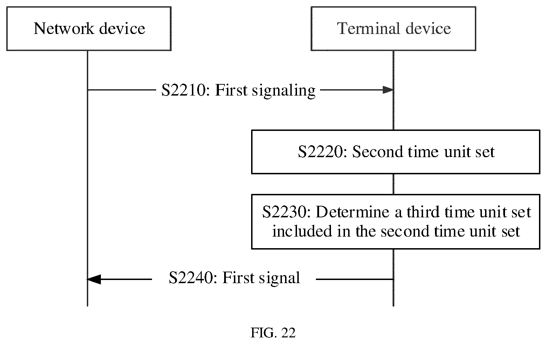

In addition, this application further provides another solution for transmitting a multi-slot PUSCH repetition on SBFD. To be specific, a multi-slot PUSCH repetition may be simultaneously transmitted in an uplink time unit and an SBFD time unit. However, when the first signal is transmitted in an SBFD time unit, a frequency range of an uplink subband in the SBFD time unit needs to completely cover the frequency range for sending the first signal. Otherwise, the multi-slot PUSCH repetition SBFD cannot be transmitted on the SBFD. With reference to FIG. 20 and FIG. 22, the following describes in detail a process of how to use the PUSCH repetition type B to implement the foregoing transmission solution.

As shown in FIG. 20, FIG. 20 is a schematic flowchart of another uplink transmission method according to this application. The method includes the following steps.

S2010: A network device sends first signaling to a terminal device. Correspondingly, the terminal device receives the first signaling from the network device.

The first signaling indicates the terminal device to send a first signal on K consecutive first time unit sets, the first time unit set is a time unit set for a PUSCH repetition, the first signal is carried on a PUSCH repetition type B, the first signaling carries first indication information, second indication information, and indication information of a first frequency range, the first indication information indicates a first reference time unit, the first reference time unit is a start time unit of the K first time unit sets, the second indication information indicates a quantity of time units included in the K first time unit sets, and the first frequency range is a frequency range for sending the first signal.

For descriptions of the first signaling, refer to the descriptions of S1810. Details are not described herein again.

S2020: The terminal device determines a second time unit set.

The second time unit set is a set of time units other than a third time unit in the K first time unit sets, the third time unit includes an SBFD time unit that meets a third condition in the K first time unit sets, and the third condition includes: The first frequency range includes a frequency out of a second frequency range, and the second frequency range is a frequency range of an uplink subband in the SBFD time unit.

It may be understood that the third time unit herein is an invalid time unit in the time domain resources of the K nominal PUSCH repetitions. Compared with existing descriptions of an invalid time unit, in this embodiment of this application, a new manner of determining an invalid time unit is added. In this manner, an SBFD time unit that meets the third condition in a time domain resource of each nominal PUSCH repetition is an invalid time unit.

It may be understood that the second time unit set may be considered as a set of potentially valid time units other than the invalid times in the time domain resources of the K nominal PUSCH repetitions.

It should be noted that in the implementation method, because the terminal device needs to know location information of the uplink subband in the SBFD time unit, the method is applicable to the terminal device that supports the non-transparent subband indication.

It should be understood that locations of uplink subbands in SBFD time units in the K first time unit sets are not limited in this application. The locations of the uplink subbands in these SBFD time units may be the same or may be different. For example, when the locations of the uplink subbands in these SBFD time units are the same, if the first frequency range overlaps a frequency range of a downlink subband or a guard band in the SBFD time unit, the second time unit set does not include the SBFD time unit.

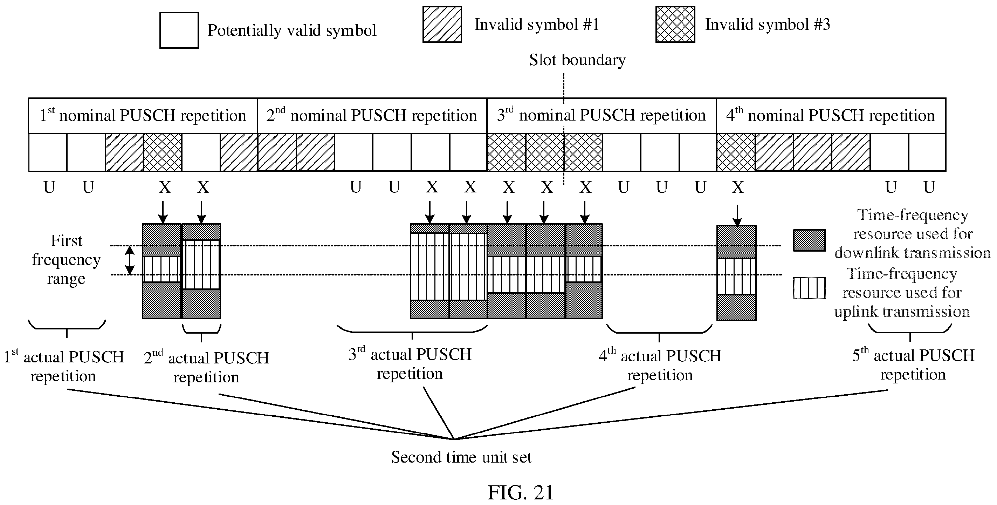

With reference to FIG. 21, the following uses an example to describe how to determine the second time unit set (that is, determine a time unit set corresponding to potentially valid time units other than invalid time units in the time domain resources of the K nominal PUSCH repetitions). For ease of description, in this embodiment of this application, any invalid time unit determined based on the existing manner of determining an invalid time unit is referred to as an invalid time unit #1, and any invalid time unit determined based on the newly added manner of determining an invalid time unit is referred to as an invalid time unit #3.

FIG. 21 is a diagram of determining the second time unit set. As shown in FIG. 21, K=4, and L=6 symbols. To be specific, the network device indicates four nominal PUSCH repetitions to the terminal device, and each nominal PUSCH repetition includes six symbols. FIG. 21 may be considered as that the invalid symbol in the time domain resource of each nominal PUSCH repetition continues to be determined based on FIG. 17 and the newly added manner of determining an invalid symbol in S2020. Specifically, as shown in FIG. 21, an invalid symbol #1 in the time domain resource of each of the K nominal PUSCH repetitions is the same as the invalid symbol in FIG. 17, and remaining symbols other than the invalid symbols #1 in the time domain resources of the K nominal PUSCH repetitions are successively UUXXUUXXXXXUUUXUU, where U is an uplink symbol, X is an SBFD symbol, and locations of an uplink subband and a downlink subband on each SBFD symbol are shown in FIG. 21. It can be learned that frequency ranges of downlink subbands on a $3^{rd}$ symbol, a $9^{th}$ symbol to an $11^{th}$ symbol, and a $15^{th}$ symbol (the $3^{rd}$ symbol, the $9^{th}$ symbol to the $11^{th}$ symbol, and the $15^{th}$ symbol are all SBFD symbols) in UUXXUUXXXXXUUUXUU partially or completely overlaps a first frequency (that is, a frequency range of an uplink subband on the three symbols cannot completely cover the first frequency range). Therefore, based on the newly added manner of determining an invalid symbol in S2020, if an SBFD time unit that meets the third condition in the time domain resource of each nominal PUSCH repetition is an invalid time unit, the terminal device determines that the $3^{rd}$ symbol, the $9^{th}$ symbol to the $11^{th}$ symbol, and the $15^{th}$ symbol in UUXXUUXXXXXUUUXUU are all invalid symbols #3. In this case, the second time unit set is symbols other than the invalid symbols #1 and the invalid symbols #2 in the time domain resources of the K nominal PUSCH repetitions.

S2030: The terminal device sends the first signal to the network device on the second time unit set or a subset of the second time unit set. Correspondingly, the network device receives the first signal from the terminal device on the second time unit set or the subset of the second time unit set.

Specifically, the terminal device determines, based on the second time unit set, a time domain resource that is of an actual PUSCH repetition and that is included in the time domain resource of each of the K nominal PUSCH repetitions. A time domain resource of an actual PUSCH repetition is a set of consecutive (consecutiveness herein refers to longest consecutiveness) time units in potentially valid symbols in a time domain resource of a nominal PUSCH repetition in a slot. If L is equal to 1, the terminal device repeatedly sends the first signal on time domain resources of all actual PUSCH repetitions in the K nominal PUSCH repetitions. If L is greater than 1, the terminal device repeatedly sends the first signal on time domain resources of all actual PUSCH repetitions except an actual PUSCH repetition of a first type in the K nominal PUSCH repetitions. A time domain resource of the actual PUSCH repetition of the first type includes one time unit. The following uses an example to describe how the terminal device determines, based on the second time unit set, the time domain resource that is of the actual PUSCH repetition and that is included in the time domain resource of each of the K nominal PUSCH repetitions.

For example, as shown in FIG. 21, a time domain resource of a $1^{st}$ actual PUSCH repetition is a set of two consecutive (uplink) time units in a potentially valid symbol in a time domain resource of a $1^{st}$ nominal PUSCH repetition in one slot in the second time unit set, a time domain resource of a $2^{nd}$ actual PUSCH repetition is one (SBFD) time unit in a potentially valid symbol in the time domain resource of the $1^{st}$ nominal PUSCH repetition in one slot in the second time unit set, a time domain resource of a $3^{rd}$ actual PUSCH repetition is a set of four consecutive time units (two uplink time units and two SBFD time units) in a potentially valid symbol in a time domain resource of a $2^{nd}$ nominal PUSCH repetition in one slot in the second time unit set, a time domain resource of a $4^{th}$ actual PUSCH repetition is a set of three consecutive (uplink) time units in a potentially valid symbol in a time domain resource of a $3^{rd}$ nominal PUSCH repetition in one slot in the second time unit set, and a time domain resource of a 5th actual PUSCH repetition is a set of two consecutive (uplink) time units in a potentially valid symbol in a time domain resource of a 4th nominal PUSCH repetition in one slot in the second time unit set. It should be noted that, because the time domain resource of the 2nd actual PUSCH repetition is a single symbol, and L (L=6) is not equal to 1, the terminal device repeatedly sends the first signal on the time domain resources of the 1st actual PUSCH repetition and the 3rd actual PUSCH repetition to the 5th actual PUSCH repetition, but does not send the first signal on the time domain resource of the 2nd actual PUSCH repetition.

It should be understood that the same method is used by the network device and the terminal device to determine the second time unit set, and the network device receives the first signal from the terminal device on the second time unit set or the subset of the second time unit set. A specific determining process is not described herein again.

In the foregoing technical solution, when the network device indicates a non-transparent subband to the terminal device, that is, when the terminal device is visible to the subband, the SBFD time unit is a downlink time unit, and the terminal device may use, in the time domain resource of each of the K nominal PUSCH repetitions, an uplink symbol other than an invalid symbol and an SBFD time unit that does not meet the third condition, to transmit the first signal, so as to improve resource utilization of the downlink time unit.

As shown in FIG. 22, FIG. 22 is a schematic flowchart of another uplink transmission method according to this application. The method includes the following steps.

S2210: A network device sends first signaling to a terminal device. Correspondingly, the terminal device receives the first signaling from the network device.

The first signaling indicates the terminal device to send a first signal on K consecutive first time unit sets, the first time unit set is a time unit set for a nominal PUSCH repetition, and the first signal is carried on a PUSCH repetition type B. The first signaling carries first indication information and second indication information, the first indication information indicates a first reference time unit, the first reference time unit is a start time unit of the K first time unit sets, and the second indication information indicates a quantity of time units included in the K first time unit sets.

For descriptions of the first signaling, refer to the descriptions of S 1810. Details are not described herein again.

S2220: The terminal device determines a second time unit set.

The second time unit set is a set of time units other than an invalid time unit in the K first time unit sets, and K is a positive integer.

It may be understood that the second time unit set may be considered as a set of potentially valid time units other than the invalid times in the time domain resources of the K nominal PUSCH repetitions. For a manner of determining an invalid time unit in this embodiment, refer to the descriptions of the existing manner of determining an invalid time unit. Details are not described herein again.

S2230: The terminal device determines a third time unit set included in the second time unit set.

Specifically, the second time unit set includes M third time unit sets, M is a positive integer, each third time unit set is associated with one actual PUSCH repetition, and the third time unit set is a set of consecutive (consecutiveness herein refers to longest consecutiveness) time units whose time unit types are the same in a potentially valid symbol in a slot in one nominal repeated transmission. It should be understood that the time unit type herein is an uplink time unit type or an SBFD time unit type.

The third time unit set is a first-type third time unit set or a second-type third time unit set, all time units in the first-type third time unit are uplink time units, all time units in the second-type third time unit set are subband non-overlapping full duplex SBFD time units, and the second time unit set includes the first-type third time unit set and the second-type third time unit set.

It should be understood that the method for determining the second time unit set is applicable to both a terminal device that supports a transparent subband indication and a terminal device that supports a non-transparent subband indication. This is not limited in this application.

S2240: The terminal device repeatedly sends the first signal to the network device on all or a part of third time unit sets in the K first time unit sets. Correspondingly, the network device receives the first signal from the terminal device on all or the part of third time unit sets in the K first time unit sets.

Specifically, if L is equal to 1, the terminal device repeatedly sends the first signal on time domain resources of all actual PUSCH repetitions (namely, all the third time unit sets) in the K nominal PUSCH repetitions. If L is greater than 1, the terminal device repeatedly sends the first signal on time domain resources of all actual PUSCH repetitions except an actual PUSCH repetition of a first type in the K nominal PUSCH repetitions. A time domain resource of the actual PUSCH repetition of the first type includes one time unit. In other words, the terminal device repeatedly sends the first signal on third time unit sets other than a third time unit set that includes only one time unit in all the third time unit sets. In other words, in this method, if the time domain resources of the K nominal PUSCH repetitions include the first-type third time unit set and the second-type third time unit set, the terminal device may repeatedly send the first signal on the first-type third time unit set and the second-type third time unit.

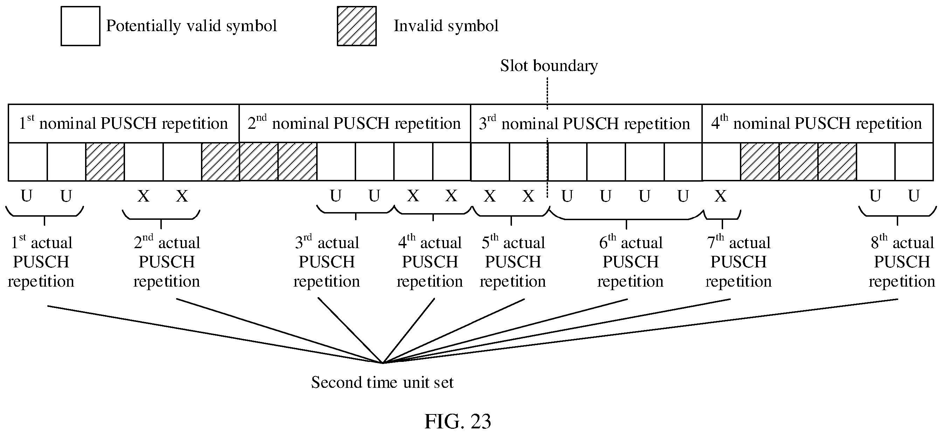

With reference to FIG. 23, the following uses an example to describe how to determine the third time unit set. As shown in FIG. 23, K=4, and L=6 symbols. To be specific, the network device indicates four nominal PUSCH repetitions to the terminal device, and each nominal PUSCH repetition includes six symbols. Specifically, as shown in FIG. 23, an invalid symbol in the time domain resource of each of the K nominal PUSCH repetitions is the same as the invalid symbol in FIG. 17. In this case, the second time unit set is symbols other than the invalid times in the time domain resources of the K nominal PUSCH repetitions, and the symbols in the second time unit set are successively UUXXUUXXXXUUUUXUU, where U is an uplink symbol, and X is an SBFD symbol. Then, the terminal device determines, based on the second time unit set, a time domain resource of an actual PUSCH repetition in each of the K nominal PUSCH repetitions (that is, determines the third time unit set), where potentially valid symbols of a same symbol type that are consecutive and whose quantity is the largest in the time domain resource of each nominal PUSCH repetition in one slot are a time domain resource of an actual PUSCH repetition. Specifically, for an actual PUSCH repetition mapped in each nominal PUSCH repetition, refer to division in FIG. 23. Details are not described herein again. It should be noted that, because a time domain resource of a 7$^{th}$ actual PUSCH repetition is a single symbol, and L (L=6) is not equal to 1, the terminal device repeatedly sends the first signal on time domain resources of a 1$^{st}$ actual PUSCH repetition to a 6$^{th}$ actual PUSCH repetition and an 8$^{th}$ actual PUSCH repetition, but does not send the first signal on the time domain resource of the 7$^{th}$ actual PUSCH repetition.

In the foregoing technical solution, the terminal device may use, in the time domain resource of each of the K nominal PUSCH repetitions, an uplink time unit and an SBFD time unit other than an invalid symbol, to transmit the first signal, so as to improve time domain resource utilization.

It should be understood that the symbol "*" in this application indicates multiplication.

It should be further understood that sequence numbers of the foregoing processes do not mean an execution sequence. The execution sequence of the processes should be determined based on functions and internal logic of the processes, and should not constitute any limitation on implementation processes of embodiments of this application.

It should be further understood that in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by a device (for example, the terminal device or the network device) may alternatively be implemented by a component (for example, a chip or a circuit) of the device.

The foregoing describes in detail the methods provided in embodiments of this application with reference to FIG. 1 to FIG. 23. The foregoing methods are mainly described from a perspective of interaction between the terminal device and the network device. It may be understood that, to implement the foregoing functions, the terminal device and the network device include corresponding hardware structures and/or software modules for performing the functions.

A person skilled in the art should be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

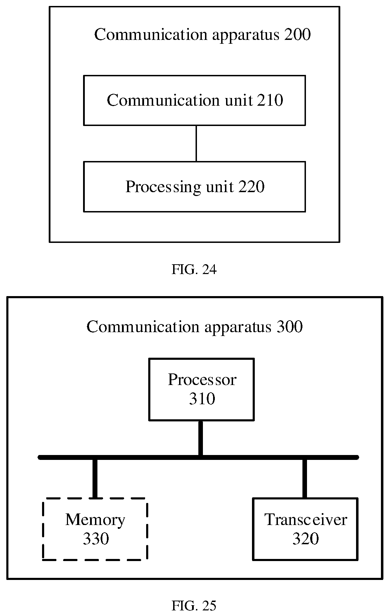

Communication apparatuses provided in embodiments of this application are described below in detail with reference to FIG. 24 and FIG. 25. It should be understood that descriptions of apparatus embodiments correspond to the descriptions of the method embodiments. Therefore, for content that is not described in detail, refer to the method embodiments above. For brevity, details of a part of content are not described herein again. In embodiments of this application, functional modules of the terminal device or the network device may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used. An example in which each functional module is obtained through division based on a corresponding function is used below for description.

The foregoing describes in detail the data transmission method provided in this application. The following describes a communication apparatus provided in this application. In a possible implementation, the apparatus is configured to implement steps or procedures corresponding to the network device in the foregoing method embodiments. In another possible implementation, the apparatus is configured to implement steps or procedures corresponding to the terminal device in the foregoing method embodiments.

FIG. 24 is a block diagram of a communication apparatus 200 according to an embodiment of this application. As shown in FIG. 24, the apparatus 200 may include a communication unit 210 and a processing unit 220. The communication unit 210 may communicate with the outside, and the processing unit 220 is configured to process data. The communication unit 210 may also be referred to as a communication interface or a transceiver unit.

In a possible design, the apparatus 200 may implement steps or procedures performed by the terminal device in the foregoing method embodiments. The processing unit 220 is configured to perform processing-related operations of the terminal device in the foregoing method embodiments, and the communication unit 210 is configured to perform sending-related operations of the terminal device in the foregoing method embodiments.

In another possible design, the apparatus 200 may implement the steps or procedures performed by the network device in the foregoing method embodiments. The communication unit 210 is configured to perform receiving-related operations of the network device in the foregoing method embodiments. The processing unit 220 is configured to perform processing-related operations of the network device in the foregoing method embodiments.

It should be understood that the apparatus 200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 200 may be specifically the terminal device in the foregoing embodiments, and may be configured to perform the procedures and/or the steps corresponding to the terminal device in the foregoing method embodiments, or the apparatus 200 may be specifically the network device in the foregoing embodiments, and may be configured to perform the procedures and/or the steps corresponding to the network device in the foregoing method embodiments. To avoid repetition, details are not described herein again.

The apparatus 200 in each of the foregoing solutions has a function of implementing the corresponding steps performed by the terminal device in the foregoing methods, or the apparatus 200 in each of the foregoing solutions has a function of implementing the corresponding steps performed by the network device in the foregoing methods. The function may be implemented by hardware, or may be implemented by hardware executing corresponding software. The hardware or software includes one or more modules corresponding to the function. For example, a communication unit may be replaced with a transceiver (for example, a sending unit in the communication unit may be replaced with a transmitter, and a receiving unit in the communication unit may be replaced with a receiver), and another unit like a processing unit may be replaced with a processor, to separately perform sending and receiving operations and a related processing operation in the method embodiments.

In addition, the communication unit may alternatively be a transceiver circuit (for example, may include a receiving circuit and a sending circuit), and the processing unit may be a processing circuit. In this embodiment of this application, the apparatus in FIG. 24 may be the terminal device or the network device in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 25 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330 communicates with the processor 310 and the transceiver 320 through internal connection paths. The memory 330 is configured to store instructions, and the processor 310 may execute the instructions stored in the memory 330. In a possible implementation, the apparatus 300 is configured to implement procedures and steps corresponding to the terminal device in the foregoing method embodiments. In another possible implementation, the apparatus 300 is configured to implement procedures and steps corresponding to the network device in the foregoing method embodiments.

It should be understood that the apparatus 300 may be specifically the terminal device or the network device in the foregoing embodiments, or may be a chip or a chip system. Correspondingly, the transceiver 320 may be a transceiver circuit of the chip. This is not limited herein. Specifically, the apparatus 300 may be configured to perform steps and/or procedures corresponding to the terminal device or the network device in the foregoing method embodiments. Optionally, the memory 330 may include a read-only memory and a random access memory, and provide instructions and data for the processor. A part of the memory may further include a non-volatile random access memory. For example, the memory may further store information about a device type. The processor 310 may be configured to execute the instructions stored in the memory. When the processor 310 executes the instructions stored in the memory, the processor 310 is configured to perform the steps and/or the procedures corresponding to the terminal device or the network device in the foregoing method embodiments.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor in this embodiment of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly executed and completed by a hardware decoding processor, or may be executed and completed by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another appropriate type.

It should be noted that, when the processor is a general-purpose processor, a DSP, an ASIC, an FPGA or another programmable logic device, a discrete gate or transistor logic device, or a discrete hardware component, the memory (storage module) may be integrated into the processor.

In addition, this application further provides a computer-readable storage medium. The computer-readable storage medium stores computer instructions. When the computer instructions are run on a computer, operations and/or procedures performed by the terminal device or the network device in the method embodiments of this application are performed.

This application further provides a computer program product. The computer program product includes computer program code or instructions. When the computer program code or the instructions are run on a computer, operations and/or procedures performed by the terminal device or the network device in the method embodiments of this application are performed.

In addition, this application further provides a chip, and the chip includes a processor. A memory configured to store a computer program is disposed independent of the chip. The processor is configured to execute the computer program stored in the memory, so that an operation and/or processing performed by the terminal device or the network device in any method embodiment is performed.

Further, the chip may include a communication interface. The communication interface may be an input/output interface, an interface circuit, or the like. Further, the chip may include a memory.

In addition, this application further provides a communication system, including the terminal device and the network device in embodiments of this application.

It should further be noted that the memory described in this specification is intended to include, but is not limited to, these memories and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, and may be located at one location, or may be distributed on a plurality of network units. Some or all of the units may be selected based on an actual requirement to achieve an objective of the solutions of embodiments. In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be further understood that, in embodiments of this application, ordinal numbers such as "first" and "second" are used to distinguish between a plurality of objects, and not intended to limit sizes, content, a sequence, a time sequence, priorities, or importance degrees of the plurality of objects. For example, first information and second information do not indicate a difference in an information amount, content, a priority, an importance degree, or the like.

It should be further understood that, in this application, both "when" and "if" mean that a network element performs corresponding processing in an objective situation, but do not constitute a limitation on time, do not require that the network element has a determining action during implementation, and do not mean another limitation either.

It should be further understood that in this application, "at least one" means one or more, and "a plurality of" means two or more. "At least one of items (pieces)" or a similar expression thereof refers to one item (piece) or a plurality of items (pieces), namely, any combination of these items, including any combination of singular items (pieces) or plural items (pieces). For example, at least one item (piece) of a, b, or c indicates a, b, c, a and b, a and c, b and c, or a and b and c.

It should be further understood that, unless otherwise specified, a meaning similar to "an item includes one or more of the following: A, B, and C" in this application usually means that the item may be any one of the following: A; B; C; A and B; A and C; B and C; A, B and C; A and A; A, A, and A; A, A, and B; A, A, and C; A, B, and B; A, C, and C; B and B; B, B, and B; B, B, and C; C and C; C, C, and C; and another combination of A, B, and C. The foregoing uses three elements A, B, and C as an example to describe an optional case of the item. When an expression is "an item includes at least one of the following: A, B, ..., and X", in other words, more elements are included in the expression, a case to which the item is applicable may also be obtained according to the foregoing rule.

It should be further understood that, the term "and/or" in this application describes only an association relationship between associated objects, and indicates that three relationships may exist. For example, A and/or B may indicate the following cases: A exists alone, both A and B exist, and B exists alone, where A and B may be singular or plural. The character "/" generally indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

Terms such as "component", "module", and "system" used in this specification are to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, a distributed system, and/or across a network such as the Internet interacting with another system by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located at one location, or may be distributed on a plurality of network units. Some or all of the units may be selected based on an actual requirement to achieve an objective of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An uplink transmission method, comprising:

   receiving, by a terminal device, first signaling from a network device, wherein the first signaling indicates the terminal device to send a first signal on a first time unit set, the first signaling carries indication information of N1 and K1, N1 is a quantity of time units in the first time unit set, N1 is an integer greater than 1, K1 indicates a first reference time unit, and the first signal is carried on a first physical uplink shared channel PUSCH or a first physical uplink control channel PUCCH; determining, by the terminal device, the first time unit set, wherein the first time unit set is a set of N1 time units, starting from the first reference time unit, that are closest to the first reference time unit and that do not meet a first condition, and the first condition comprises:

      a time unit type of a first time unit is different from a first time unit type, the first time unit type is an uplink time unit or a subband non-overlapping full duplex SBFD time unit, and the first time unit is a time unit traversed from the first reference time unit; and sending, by the terminal device, the first signal to the network device on the first time unit set.

2. An uplink transmission method, comprising:

   receiving, by a terminal device, first signaling from a network device, wherein the first signaling indicates the terminal device to send a first signal on a first time unit set, the first signaling carries indication information of N1 and K1, N1 is a quantity of reference time units, N1 is an integer greater than 1, K1 indicates a first reference time unit, and the first signal is carried on a first physical uplink shared channel PUSCH or a first physical uplink control channel PUCCH; determining, by the terminal device, the first time unit set, wherein the first time unit set is a set of time units in a third time unit set other than a time unit that meets a second condition, the third time unit set comprises N1 consecutive time units comprising the first reference time unit and a subsequent time unit, and the second condition comprises:

      a time unit type of a third time unit is different from a first time unit type, the first time unit type is an uplink time unit or a subband non-overlapping full duplex SBFD time unit, and the third time unit is a time unit in the third time unit set; and sending, by the terminal device, the first signal to the network device on the first time unit set.

3. The method according to claim 1 or 2, wherein when a time unit type of the first reference time unit is the uplink time unit or the subband non-overlapping full duplex SBFD time unit, the first time unit type is the time unit type of the first reference time unit.

4. The method according to claim 1 or 2, wherein when a time unit type of the first reference time unit is a downlink time unit, the first time unit type is a time unit type of a second time unit, and the second time unit is a $1^{st}$ time unit that is after the first reference time unit and whose time unit type is not the downlink time unit.

5. The method according to claim 1 or 2, wherein the first time unit type is indicated by the first signaling.

6. The method according to claim 1 or 2, wherein the first signaling further comprises a first frequency range, and the first frequency range is a frequency range for sending the first signal; and if the first frequency range is not completely comprised in a frequency range of an uplink subband in the SBFD time unit, the first time unit type is the uplink time unit; otherwise, the first time unit type is the SBFD time unit.

7. The method according to any one of claims 1 to 6, wherein the method further comprises:

   receiving, by the terminal device, second signaling from the network device, wherein the second signaling indicates the terminal device to send a second signal on a second time unit set, the second signal is carried on a second PUSCH or a second PUCCH, a time unit type of a time unit in the second time unit set is different from a time unit type of a time unit in the first time unit set, and a start time unit of the second time unit set is after a start time unit of the first time unit set and before an end time unit of the first time unit set;

determining, by the terminal device, the second time unit set; and

sending, by the terminal device, the second signal to the network device on the second time unit set.

8. An uplink transmission method, comprising:

sending, by a network device, first signaling to a terminal device, wherein the first signaling indicates the terminal device to send a first signal on a first time unit set, the first signaling carries indication information of N1 and K1, N1 is a quantity of time units in the first time unit set, N1 is an integer greater than 1, K1 indicates a first reference time unit, and the first signal is carried on a first physical uplink shared channel PUSCH or a first physical uplink control channel PUCCH;

determining, by the network device, the first time unit set, wherein the first time unit set is a set of N1 time units, starting from the first reference time unit, that are closest to the first reference time unit and that do not meet a first condition, and the first condition comprises:

a time unit type of a first time unit is different from a first time unit type, the first time unit type is an uplink time unit or a subband non-overlapping full duplex SBFD time unit, and the first time unit is a time unit traversed from the first reference time unit; and

receiving, by the network device, the first signal from the terminal device on the first time unit set.

9. An uplink transmission method, comprising:

sending, by a network device, first signaling to a terminal device, wherein the first signaling indicates the terminal device to send a first signal on a first time unit set, the first signaling carries indication information of N1 and K1, N1 is a quantity of reference time units, N1 is an integer greater than 1, K1 indicates a first reference time unit, and the first signal is carried on a first physical uplink shared channel PUSCH or a first physical uplink control channel PUCCH;

determining, by the network device, the first time unit set, wherein the first time unit set is a set of time units in a third time unit set other than a time unit that meets a second condition, the third time unit set comprises N1 consecutive time units comprising the first reference time unit and a subsequent time unit, and the second condition comprises:

a time unit type of a third time unit is different from a first time unit type, the first time unit type is an uplink time unit or a subband non-overlapping full duplex SBFD time unit, and the third time unit is a time unit in the third time unit set; and

receiving, by the network device, the first signal from the terminal device on the first time unit set.

10. The method according to claim 8 or 9, wherein when a time unit type of the first reference time unit is the uplink time unit or the subband non-overlapping full duplex SBFD time unit,

the first time unit type is the time unit type of the first reference time unit.

11. The method according to claim 8 or 9, wherein when a time unit type of the first reference time unit is a downlink time unit,

the first time unit type is a time unit type of a second time unit, and the second time unit is a $1^{st}$ time unit that is after the first reference time unit and whose time unit type is not the downlink time unit.

12. The method according to claim 8 or 9, wherein the first time unit type is indicated by the first signaling.

13. The method according to claim 8 or 9, wherein the first signaling further comprises a first frequency range, and the first frequency range is a frequency range for sending the first signal; and

if the first frequency range is not completely comprised in a frequency range of an uplink subband in the SBFD time unit, the first time unit type is the uplink time unit; otherwise, the first time unit type is the SBFD time unit.

14. The method according to any one of claims 8 to 13, wherein the method further comprises:

sending, by the network device, second signaling to the terminal device, wherein the second signaling indicates the terminal device to send a second signal on a second time unit set, the second signal is carried on a second PUSCH or a second PUCCH, a time unit type of a time unit in the second time unit set is different from a time unit type of a time unit in the first time unit set, and a start time unit of the second time unit set is after a start time unit of the first time unit set and before an end time unit of the first time unit set;

determining, by the network device, the second time unit set; and

receiving, by the network device, the second signal from the terminal device on the second time unit set.

**15.** An uplink transmission method, comprising:

receiving, by a terminal device, first signaling from a network device, wherein the first signaling indicates the terminal device to send a first signal on a first time unit set, the first signaling carries indication information of N1, K1, and a first frequency range, N1 is a quantity of time units in the first time unit set, N1 is an integer greater than 1, K1 indicates a first reference time unit, the first frequency range is a frequency range for sending the first signal, and the first signal is carried on a first physical uplink shared channel PUSCH or a first physical uplink control channel PUCCH;

determining, by the terminal device, the first time unit set, wherein the first time unit set is a set of N1 time units, starting from the first reference time unit, that are closest to the first reference time unit and that comprise an uplink time unit and a subband non-overlapping full duplex SBFD time unit that does not meet a third condition, and the third condition comprises:

the first frequency range comprises a frequency out of a second frequency range, the second frequency range is a frequency range of an uplink subband in a first SBFD time unit, and the first SBFD time unit is an SBFD time unit traversed from the first reference time unit; and

sending, by the terminal device, the first signal to the network device on the first time unit set.

**16.** An uplink transmission method, comprising:

sending, by a network device, first signaling to a terminal device, wherein the first signaling indicates the terminal device to send a first signal on a first time unit set, the first signaling carries indication information of N1, K1, and a first frequency range, N1 is a quantity of time units in the first time unit set, N1 is an integer greater than 1, K1 indicates a first reference time unit, the first frequency range is a frequency range for sending the first signal, and the first signal is carried on a first physical uplink shared channel PUSCH or a first physical uplink control channel PUCCH;

determining, by the network device, the first time unit set, wherein the first time unit set is a set of N1 time units, starting from the first reference time unit, that are closest to the first reference time unit and that comprise an uplink time unit and a subband non-overlapping full duplex SBFD time unit that does not meet a third condition, and the third condition comprises:

the first frequency range comprises a frequency out of a second frequency range, the second frequency range is a frequency range of an uplink subband in a first SBFD time unit, and the first SBFD time unit is an SBFD time unit traversed from the first reference time unit; and

receiving, by the network device, the first signal from the terminal device on the first time unit set.

**17.** An uplink transmission method, comprising:

receiving, by a terminal device, first signaling from a network device, wherein the first signaling indicates the terminal device to send a first signal on a first time unit set, the first signaling carries indication information of N1, K1, and a first frequency range, N1 is a quantity of reference time units, N1 is an integer greater than 1, K1 indicates a first reference time unit, the first frequency range is a frequency range for sending the first signal, and the first signal is carried on a first physical uplink shared channel PUSCH or a first physical uplink control channel PUCCH;

determining, by the terminal device, the first time unit set, wherein the first time unit set is a set of time units in a third time unit set other than a time unit that meets a third condition, the third time unit set comprises N1 consecutive time units comprising the first reference time unit and a subsequent time unit, and the third condition comprises:

the first frequency range comprises a frequency out of a second frequency range, the second frequency range is a frequency range of an uplink subband in a first subband non-overlapping full duplex SBFD time unit, and the first SBFD time unit is an SBFD time unit in the third time unit set; and

sending, by the terminal device, the first signal to the network device in the first time unit.

**18.** An uplink transmission method, comprising:

sending, by a network device, first signaling to a terminal device, wherein the first signaling indicates the terminal device to send a first signal on a first time unit set, the first signaling carries indication information of N1, K1, and a first frequency range, N1 is a quantity of reference time units, N1 is an integer greater than 1, K1 indicates a first reference time unit, the first frequency range is a frequency range for sending the first signal, and the first signal is carried on a first physical uplink shared channel PUSCH or a first physical uplink control channel PUCCH; determining, by the network device, the first time unit set, wherein the first time unit set is a set of time units in a third time unit set other than a time unit that meets a third condition, the third time unit set comprises N1 consecutive time units comprising the first reference time unit and a subsequent time unit, and the third condition comprises:

> the first frequency range comprises a frequency out of a second frequency range, the second frequency range is a frequency range of an uplink subband in a first subband non-overlapping full duplex SBFD time unit, and the first SBFD time unit is an SBFD time unit in the third time unit set; and
> receiving, by the network device, the first signal from the terminal device in the first time unit.

19. A communication apparatus, comprising:

> a receiving unit, configured to receive first signaling from a network device, wherein the first signaling indicates a terminal device to send a first signal on a first time unit set, the first signaling carries indication information of N1 and K1, N1 is a quantity of time units in the first time unit set, N1 is an integer greater than 1, K1 indicates a first reference time unit, and the first signal is carried on a first physical uplink shared channel PUSCH or a first physical uplink control channel PUCCH;
> a processing unit, configured to determine the first time unit set, wherein the first time unit set is a set of N1 time units, starting from the first reference time unit, that are closest to the first reference time unit and that do not meet a first condition, and the first condition comprises:
>
> > a time unit type of a first time unit is different from a first time unit type, the first time unit type is an uplink time unit or a subband non-overlapping full duplex SBFD time unit, and the first time unit is a time unit traversed from the first reference time unit; and
> > a sending unit, configured to send the first signal to the network device on the first time unit set.

20. A communication apparatus, comprising:

> a receiving unit, configured to receive first signaling from a network device, wherein the first signaling indicates a terminal device to send a first signal on a first time unit set, the first signaling carries indication information of N1 and K1, N1 is a quantity of reference time units, N1 is an integer greater than 1, K1 indicates a first reference time unit, and the first signal is carried on a first physical uplink shared channel PUSCH or a first physical uplink control channel PUCCH; a processing unit, configured to determine the first time unit set, wherein the first time unit set is a set of time units in a third time unit set other than a time unit that meets a second condition, the third time unit set comprises N1 consecutive time units comprising the first reference time unit and a subsequent time unit, and the second condition comprises:

> a time unit type of a third time unit is different from a first time unit type, the first time unit type is an uplink time unit or a subband non-overlapping full duplex SBFD time unit, and the third time unit is a time unit in the third time unit set; and
> a sending unit, configured to send the first signal to the network device on the first time unit set.

21. The apparatus according to claim 19 or 20, wherein when a time unit type of the first reference time unit is the uplink time unit or the subband non-overlapping full duplex SBFD time unit, the first time unit type is the time unit type of the first reference time unit.

22. The apparatus according to claim 19 or 20, wherein when a time unit type of the first reference time unit is a downlink time unit, the first time unit type is a time unit type of a second time unit, and the second time unit is a 1st time unit that is after the first reference time unit and whose time unit type is not the downlink time unit.

23. The apparatus according to claim 19 or 20, wherein the first time unit type is indicated by the first signaling.

24. The apparatus according to claim 19 or 20, wherein the first signaling further comprises a first frequency range, and the first frequency range is a frequency range for sending the first signal; and if the first frequency range is not completely comprised in a frequency range of an uplink subband in the SBFD time unit, the first time unit type is the uplink time unit; otherwise, the first time unit type is the SBFD time unit.

25. The apparatus according to any one of claims 19 to 24, wherein

> the receiving unit is further configured to receive second signaling from the network device, wherein the second signaling indicates the terminal device to send a second signal on a second time unit set, the second signal is carried on a second PUSCH or a second PUCCH, a time unit type of a time unit in the second time unit set is different from a time unit type of a time unit in the first time unit set, and a start time unit of the second time unit set is after a start time unit of the first time unit set and before an end time unit of the first time unit set;

the processing unit is further configured to determine the second time unit set; and

the sending unit is further configured to send the second signal to the network device on the second time unit set.

26. A communication apparatus, comprising:

a sending unit, configured to send first signaling to a terminal device, wherein the first signaling indicates the terminal device to send a first signal on a first time unit set, the first signaling carries indication information of N1 and K1, N1 is a quantity of time units in the first time unit set, N1 is an integer greater than 1, K1 indicates a first reference time unit, and the first signal is carried on a first physical uplink shared channel PUSCH or a first physical uplink control channel PUCCH; a processing unit, configured to determine the first time unit set, wherein the first time unit set is a set of N1 time units, starting from the first reference time unit, that are closest to the first reference time unit and that do not meet a first condition, and the first condition comprises:

a time unit type of a first time unit is different from a first time unit type, the first time unit type is an uplink time unit or a subband non-overlapping full duplex SBFD time unit, and the first time unit is a time unit traversed from the first reference time unit; and a receiving unit, configured to receive the first signal from the terminal device on the first time unit set.

27. A communication apparatus, comprising:

a sending unit, configured to send first signaling to a terminal device, wherein the first signaling indicates the terminal device to send a first signal on a first time unit set, the first signaling carries indication information of N1 and K1, N1 is a quantity of reference time units, N1 is an integer greater than 1, K1 indicates a first reference time unit, and the first signal is carried on a first physical uplink shared channel PUSCH or a first physical uplink control channel PUCCH;

a processing unit, configured to determine the first time unit set, wherein the first time unit set is a set of time units in a third time unit set other than a time unit that meets a second condition, the third time unit set comprises N1 consecutive time units comprising the first reference time unit and a subsequent time unit, and the second condition comprises:

a time unit type of a third time unit is different from a first time unit type, the first time unit type is an uplink time unit or a subband non-overlapping full duplex SBFD time unit, and the third time unit is a time unit in the third time unit set; and a receiving unit, configured to receive the first signal from the terminal device on the first time unit set.

28. The apparatus according to claim 26 or 27, wherein when a time unit type of the first reference time unit is the uplink time unit or the subband non-overlapping full duplex SBFD time unit, the first time unit type is the time unit type of the first reference time unit.

29. The apparatus according to claim 26 or 27, wherein when a time unit type of the first reference time unit is a downlink time unit, the first time unit type is a time unit type of a second time unit, and the second time unit is a $1^{st}$ time unit that is after the first reference time unit and whose time unit type is not the downlink time unit.

30. The apparatus according to claim 26 or 27, wherein the first time unit type is indicated by the first signaling.

31. The apparatus according to claim 26 or 27, wherein the first signaling further comprises a first frequency range, and the first frequency range is a frequency range for sending the first signal; and if the first frequency range is not completely comprised in a frequency range of an uplink subband in the SBFD time unit, the first time unit type is the uplink time unit; otherwise, the first time unit type is the SBFD time unit.

32. The apparatus according to any one of claims 26 to 31, wherein

the sending unit is further configured to send second signaling to the terminal device, wherein the second signaling indicates the terminal device to send a second signal on a second time unit set, the second signal is carried on a second PUSCH or a second PUCCH, a time unit type of a time unit in the second time unit set is different from a time unit type of a time unit in the first time unit set, and a start time unit of the second time unit set is after a start time unit of the first time unit set and before an end time unit of the first time unit set;

the processing unit is further configured to determine the second time unit set; and

the receiving unit is further configured to receive the second signal from the terminal device on the second time unit set.

33. A communication apparatus, comprising:

a receiving unit, configured to receive first signaling from a network device, wherein the first signaling indicates a terminal device to send a first signal on a first time unit set, the first signaling carries indication information of N1, K1, and a first frequency range, N1 is a quantity of time units in the first time unit set, N1 is an integer greater than 1, K1 indicates a first reference time unit, the first frequency range is a frequency range for sending the first signal, and the first signal is carried on a first physical uplink shared channel PUSCH or a first physical uplink control channel PUCCH;

a processing unit, configured to determine the first time unit set, wherein the first time unit set is a set of N1 time units, starting from the first reference time unit, that are closest to the first reference time unit and that comprise an uplink time unit and a subband non-overlapping full duplex SBFD time unit that does not meet a third condition, and the third condition comprises:

the first frequency range comprises a frequency out of a second frequency range, the second frequency range is a frequency range of an uplink subband in a first SBFD time unit, and the first SBFD time unit is an SBFD time unit traversed from the first reference time unit; and

a sending unit, configured to send the first signal to the network device on the first time unit set.

34. A communication apparatus, comprising:

a sending unit, configured to send first signaling, wherein the first signaling indicates a terminal device to send a first signal on a first time unit set, the first signaling carries indication information of N1, K1, and a first frequency range, N1 is a quantity of time units in the first time unit set, N1 is an integer greater than 1, K1 indicates a first reference time unit, the first frequency range is a frequency range for sending the first signal, and the first signal is carried on a first physical uplink shared channel PUSCH or a first physical uplink control channel PUCCH;

a processing unit, configured to determine the first time unit set, wherein the first time unit set is a set of N1 time units, starting from the first reference time unit, that are closest to the first reference time unit and that comprise an uplink time unit and a subband non-overlapping full duplex SBFD time unit that does not meet a third condition, and the third condition comprises:

the first frequency range comprises a frequency out of a second frequency range, the second frequency range is a frequency range of an uplink subband in a first SBFD time unit, and the first SBFD time unit is an SBFD time unit traversed from the first reference time unit; and

a receiving unit, configured to receive the first signal from the terminal device on the first time unit set.

35. A communication apparatus, comprising:

a receiving unit, configured to receive first signaling from a network device, wherein the first signaling indicates a terminal device to send a first signal on a first time unit set, the first signaling carries indication information of N1, K1, and a first frequency range, N1 is a quantity of reference time units, N1 is an integer greater than 1, K1 indicates a first reference time unit, the first frequency range is a frequency range for sending the first signal, and the first signal is carried on a first physical uplink shared channel PUSCH or a first physical uplink control channel PUCCH;

a processing unit, configured to determine the first time unit set, wherein the first time unit set is a set of time units in a third time unit set other than a time unit that meets a third condition, the third time unit set comprises N1 consecutive time units comprising the first reference time unit and a subsequent time unit, and the third condition comprises:

the first frequency range comprises a frequency out of a second frequency range, the second frequency range is a frequency range of an uplink subband in a first subband non-overlapping full duplex SBFD time unit, and the first SBFD time unit is an SBFD time unit in the third time unit set; and

a sending unit, configured to send the first signal to the network device in the first time unit.

36. A communication apparatus, comprising:

a sending unit, configured to send first signaling, wherein the first signaling indicates a terminal device to send a first signal on a first time unit set, the first signaling carries indication information of N1, K1, and a first frequency range, N1 is a quantity of reference time units, N1 is an integer greater than 1, K1 indicates a first reference time unit, the first frequency range is a frequency range for sending the first signal, and the first signal is carried on a first physical uplink shared channel PUSCH or a first physical uplink control channel PUCCH;

a processing unit, configured to determine the first time unit set, wherein the first time unit set is a set of time units in a third time unit set other than a time unit that meets a third condition, the third time unit set comprises N1 consecutive time units comprising the first reference time unit and a subsequent time unit, and the third condition comprises:

the first frequency range comprises a frequency out of a second frequency range, the second frequency range is a frequency range of an uplink subband in a first subband non-overlapping full duplex SBFD time unit, and the first SBFD time unit is an SBFD time unit in the third time unit set; and

a receiving unit, configured to receive the first signal from the terminal device in the first time unit.

37. An uplink transmission method, comprising:

receiving, by a terminal device, first signaling from a network device, wherein the first signaling indicates the terminal device to send a first signal on K consecutive first time unit sets, the first time unit set is a time unit set for a nominal physical uplink shared channel PUSCH repetition, the first signal is carried on a PUSCH repetition type B, the first signaling carries first indication information and second indication information, the first indication information indicates a first reference time unit, the first reference time unit is a start time unit of the K first time unit sets, and the second indication information indicates a quantity of time units comprised in the K first time unit sets;

determining, by the terminal device, a second time unit set, wherein the second time unit set is a set of time units other than a third time unit in the K first time unit sets, the third time unit comprises a time unit of a first time unit type, the first time unit type is an uplink time unit or a subband non-overlapping full duplex SBFD time unit, and the first time unit type is determined based on the first reference time unit; and repeatedly sending, by the terminal device, the first signal to the network device on the second time unit set or a subset of the second time unit set.

38. The method according to claim 37, wherein

when a time unit type of the first reference time unit is the uplink time unit, the first time unit type is the SBFD time unit; or
when a time unit type of the first reference time unit is the SBFD time unit, the first time unit type is the uplink time unit.

39. The method according to claim 37, wherein when a time unit type of the first reference time unit is a downlink time unit, the first time unit type is determined based on a time unit type of a second time unit, and the second time unit is a $1^{st}$ time unit that is after the first reference time unit and whose time unit type is not the downlink time unit.

40. The method according to claim 39, wherein if the time unit type of the second time unit is the uplink time unit, the first time unit type is the SBFD time unit; or if the time unit type of the second time unit is the SBFD time unit, the first time unit type is the uplink time unit.

41. The method according to claim 37, wherein the first signaling further comprises indication information of a first frequency range, and the first frequency range is a frequency range for sending the first signal; and if a time unit type of the first reference time unit is the SBFD time unit, and the first frequency range is not completely comprised in a frequency range of an uplink subband in the SBFD time unit, the first time unit type is the SBFD time unit; otherwise, the first time unit type is the uplink time unit.

42. The method according to any one of claims 37 to 41, wherein the method further comprises:

receiving, by the terminal device, second signaling from the network device, wherein the second signaling indicates the terminal device to send a second signal on the K consecutive first time unit sets, and the second signal is carried on a PUSCH repetition type B;
determining, by the terminal device, a fourth time unit set, wherein the fourth time unit set is a set of time units other than a fifth time unit in the K first time unit sets, the fifth time unit comprises a time unit of a second time unit type, the second time unit type is the uplink time unit or the SBFD time unit, and the first time unit type is different from the second time unit type; and repeatedly sending, by the terminal device, the second signal to the network device on the fourth time unit set or a subset of the fourth time unit set.

43. An uplink transmission method, comprising:

sending, by a network device, first signaling to a terminal device, wherein the first signaling indicates the terminal device to send a first signal on K consecutive first time unit sets, the first time unit set is a time unit set for a nominal physical uplink shared channel PUSCH repetition, the first signal is carried on a PUSCH repetition type B, the first signaling carries first indication information and second indication information, the first indication information indicates a first reference time unit, the first reference time unit is a start time unit of the K first time unit sets, and the second indication information indicates a quantity of time units comprised in the K first time unit sets;

determining, by the network device, a second time unit set, wherein the second time unit set is a set of time units other than a third time unit in the K first time unit sets, the third time unit comprises a time unit of a first time unit type, the first time unit type is an uplink time unit or a subband non-overlapping full duplex SBFD time unit, and the first time unit type is determined based on the first reference time unit; and

repeatedly receiving, by the network device, the first signal from the terminal device on the second time unit set or a subset of the second time unit set.

44. The method according to claim 43, wherein

when a time unit type of the first reference time unit is the uplink time unit, the first time unit type is the SBFD time unit; or when a time unit type of the first reference time unit is the SBFD time unit, the first time unit type is the uplink time unit.

45. The method according to claim 43, wherein when a time unit type of the first reference time unit is a downlink time unit, the first time unit type is determined based on a time unit type of a second time unit, and the second time unit is a 1st time unit that is after the first reference time unit and whose time unit type is not the downlink time unit.

46. The method according to claim 45, wherein if the time unit type of the second time unit is the uplink time unit, the first time unit type is the SBFD time unit; or if the time unit type of the second time unit is the SBFD time unit, the first time unit type is the uplink time unit.

47. The method according to claim 43, wherein the first signaling further comprises indication information of a first frequency range, and the first frequency range is a frequency range for sending the first signal; and if a time unit type of the first reference time unit is the SBFD time unit, and the first frequency range is not completely comprised in a frequency range of an uplink subband in the SBFD time unit, the first time unit type is the SBFD time unit; otherwise, the first time unit type is the uplink time unit.

48. The method according to any one of claims 43 to 47, wherein the method further comprises:

sending, by the network device, second signaling to the terminal device, wherein the second signaling indicates the terminal device to send a second signal on the K consecutive first time unit sets, and the second signal is carried on a PUSCH repetition type B;

determining, by the network device, a fourth time unit set, wherein the fourth time unit set is a set of time units other than a fifth time unit in the K first time unit sets, the fifth time unit comprises a time unit of a second time unit type, the second time unit type is the uplink time unit or the SBFD time unit, and the first time unit type is different from the second time unit type; and

repeatedly receiving, by the network device, the second signal from the terminal device on the fourth time unit set or a subset of the fourth time unit set.

49. An uplink transmission method, comprising:

receiving, by a terminal device, first signaling from a network device, wherein the first signaling indicates the terminal device to send a first signal on K consecutive first time unit sets, the first time unit set is a time unit set for a nominal physical uplink shared channel PUSCH repetition, the first signal is carried on a PUSCH repetition type B, the first signaling carries first indication information, second indication information, and indication information of a first frequency range, the first indication information indicates a first reference time unit, the first reference time unit is a start time unit of the K first time unit sets, the second indication information indicates a quantity of time units comprised in the K first time unit sets, and the first frequency range is a frequency range for sending the first signal;

determining, by the terminal device, a second time unit set, wherein the second time unit set is a set of time units other than a third time unit in the first time unit set, the third time unit comprises a subband non-overlapping full duplex SBFD time unit that meets a third condition, and the third condition comprises: the first frequency range comprises a frequency out of a second frequency range, and the second frequency range is a frequency range of an uplink subband in the SBFD time unit; and

repeatedly sending, by the terminal device, the first signal to the network device on the second time unit set or a subset of the second time unit set.

50. An uplink transmission method, comprising:

sending, by a network device, first signaling to a terminal device, wherein the first signaling indicates the terminal device to send a first signal on K consecutive first time unit sets, the first time unit set is a time unit set for a nominal physical uplink shared channel PUSCH repetition, the first signal is carried on a PUSCH repetition type B, the first signaling carries first indication information, second indication information, and indication information of a first frequency range, the first indication information indicates a first reference time unit, the first reference time unit is a start time unit of the K first time unit sets, the second indication information indicates a quantity of time units comprised in the K first time unit sets, and the first frequency range is a frequency range for sending the first signal;

determining, by the network device, a second time unit set, wherein the second time unit set is a set of time units other than a third time unit in the first time unit set, the third time unit comprises a subband non-overlapping full duplex SBFD time unit that meets a third condition, and the third condition comprises: the first frequency range comprises a frequency out of a second frequency range, and the second frequency range is a frequency range of an uplink subband in the SBFD time unit; and

repeatedly receiving, by the network device, the first signal from the terminal device on the second time unit set or a subset of the second time unit set.

51. An uplink transmission method, comprising:

receiving, by a terminal device, first signaling from a network device, wherein the first signaling indicates the terminal device to repeatedly send a first signal on K consecutive first time unit sets, the first time unit set is a time unit set for a nominal physical uplink shared channel PUSCH repetition, and the first signal is carried on a PUSCH repetition type B;

determining, by the terminal device, a second time unit set, wherein the second time unit set is a set of time units other than an invalid time unit in the K first time unit sets, and K is a positive integer;

determining, by the terminal device, a third time unit set comprised in the second time unit set, wherein the third time unit set is a time unit set for an actual PUSCH repetition, the third time unit set is a first-type third time unit set or a second-type third time unit set, all time units in the first-type third time unit are uplink time units, all time units in the second-type third time unit set are subband non-overlapping full duplex SBFD time units, and the second time unit set comprises the first-type third time unit set and the second-type third time unit set; and

repeatedly sending, by the terminal device, the first signal to the network device on all or a part of third time unit sets in the K first time unit sets.

52. An uplink transmission method, comprising:

sending, by a network device, first signaling to a terminal device, wherein the first signaling indicates the terminal device to repeatedly send a first signal on K consecutive first time unit sets, the first time unit set is a time unit set for a nominal physical uplink shared channel PUSCH repetition, and the first signal is carried on a PUSCH repetition type B;

determining, by the network device, a second time unit set, wherein the second time unit set is a set of time units other than an invalid time unit in the K first time unit sets, and K is a positive integer;

determining, by the network device, a third time unit set comprised in the second time unit set, wherein the third time unit set is a time unit set for an actual PUSCH repetition, the third time unit set is a first-type third time unit set or a second-type third time unit set, all time units in the first-type third time unit are uplink time units, all time units in the second-type third time unit set are subband non-overlapping full duplex SBFD time units, and the second time unit set comprises the first-type third time unit set and the second-type third time unit set; and

repeatedly receiving, by the network device, the first signal from the terminal device on all or a part of third time unit sets in the K first time unit sets.

53. A communication apparatus, comprising:

a communication unit, configured to receive first signaling from a network device, wherein the first signaling indicates a terminal device to send a first signal on K consecutive first time unit sets, the first time unit set is a time unit set for a nominal physical uplink shared channel PUSCH repetition, the first signal is carried on a PUSCH repetition type B, the first signaling carries first indication information and second indication information, the first indication information indicates a first reference time unit, the first reference time unit is a start time unit of the K first time unit sets, and the second indication information indicates a quantity of time units comprised in the K first time unit sets; and

a processing unit, configured to determine a second time unit set, wherein the second time unit set is a set of time units other than a third time unit in the K first time unit sets, the third time unit comprises a time unit of a first time unit type, the first time unit type is an uplink time unit or a subband non-overlapping full duplex SBFD time unit, and the first time unit type is determined based on the first reference time unit, wherein the communication unit is further configured to repeatedly send the first signal to the network device on the second time unit set or a subset of the second time unit set.

54. The apparatus according to claim 53, wherein

when a time unit type of the first reference time unit is the uplink time unit, the first time unit type is the SBFD time unit;
or
when a time unit type of the first reference time unit is the SBFD time unit, the first time unit type is the uplink time unit.

55. The apparatus according to claim 53, wherein when a time unit type of the first reference time unit is a downlink time unit, the first time unit type is determined based on a time unit type of a second time unit, and the second time unit is a 1st time unit that is after the first reference time unit and whose time unit type is not the downlink time unit.

56. The apparatus according to claim 55, wherein if the time unit type of the second time unit is the uplink time unit, the first time unit type is the SBFD time unit; or if the time unit type of the second time unit is the SBFD time unit, the first time unit type is the uplink time unit.

57. The apparatus according to claim 53, wherein the first signaling further comprises indication information of a first frequency range, and the first frequency range is a frequency range for sending the first signal; and
if a time unit type of the first reference time unit is the SBFD time unit, and the first frequency range is not completely comprised in a frequency range of an uplink subband in the SBFD time unit, the first time unit type is the SBFD time unit; otherwise, the first time unit type is the uplink time unit.

58. The apparatus according to any one of claims 53 to 57, wherein the communication unit is further configured to receive second signaling from the network device, wherein the second signaling indicates the terminal device to send a second signal on the K consecutive first time unit sets, and the second signal is carried on a PUSCH repetition type B;

the processing unit is further configured to determine a fourth time unit set, wherein the fourth time unit set is a set of time units other than a fifth time unit in the K first time unit sets, the fifth time unit comprises a time unit of a second time unit type, the second time unit type is the uplink time unit or the SBFD time unit, and the first time unit type is different from the second time unit type; and
the communication unit is further configured to repeatedly send the second signal to the network device on the fourth time unit set or a subset of the fourth time unit set.

59. A communication apparatus, comprising:

a communication unit, configured to send first signaling to a terminal device, wherein the first signaling indicates the terminal device to send a first signal on K consecutive first time unit sets, the first time unit set is a time unit set for a nominal physical uplink shared channel PUSCH repetition, the first signal is carried on a PUSCH repetition type B, the first signaling carries first indication information and second indication information, the first indication information indicates a first reference time unit, the first reference time unit is a start time unit of the K first time unit sets, and the second indication information indicates a quantity of time units comprised in the K first time unit sets; and
a processing unit, configured to determine a second time unit set, wherein the second time unit set is a set of time units other than a third time unit in the K first time unit sets, the third time unit comprises a time unit of a first time unit type, the first time unit type is an uplink time unit or a subband non-overlapping full duplex SBFD time unit, and the first time unit type is determined based on the first reference time unit, wherein the communication unit is further configured to repeatedly receive the first signal from the terminal device on the second time unit set or a subset of the second time unit set.

60. The apparatus according to claim 59, wherein

when a time unit type of the first reference time unit is the uplink time unit, the first time unit type is the SBFD time unit; or

when a time unit type of the first reference time unit is the SBFD time unit, the first time unit type is the uplink time unit.

61. The apparatus according to claim 59, wherein when a time unit type of the first reference time unit is a downlink time unit, the first time unit type is determined based on a time unit type of a second time unit, and the second time unit is a $1^{st}$ time unit that is after the first reference time unit and whose time unit type is not the downlink time unit.

62. The apparatus according to claim 61, wherein if the time unit type of the second time unit is the uplink time unit, the first time unit type is the SBFD time unit; or if the time unit type of the second time unit is the SBFD time unit, the first time unit type is the uplink time unit.

63. The apparatus according to claim 59, wherein the first signaling further comprises indication information of a first frequency range, and the first frequency range is a frequency range for sending the first signal; and

if a time unit type of the first reference time unit is the SBFD time unit, and the first frequency range is not completely comprised in a frequency range of an uplink subband in the SBFD time unit, the first time unit type is the SBFD time unit; otherwise, the first time unit type is the uplink time unit.

64. The apparatus according to any one of claims 59 to 63, wherein

the communication unit is further configured to send second signaling to the terminal device, wherein the second signaling indicates the terminal device to send a second signal on the K consecutive first time unit sets, and the second signal is carried on a PUSCH repetition type B; the processing unit is further configured to determine a fourth time unit set, wherein the fourth time unit set is a set of time units other than a fifth time unit in the K first time unit sets, the fifth time unit comprises a time unit of a second time unit type, the second time unit type is the uplink time unit or the SBFD time unit, and the first time unit type is different from the second time unit type; and

the communication unit is further configured to repeatedly receive the second signal from the terminal device on the fourth time unit set or a subset of the fourth time unit set.

65. A communication apparatus, comprising:

a communication unit, configured to receive first signaling from a network device, wherein the first signaling indicates a terminal device to send a first signal on K consecutive first time unit sets, the first time unit set is a time unit set for a nominal physical uplink shared channel PUSCH repetition, the first signal is carried on a PUSCH repetition type B, the first signaling carries first indication information, second indication information, and indication information of a first frequency range, the first indication information indicates a first reference time unit, the first reference time unit is a start time unit of the K first time unit sets, the second indication information indicates a quantity of time units comprised in the K first time unit sets, and the first frequency range is a frequency range for sending the first signal; and

a processing unit, configured to determine a second time unit set, wherein the second time unit set is a set of time units other than a third time unit in the first time unit set, the third time unit comprises a subband non-overlapping full duplex SBFD time unit that meets a third condition, and the third condition comprises: the first frequency range comprises a frequency out of a second frequency range, and the second frequency range is a frequency range of an uplink subband in the SBFD time unit, wherein

the communication unit is further configured to repeatedly send the first signal to the network device on the second time unit set or a subset of the second time unit set.

66. A communication apparatus, comprising:

a communication unit, configured to send first signaling to a terminal device, wherein the first signaling indicates the terminal device to send a first signal on K consecutive first time unit sets, the first time unit set is a time unit set for a nominal physical uplink shared channel PUSCH repetition, the first signal is carried on a PUSCH repetition type B, the first signaling carries first indication information, second indication information, and indication information of a first frequency range, the first indication information indicates a first reference time unit, the first reference time unit is a start time unit of the K first time unit sets, the second indication information indicates a quantity of time units comprised in the K first time unit sets, and the first frequency range is a frequency range for sending the first signal; and

a processing unit, configured to determine a second time unit set, wherein the second time unit set is a set of time units other than a third time unit in the first time unit set, the third time unit comprises a subband non-overlapping full duplex SBFD time unit that meets a third condition, and the third condition comprises: the first frequency range comprises a frequency out of a second frequency range, and the second frequency range is a frequency range of an uplink subband in the SBFD time unit, wherein the communication unit is further configured to repeatedly receive the first signal from the terminal device on the second time unit set or a subset of the second time unit set.

67. A communication apparatus, comprising:

a communication unit, configured to receive first signaling from a network device, wherein the first signaling indicates a terminal device to repeatedly send a first signal on K consecutive first time unit sets, the first time unit set is a time unit set for a nominal physical uplink shared channel PUSCH repetition, and the first signal is carried on a PUSCH repetition type B; and
a processing unit, configured to determine a second time unit set, wherein the second time unit set is a set of time units other than an invalid time unit in the K first time unit sets, and K is a positive integer, wherein
the processing unit is further configured to determine a third time unit set comprised in the second time unit set, wherein the third time unit set is a time unit set for an actual PUSCH repetition, the third time unit set is a first-type third time unit set or a second-type third time unit set, all time units in the first-type third time unit are uplink time units, all time units in the second-type third time unit set are subband non-overlapping full duplex SBFD time units, and the second time unit set comprises the first-type third time unit set and the second-type third time unit set; and
the communication unit is further configured to repeatedly send the first signal to the network device on all or a part of third time unit sets in the K first time unit sets.

68. A communication apparatus, comprising:

a communication unit, configured to send first signaling to a terminal device, wherein the first signaling indicates the terminal device to repeatedly send a first signal on K consecutive first time unit sets, the first time unit set is a time unit set for a nominal physical uplink shared channel PUSCH repetition, and the first signal is carried on a PUSCH repetition type B; and
a processing unit, configured to determine a second time unit set, wherein the second time unit set is a set of time units other than an invalid time unit in the K first time unit sets, and K is a positive integer, wherein
the processing unit is further configured to determine a third time unit set comprised in the second time unit set, wherein the third time unit set is a time unit set for an actual PUSCH repetition, the third time unit set is a first-type third time unit set or a second-type third time unit set, all time units in the first-type third time unit are uplink time units, all time units in the second-type third time unit set are subband non-overlapping full duplex SBFD time units, and the second time unit set comprises the first-type third time unit set and the second-type third time unit set; and
the communication unit is further configured to repeatedly receive the first signal from the terminal device on all or a part of third time unit sets in the K first time unit sets.

69. A communication apparatus, wherein the communication apparatus comprises at least one processor and at least one memory, the at least one memory is configured to store a computer program or instructions, and the at least one processor is configured to execute the computer program or the instructions in the memory, so that the method according to any one of claims 1 to 7 is performed, or the method according to any one of claims 8 to 14 is performed, or the method according to claim 15 or 17 is performed; or the method according to claim 16 or 18 is performed, or the method according to any one of claims 40 to 45 is performed, or the method according to any one of claims 46 to 51 is performed, or the method according to claim 52 or 54 is performed, or the method according to claim 53 or 55 is performed.

70. A computer-readable storage medium, wherein the computer-readable storage medium stores computer instructions, and when the computer instructions are run on a computer, the method according to any one of claims 1 to 7 is performed, or the method according to any one of claims 8 to 14 is performed, or the method according to claim 15 or 17 is performed, or the method according to claim 16 or 18 is performed, or the method according to any one of claims 40 to 45 is performed, or the method according to any one of claims 46 to 51 is performed, or the method according to claim 52 or 54 is performed, or the method according to claim 53 or 55 is performed.

71. A computer program product, wherein the computer program product comprises computer program code, and when the computer program code is run on a computer, the method according to any one of claims 1 to 7 is performed, or the method according to any one of claims 8 to 14 is performed, or the method according to claim 15 or 17 is performed, or the method according to claim 16 or 18 is performed, or the method according to any one of claims 40 to 45 is performed, or the method according to any one of claims 46 to 51 is performed, or the method according to claim 52 or 54 is performed, or the method according to claim 53 or 55 is performed.

Network device 110

Terminal
device 120

Terminal
device 130

FIG. 1

Frequency
domain

Time domain

SBFD time unit

Uplink time unit

Time-frequency
resource used for
downlink
transmission

Time-frequency
resource used for
uplink transmission

Time-frequency
resource used for
uplink transmission

FIG. 2

Slots that can actually be
used to transmit a multi-slot
PUSCH/PUCCH

Start slot

| D | D | S | U | U | D | D | S | U | U |

Slots included in a slot count of
the multi-slot PUSCH/PUCCH

FIG. 3

Slots included in a slot count of
a multi-slot PUSCH/PUCCH

Start slot

| D | D | S | U | U | D | D | S | U | U |

FIG. 4

Time-frequency resource used
for downlink transmission

Time-frequency resource used
for uplink transmission

X  X  X  X  U  X  X  X  X  U

FIG. 5

| Network device | | Terminal device |
|---|---|---|

S610: First signaling →

S620: Determine a first time unit set based on the first signaling and a first condition

← S630: First signal

S640: Second signaling →

S650: Determine a second time unit set

← S660: Second signal

FIG. 6

First time unit set

| D | X | X | X | X | X | X | X | X | U | D | X | X | X | U |
|---|---|---|---|---|---|---|---|---|---|---|---|---|---|---|

1$^{st}$ traversed slot

FIG. 7

| DCI 0 | | | TB 0 | | TB 0 |
|---|---|---|---|---|---|
| | DCI 1 | | | TB 1 | |

FIG. 8

Network device | Terminal device

S910: First signaling →

S920: Determine a first time unit set based on the first signaling and a second condition

← S930: First signal

S940: Second signaling ---→

S950: Determine a second time unit set

← S960: Second signal

FIG. 9

First time unit set

| D | X | X | X | ⊠ | ⊠ | X | X | X | U | D | X | X | X | U |

Third time unit set

FIG. 10

Network device | Terminal device

S1110: First signaling →

S1120: Determine a first time unit set based on the first signaling and a third condition

← S1130: First signal

FIG. 11

Time-frequency resource used for downlink transmission

Time-frequency resource used for uplink transmission

First time unit set

First frequency range

D  X  X  X  U  D  X  X  X  U

1$^{st}$ traversed slot

FIG. 12

Network device

Terminal device

S1310: First signaling

S1320: Determine a first time unit set based on the first signaling and a third condition

S1330: First signal

FIG. 13

Time-frequency resource used
for downlink transmission

Time-frequency resource used
for uplink transmission

First time unit set

First
frequency
range

D　X　X　X　U　D　X　X　X　U

Third time unit set

FIG. 14

| Network device | Terminal device |
| --- | --- |

S1510: First signaling →

S1520: Obtain K, where K is used
to determine $N_{info}$ of a first signal

← S1530: Send the first signal in a
first time unit set based on $N_{info}$

FIG. 15

Network device · · · · · · · · · · · Terminal device

S1610: First signaling →

S1620: Determine $N_{info}$ of a first signal

S1630: Send the first signal in a first time unit set based on $N_{info}$

FIG. 16

☐ Potentially valid symbol   ▨ Invalid symbol

Slot boundary

| 1st nominal PUSCH repetition | 2nd nominal PUSCH repetition | 3rd nominal PUSCH repetition | 4th nominal PUSCH repetition |

1st actual
PUSCH
repetition

2nd actual
PUSCH
repetition

3rd actual
PUSCH
repetition

4th actual
PUSCH
repetition

5th actual
PUSCH
repetition

6th actual
PUSCH
repetition

7th actual
PUSCH
repetition

FIG. 17

```
┌─────────────────────┐                    ┌─────────────────────┐
│   Network device    │                    │   Terminal device   │
└─────────────────────┘                    └─────────────────────┘
```

S1810: First signaling ──────────►

S1820: Determine a second time unit set

◄────── S1830: First signal ──────

┤ - - - - S1840: Second signaling - - - ►

S1850: Determine a fourth time unit set

◄ - - - - S1860: Second signal - - - - -

FIG. 18

| Potentially valid symbol | Invalid symbol #1 | Invalid symbol #2 |

Slot boundary

| 1st nominal PUSCH repetition | 2nd nominal PUSCH repetition | 3rd nominal PUSCH repetition | 4th nominal PUSCH repetition |

X  U     X  X          U  X  X  U  X  X  U  U  U  X  U          U  U

1st actual PUSCH repetition   2nd actual PUSCH repetition     3rd actual PUSCH repetition   4th actual PUSCH repetition   5th actual PUSCH repetition

Second time unit set

FIG. 19

| Network device | | Terminal device |
|---|---|---|

S2010: First signaling →

| S2020: Second time unit set |
|---|

← S2030: First signal

FIG. 20

FIG. 21

FIG. 22

| | Potentially valid symbol | | Invalid symbol |

Slot boundary

| 1st nominal PUSCH repetition | 2nd nominal PUSCH repetition | 3rd nominal PUSCH repetition | 4th nominal PUSCH repetition |

U U    X X         U U   X X   X X   U U U U   X            U U

1st actual PUSCH repetition    2nd actual PUSCH repetition    3rd actual PUSCH repetition    4th actual PUSCH repetition    5th actual PUSCH repetition    6th actual PUSCH repetition    7th actual PUSCH repetition    8th actual PUSCH repetition

Second time unit set

FIG. 23

EP 4 593 491 A1

Communication apparatus 200

Communication unit 210

Processing unit 220

FIG. 24

Communication apparatus 300

Processor
310

Memory
330

Transceiver
320

FIG. 25

## INTERNATIONAL SEARCH REPORT

| International application No. |
| --- |
| **PCT/CN2023/119990** |

| A. | CLASSIFICATION OF SUBJECT MATTER |
| --- | --- |
| | H04W72/0446(2023.01)i;  H04W72/1268(2023.01)i |

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, WPABS: 多, 时隙, 符号, 时域, 全双工, 上行, 同时, across, both, SBFD, span, symbol, UL, uplink, non-SBFD, multi, slot, simultan+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2022159659 A1 (QUALCOMM INC.) 19 May 2022 (2022-05-19)<br>description, paragraphs 78 and 84-92, and figures 4-5 | 1-71 |
| A | CN 114600390 A (QUALCOMM INC.) 07 June 2022 (2022-06-07)<br>entire document | 1-71 |
| A | US 2021297226 A1 (QUALCOMM INC.) 23 September 2021 (2021-09-23)<br>entire document | 1-71 |
| A | US 2021400637 A1 (QUALCOMM INC.) 23 December 2021 (2021-12-23)<br>entire document | 1-71 |
| A | QUALCOMM INC. "On Deployment Scenarios and Evaluation Methodology for NR Duplex Evolution"<br>*3GPP TSG RAN WG1 #109-e, R1-2205030*, 20 May 2022 (2022-05-20),<br>entire document | 1-71 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 November 2023** | **16 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/119990**

| Patent document cited in search report | | | Publication date (day/month/year) | Patent family member(s) | | | Publication date (day/month/year) |
|---|---|---|---|---|---|---|---|
| US | 2022159659 | A1 | 19 May 2022 | EP | 4245086 | A1 | 20 September 2023 |
| | | | | WO | 2022103540 | A1 | 19 May 2022 |
| | | | | CN | 116530182 | A | 01 August 2023 |
| CN | 114600390 | A | 07 June 2022 | US | 2021135833 | A1 | 06 May 2021 |
| | | | | WO | 2021087484 | A1 | 06 May 2021 |
| | | | | EP | 4052386 | A1 | 07 September 2022 |
| US | 2021297226 | A1 | 23 September 2021 | WO | 2021188785 | A1 | 23 September 2021 |
| US | 2021400637 | A1 | 23 December 2021 | WO | 2021257201 | A1 | 23 December 2021 |
| | | | | EP | 4169195 | A1 | 26 April 2023 |
| | | | | CN | 115699949 | A | 03 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211215501

- CN 202310385322